# EUROPEAN PATENT APPLICATION

(11) **EP 4 644 133 A2**
(43) Date of publication of application: **05.11.2025**
(21) Application number: 25169524.3
(22) Date of filing: 09.04.2025
(51) Int. Cl.: B60B 21/12, B60C 23/00, B62J 45/42, B60C 23/04, B62J 43/20, B62J 43/30, B62J 45/41, B62J 45/423

(54) **BICYCLE WHEEL WITH AN INTEGRATED SENSOR DEVICE**

(30) Priority: 09.04.2024 US 202418630456; 07.04.2025 US 202519171933
(71) Applicant: SRAM, LLC., Chicago, IL 60607 (US)
(72) Inventor: Jordan, Brian, Chicago, 60607 (US); Morse, David, Indianapolis, 46254 (US); Sessions, Shelby, Chicago, 60607 (US); Trouw, Ruan, Indianapolis, 46254 (US); Waite, Benjamin, Indianapolis, 46254 (US); Lucking, Timothy, Spearfish, 57783 (US); Pluimer, Mason, Spearfish, 57783 (US)
(74) Representative: Thum, Bernhard

(57) **Abstract**

A bicycle wheel comprises a rim (522) including a radially inner portion (524) disposed along an inner circumference of the rim, a first sidewall (512), and a second sidewall (514) spaced apart from the first sidewall. A radially outer tire engaging portion (502) is disposed along an outer circumference of the rim. A receptacle (518) is within the radially inner portion. A sensor device (516) comprises a housing (504) disposed within the receptacle. An air valve (580) extends through and is supported by the housing. The pressure sensor is fluidly connected to a volume between a first tire retaining portion and a second tire retaining portion of the radially outer tire engaging portion. The wheel includes a hub attachable to a bicycle frame and a plurality of spokes arranged between the hub and the rim.

## Description

This application is a continuation-in-part of U.S. Patent Application No. 18/630,456, filed on April 9, 2024, which claims the benefit of U.S. Provisional Patent Application No. 63/464,220, filed May 05, 2023 and entitled "Bicycle Wheel with an Integrated Sensor Device," the entire disclosure of which is incorporated herein by reference.

### Background

### 1. Field of the Disclosure

The present disclosure is generally directed to a rim for a bicycle wheel, and more particularly, to a rim for a bicycle wheel with an integrated sensor device.

### 2. Description of Related Art

A smart wheel accessory may be attached to an outside surface of a rim or wheel. Such a smart wheel accessory may negatively influence aerodynamic drag, aesthetics, and balance of the system.

Alternatively, a smart wheel accessory that includes a pressure sensor may be exposed and/or anchored to an air fill valve. The air fill valve may be used to pass sealant into a tire cavity and bleed air pressure out of the tire cavity. Air bleed from the tire cavity may eject sealant through the air fill valve. Exposure of the pressure sensor to sealant may lead to clogs in a sensor port that connects the pressure sensor to the tire cavity, which may lead to inaccurate sensor measurements.

### Summary

In one example, a bicycle wheel includes a rim including a radially inner portion disposed along an inner circumference of the rim, a first sidewall, and a second sidewall spaced apart from the first sidewall. The first sidewall and the second sidewall extend radially outward from the radially inner portion. The rim includes a radially outer tire engaging portion disposed along an outer circumference of the rim. The radially outer tire engaging portion includes a first tire retaining portion extending away from the first sidewall and a second tire retaining portion extending away from the second sidewall such that the first tire retaining portion and the second tire retaining portion are spaced from each other. The rim includes a receptacle within the radially inner portion. The bicycle wheel includes a sensor device comprising a housing disposed within the receptacle such that a portion of the housing forms part of the radially inner portion of the rim, and a pressure sensor supported by the housing. An air valve extends through and supported by the housing of the sensor device. The pressure sensor is fluidly connected to a volume between the first tire retaining portion and the second tire retaining portion of the radially outer tire engaging portion such that the pressure sensor is configured to determine a pressure of a fluid within the volume. The bicycle wheel includes a hub attachable to a bicycle frame and a plurality of spokes arranged between the hub and the rim.

In one example, the sensor device is attached to the radially outer tire engaging portion through the air valve.

In one example, the sensor further includes a power source supported within the housing. The power source accessible at the inner circumference of the rim.

In one example, the housing includes a hollow body and a cover attached to the hollow body. The cover forms a portion of the inner circumference of the rim. The cover including an opening for receiving the air valve.

In one example, the housing also includes a latch that is rotatably attached to the hollow body. The latch is rotatable between a first position and a second position. A position of the latch is locked relative to the hollow body in the second position of the latch.

In one example, the sensor device further comprises a power source supported within the housing. The power source removable from the housing when the latch is in the first position.

In one example, the cover of the housing includes a first opening and a latch of the housing includes a second opening. The air valve extends through the first and second openings.

In one example, an end of the air valve extending through the second opening is attached to the tire engaging portion of the rim.

In one example, the sensor device further comprises an indication device supported at or adjacent to the cover of the housing and a processor supported on the housing. The processor is electrically connected to the pressure sensor, the battery and the indication device. The processor is configured to compare the determined pressure within the tire cavity to a predetermined pressure range. When, based on the comparison of the determined pressure to the predetermined pressure range, the determined pressure is outside of the predetermined pressure range, instruct the indication device to produce light a first color. When, based on the comparison of the determined pressure to the predetermined pressure range, the determined pressure is within the predetermined pressure range, instruct the indication device to produce light a second color. The second color is different than the first color.

In one example, the receptacle within the radially inner portion of the rim is at a first circumferential position along the inner circumference of the rim. The bicycle wheel further comprises a counterbalance at a second circumferential position along the inner circumference of the rim. The second circumferential position is different than the first circumferential position

In one example, the radially inner portion of the rim is made of a composite laminate. The counterbalance is formed by a first portion of the composite laminate. The receptacle is within a second portion of the composite laminate. The first portion of the composite laminate is thicker than the second portion of the composite laminate.

In one example, a portion of the radially inner portion of the rim around the receptacle is thicker than other portions of the radially inner portion of the rim.

In one example, the receptacle is formed by an opening through the radially inner portion of the rim. A first flange extends around the opening. The cover of the housing has a second flange sized and shaped to interface with the first flange of the receptacle such that the cover of the housing is flush with the radially inner portion of the rim and the sensor device is secured to the rim at the receptacle.

In one example, a sensor device configured to determine a tire pressure of a wheel of a bicycle includes a housing that is disposable within a receptacle within a radially inner portion of a rim of the wheel of the bicycle, such that a portion of the housing forms part of the radially inner portion of the rim. The housing includes first and second openings through which an air valve of the wheel is extendible. The sensor device also includes a pressure sensor supported by the housing and configured to be disposed within a cavity formed the radially inner portion of the rim and a radially outer portion of the rim. A battery housing is configured to support a battery. The battery housing is disposable within the housing such that the battery is configured to power the pressure sensor when the battery is supported within the battery housing and the battery housing is disposed within the housing.

In one example, the housing includes a hollow body and a cover attached to the hollow body. The cover is configured to form a portion of an inner circumference of the rim. The housing also includes a latch that is rotatably attached to the hollow body. The latch is rotatable between an open position and a closed position. The latch is locked relative to the hollow body in the closed position. The battery is removable from the housing when the latch is in the open position.

In one example, the first opening is in the cover and the second opening is in the latch. The air valve is received through the first opening and the second opening such that the air valve attaches to the housing of the rim.

In one example, the sensor device further includes a light emitting diode device supported by the cover and configured to be powered by the battery. The light emitting diode is configured to produce light of a first color when a determined pressure is within a predetermined pressure range and produce a second color when the determined pressure is outside the predetermined pressure range. The first color is different than the second color.

In one example, a bicycle rim includes a radially inner portion disposed along an inner circumference of the rim, a first sidewall, and a second sidewall spaced apart from the first sidewall. The first sidewall and the second sidewall extend radially outward from the radially inner portion. The rim includes a radially outer tire engaging portion disposed along an outer circumference of the rim. The radially outer tire engaging portion extends from the first sidewall and the second sidewall, respectively. The rim includes a receptacle within the radially inner portion at a first circumferential portion along the inner circumference of the rim. The receptacle is configured to receive a sensor device configured to house part of an air valve of the bicycle wheel. The rim includes a counterbalance at a second circumferential position along the inner circumference of the rim. The second circumferential position is different than the first circumferential position. The counterbalance is formed by a first portion of the composite laminate. The receptacle is within a second portion of the composite laminate. The first portion of the composite laminate is thicker than the second portion of the composite laminate.

In one example, the second circumferential position is opposite the first circumferential position.

### Brief Description of the Drawings

Objects, features, and advantages of the present invention will become apparent upon reading the following description in conjunction with the drawing figures, in which:
FIG. 1 is a side view of a bicycle that may be constructed to utilize a rim of the present disclosure;
FIG. 2 is a side view of an embodiment of a rim for a bicycle, such as the bicycle of FIG. 1, with an air valve and a sensor device installed;
FIG. 3 is a first front view of a portion of a rim for a bicycle, such as the bicycle of FIG. 1, with a first embodiment of a sensor device installed;
FIG. 4 is a first side view of the portion of the rim of FIG. 3, with the first embodiment of the sensor device installed;
FIG. 5 is a first perspective view of the portion of the rim of FIG. 3, with the first embodiment of the sensor device installed;
FIG. 6 is a second perspective view of the portion of the rim of FIG. 3, with the first embodiment of the sensor device installed;
FIG. 7 is a first exploded perspective view of the portion of the rim of FIG. 3;
FIG. 8 is a second side view of the portion of the rim of FIG. 3, with the first embodiment of the sensor device installed;
FIG. 9 is a cross-section of the portion of the rim of FIG. 8, taken along axis 8-8;
FIG. 10 is a second front view of the portion of the rim of FIG. 3, with the first embodiment of the sensor device installed;
FIG. 11 is a cross-section of the portion of the rim of FIG. 10, taken along axis 10-10;
FIG. 12 is a first cross-section of a portion of the sensor device of FIG. 3, illustrating a battery housing in an unlocked position relative to a housing of the sensor device;
FIG. 13 is a second cross-section of a portion of the sensor device of FIG. 3, illustrating a fluid path;
FIG. 14 is an exploded perspective view of a variant of the first embodiment of the sensor device of FIG. 3;
FIG. 15 is a cross-section of a portion of a rim for a bicycle, such as the bicycle of FIG. 1, with a ported bolt used for fluid connection to a sensor device attached to the rim;
FIG. 16 is a front view of a portion of a rim for a bicycle, such as the bicycle of FIG. 1, prior to attachment of a second embodiment of a sensor device to the rim;
FIG. 17 is a perspective view of the portion of the rim of FIG. 16 prior to attachment of the second embodiment of the sensor device to the rim;
FIG. 18 is a first side view of the sensor device of FIG. 16 with a cover of the sensor device in an extended position relative to a housing of the sensor device;
FIG. 19 is a second side view of the sensor device of FIG. 16 with the cover of the sensor device in the extended position relative to the housing of the sensor device;
FIG. 20 is a front view of the portion of the rim of FIG. 16, with the second embodiment of the sensor device installed;
FIG. 21 is a first side view of the sensor device of FIG. 16 with a cover of the sensor device in a contracted position relative to a housing of the sensor device;
FIG. 22 is a second side view of the sensor device of FIG. 16 with the cover of the sensor device in the contracted position relative to the housing of the sensor device;
FIG. 23 is a cross section of a portion of the sensor device of FIG. 16, illustrating a fluid path;
FIG. 24 is a first perspective view of a portion of a rim for a bicycle, such as the bicycle of FIG. 1, with a third embodiment of a sensor device installed;
FIG. 25 is a second perspective view of the portion of the rim of FIG. 24, with the third embodiment of the sensor device installed;
FIG. 26 is a bottom view of the portion of the rim of FIG. 24, with the third embodiment of the sensor device installed;
FIG. 27 is a top view of the portion of the rim of FIG. 24, with the third embodiment of the sensor device installed;
FIG. 28 is a front view of the portion of the rim of FIG. 24, with the third embodiment of the sensor device installed;
FIG. 29 is a cross-section of the portion of the rim of FIG. 28, taken along axis 28-28;
FIG. 30 is a side view of the portion of the rim of FIG. 24, with the third embodiment of the sensor device installed;
FIG. 31 is a cross-section of the portion of the rim of FIG. 30, taken along axis 30-30;
FIG. 32 is a side view of another embodiment of a rim for a bicycle, such as the bicycle of FIG. 1, with an air valve and a sensor device installed;
FIG. 33 is a front view of a portion of a rim for a bicycle, such as the rim of FIG. 32, with a fourth embodiment of a sensor device installed;
FIG. 34 is a side view of the portion of the rim of FIG. 33, with the fourth embodiment of the sensor device installed;
FIG. 35 is a first perspective view of the portion of the rim of FIG. 33, with the fourth embodiment of the sensor device installed;
FIG. 36 is a second perspective view of the portion of the rim of FIG. 33, with the fourth embodiment of the sensor device installed;
FIG. 37 is a first exploded perspective view of the portion of the rim of FIG. 33;
FIG. 38 is a first cross-section of a portion of the rim of FIG. 33;
FIG. 39 is a second cross-section of a portion of the rim of FIG. 33;
FIG. 40 is a third cross-section of a portion of the rim of FIG. 33;
FIG. 41 is a fourth cross-section of a portion of the rim of FIG. 33;
FIG. 42 is a fifth cross-section of a portion of the rim of FIG. 33;
FIG. 43 is a perspective view of the fourth embodiment of the sensor device, with a latch in a closed position;
FIG. 44 is a perspective view of the sensor device of FIG. 43, with the latch in an open position;
FIG. 45 is a perspective view of the sensor device of FIG. 44, with a battery housing removed from a housing of the sensor device;
FIG. 46 is a perspective view of the sensor device of FIG. 45, with a battery removed from the battery housing;
FIG. 47 is a second exploded perspective view of the portion of the rim of FIG. 33, with an air valve installed at the rim;
FIG. 48 is a schematic diagram of a rim assembly including a sensor device;
FIG. 49A is a plot of magnetometer output over time;
FIG. 49B is a plot of magnetometer output over time; and
FIG. 49C is a plot of magnetometer output over time.

### Detailed Description of the Disclosure

In order to improve aerodynamic drag performance and balance of a bicycle wheel that includes a sensor device, the sensor device is positioned within a cavity within a rim of the bicycle wheel. The sensor device includes a number of electronic components configured to measure data and transmit the data to a computing device such as, for example, a mobile phone or a bicycle computer for communication (e.g., display) to a user. The measured data may include, for example, tire pressure data, wheel speed data, wheel odometer data, rim composite health data, wheel lean and yaw data, product data, road feedback data, light emitting diode (LED) status indicators, and/or other data.

The receptacle may have a complementary interface with the sensor device, such that the receptacle occludes the sensor device to improve aerodynamic performance. The receptacle may be within a radially inner portion of the rim. For example, the rim may be manufactured with a reinforced opening forming the receptacle (e.g., a cavity) within the radially inner portion of the rim. The sensor device may be inserted into the cavity and anchored to the radially inner portion of the rim and/or a radially outer tire engaging portion of the rim. The sensor device may be anchored to the rim, such that the sensor device is removable from the rim without having to remove a tire from the rim. In one embodiment, a battery housing, and a battery supported within the battery housing, may be accessible without removing the sensor device from the rim.

The sensor device may be anchored to the radially inner portion of the rim and/or a radially outer tire engaging portion of the rim in a number of different ways. In one embodiment, the sensor device is anchored with an air valve that allows for air flow into and out of the tire chamber, and also acts as a pressure port to the tire chamber. In another embodiment, the sensor device is anchored with a bolt that also acts as a pressure port to the tire chamber. In another embodiment, the sensor device may be attached to the radially inner portion of the rim without relying on the radially outer tire engaging portion of the rim for support. In this embodiment, a separate pressure port may be installed within the radially outer tire engaging portion of the rim to relay the pressure to the sensor device. This may be done using rigid or flexible materials. The anchoring of the sensor device to the rim provides a fluid connection between a pressure sensor port of the sensor device and the tire chamber that is blind. This reduces the likelihood of sealant obstruction of the sensor port.

In one embodiment, the receptacle, the air fill valve and the sensor device may be positioned at the same receptacle. The rim may include a counterweight located opposite the receptacle. A housing of the sensor device may include a first fluid passage, through which the air fill valve extends, and a second fluid passage fluidly connecting the first fluid passage, and thus the air fill valve, and a pressure sensor of the sensor device. The first fluid passage and the second fluid passage may extend in directions perpendicular to each other. A diameter of the first fluid passage may be greater than a diameter of the second fluid passage. The orientation and size of the second fluid passage relative to the first fluid passage maximizes removal of sealant that may be disposed within the second fluid passage and/or at the pressure sensor when air, for example, moves through the air fill valve.

In another embodiment the receptacle, and thus the sensor device, may be positioned opposite the air fill valve. Separating the air fill valve from a sensor port for a pressure sensor of the sensor device helps reduce exposure of the sensor port to sealant, which reduces or prevents clogging of the sensor device by sealant. Positioning the sensor device opposite the air fill valve instead of on the air fill valve may help rebalance the wheel for optimum performance and allows for any weight of the sensor device to be compensated for on the air fill valve side. This allows the sensor device to house larger batteries and execute more functions for a given battery life. Further, design constraints are relieved by dissociating the pressure sensor from the air fill valve, which allows for the selection of an appropriate air fill valve. For example, the air fill valve may be selected for optimal air fill characteristics.

In one embodiment, the sensor device includes a printed circuit board (PCB) that supports a pressure sensor coupled to a tube. The tube connects to a pouch filled (e.g., partially filled) with incompressible fluid. The fluid-filled pouch is exposed to tire pressure in the tire cavity and transmits the pressure to the sensor via a fluid path along the tube. The tube transmitting the pressure between the pouch and the pressure sensor may be any arbitrary length, which allows for optimal placement of the sensor device and/or the pouch to best suit wheel design requirements.

A bicycle wheel of one or more of the present embodiments includes, for example, a rim including a radially inner portion disposed along an inner circumference of the rim, a first sidewall, and a second sidewall spaced apart from the first sidewall. The first sidewall and the second sidewall extend radially outward from the radially inner portion. The rim includes a radially outer tire engaging portion disposed along an outer circumference of the rim. The radially outer tire engaging portion includes a first tire retaining portion extending away from the first sidewall, and a second tire retaining portion extending away from the second sidewall, such that the first tire retaining portion and the second tire retaining portion are spaced apart from each other. The rim includes a receptacle within the radially inner portion. The bicycle wheel includes a sensor device disposed within the receptacle and attached to the radially inner portion, the radially outer tire engaging portion, or the radially inner portion and the radially outer tire engaging portion. The sensor device includes a housing and a pressure sensor supported by the housing. The bicycle wheel includes a flexible container at least partially filled with a fluid. The flexible container is disposed within a volume between the first tire retaining portion and the second tire retaining portion of the radially outer tire engaging portion. The pressure sensor is fluidly connected to an interior of the flexible container, such that the pressure sensor is configured to determine a pressure of the fluid within the flexible container. In an example, the fluid may be a gas or liquid.

Wireless communication between components is described herein. Although the present specification describes components and functions that may be implemented in particular wireless communication embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In an embodiment, components of the bicycle described herein will communicate with each other. In the case of wireless communication, the components will initially be paired so as to allow secure communication between components on the bicycle without interference from devices not associated with the system. One or more of the components may also be paired with a separate device such as a computer, tablet, or phone (e.g., a mobile computing device). This paired device may provide the user interface to allow the user to communicate with the components on the bicycle. Examples of communication are updating firmware, setting variables, and running diagnostic tools and analysis.

These and other objects, features, and advantages of the disclosed bicycle component control will become apparent to those having ordinary skill in the art upon reading this disclosure. Throughout the drawing figures, where like reference numbers are used, the like reference numbers represent the same or substantially similar parts among the various disclosed examples. Also, specific examples are disclosed and described herein that utilize specific combinations of the disclosed aspects, features, and components of the disclosure. However, it is possible that each disclosed aspect, feature, and/or component of the disclosure may, in other examples not disclosed or described herein, be used independent of or in different combinations with other of the aspects, features, and components of the disclosure.

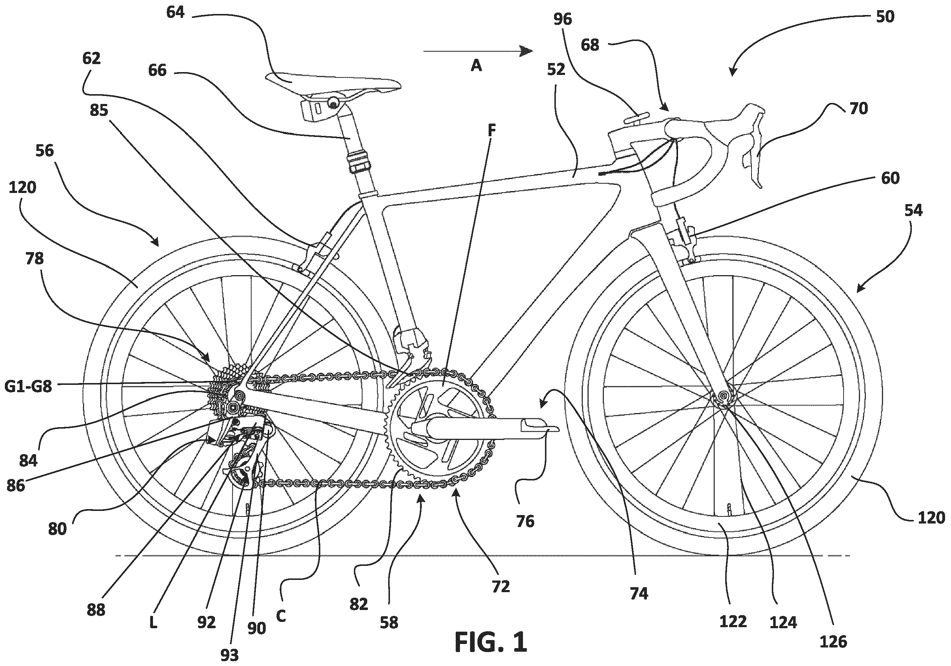

Turning now to the drawings, FIG. 1 generally illustrates a bicycle 50 that employs one or more components (e.g., rims) constructed in accordance with the teachings of the present disclosure. The bicycle 50 includes a frame 52 (e.g., a bicycle frame), a front wheel 54 and a rear wheel 56 each rotatably attached to the frame 52, and a drivetrain 58. A front brake 60 is provided for braking the front wheel 54, and a rear brake 62 is provided for braking the rear wheel 56. The bicycle 50 also generally has a seat 64 near a rear end of the frame 52 and carried on an end of a seat post 66 connected to the frame 52. The bicycle 50 also has handlebars 68 near a forward end of the frame 52. A brake lever 70 is carried on the handlebars 68 for actuating the front brake 60, the rear brake 62, or both the front brake 60 and the rear brake 62. If the brake lever 70 actuates only one of the front brake 60 and the rear brake 62, a second brake lever (not shown) may also be provided to actuate the other brake. A front and/or forward riding direction or orientation of the bicycle 50 is indicated by the direction of the arrow A in FIG. 1. As such, a forward direction for the bicycle 50 is indicated by the direction of arrow A. While the illustrated bicycle 50 depicted in FIG. 1 is a road bike having drop-style handlebars 68, the present disclosure may be applicable to bicycles of any type, including mountain bikes with full or partial suspensions.

The drivetrain 58 has a chain C and a front sprocket assembly 72, which is coaxially mounted with a crank assembly 74 (e.g., including two crank arms) having pedals 76. The drivetrain 58 also includes a rear sprocket assembly 78 coaxially mounted with the rear wheel 56 and a rear gear change mechanism, such as a rear derailleur 80 (e.g., an electric rear derailleur).

As is illustrated in FIG. 1, the front sprocket assembly 72 may include one or more coaxially mounted chainrings, gears, or sprockets. In this example, the front sprocket assembly 72 has one sprocket F. The one sprocket F has teeth 82 around a respective circumference. As shown in FIG. 1, the rear sprocket assembly 78 may include a plurality of coaxially mounted gears, cogs, or sprockets G. Each sprocket G1-G8 also has teeth 84 arranged around a respective circumference. The number of teeth 84 on the rear sprockets G1-G8 may gradually decrease from the largest diameter rear sprocket G1 to the smallest diameter sprocket G8. Though not described in any detail herein, a front gear changer 85 may be operated to move from a first operating position to a second operating position to move the chain C between front sprockets F. Likewise, the rear derailleur 80 may be operable to move between different operating positions to switch the chain C to a selected one of the rear sprockets G1-G8. In an embodiment, the rear sprocket assembly 78 may have more or fewer sprockets G. For example, in an embodiment, the rear sprocket assembly 78 may have eleven, twelve or thirteen sprockets. Dimensions and configuration of the rear derailleur 80 may be modified to accommodate a specific implemented plurality of sprockets. For example, an angle and length of a linkage and/or a configuration of a cage of the rear derailleur 80 may be modified to accommodate specific sprocket combinations.

The rear derailleur 80 is depicted as a wireless, electrically actuated rear derailleur mounted or mountable to the frame 52, or frame attachment, of the bicycle 50. The electric rear derailleur 80 has a base member 86 (e.g., a b-knuckle) that is mounted to the bicycle frame 52. A linkage 88 has two links L that are pivotally connected to the base member 86 at a base member linkage connection portion. A movable member 90 (e.g., a p-knuckle) is connected to the linkage 88 at a moveable member linkage connection portion. A chain guide assembly 92 (e.g., a cage) is configured to engage and maintain tension in the chain and has one or more cage plates 93 with a proximal end that is pivotally connected to a part of the movable member 90. The cage plate 93 may rotate or pivot about a cage rotation axis in a damping direction and a chain tensioning direction. Other gear changing systems, such as mechanically or hydraulically controlled and/or actuated systems may also be used.

A motor module may be carried on the electric rear derailleur 80 with a battery. The battery supplies power to the motor module. In one example, the motor module is located in the movable member 90. However, the motor module may instead be located elsewhere, such as in one of the links L of the linkage 88 or in the base member 86. The motor module may include a gear mechanism or transmission. As is known in the art, the motor module and gear mechanism may be coupled with the linkage 88 to laterally move the cage plate 93 and thus switch the chain C among the rear sprockets (e.g., G1-G8) on the rear sprocket assembly 78.

The cage plate 93 also has a distal end that carries a tensioner cog or wheel. The wheel also has teeth around a circumference. The cage plate 93 is biased in a chain tensioning direction to maintain tension in the chain C. The chain guide assembly 92 may also include a second cog or wheel, such as a guide wheel disposed nearer the proximal end of the cage plate 93 and the movable member 90. In operation, the chain C is routed around one of the rear sprockets (e.g., G1-G8). An upper segment of the chain C extends forward to the front sprocket assembly 72 and is routed around the one front sprocket F. A lower segment of the chain C returns from the front sprocket assembly 72 to the tensioner wheel and is then routed forward to the guide wheel. The guide wheel directs the chain C to the rear sprockets (e.g., G1-G8). Lateral movement of the cage plate 93, the tensioner wheel, and the guide wheel may determine the lateral position of the chain C for alignment with a selected one of the rear sprockets (e.g., G1-G8).

The bicycle 50 may include one or more bicycle control devices 96 (e.g., a bicycle control device) mounted to handlebars 68. The one or more bicycle control devices may include one or more types of bicycle control and/or actuation systems. For example, the one or more bicycle control devices 96 may include brake actuation systems to control the front brake 60 and/or the rear brake 62, and/or gear shifting systems to control the drivetrain 58. Other control systems may also be included. For example, the system may be applied, in some embodiments, to a bicycle where only a front or only a rear gear changer is used. Also, the one or more bicycle control devices may also include suspension, seat post, and/or other control systems for the bicycle 50.

The front wheel 54 and/or the rear wheel 56 of the bicycle 50 may include a tire 120 attached to a radially outer tire engaging portion of a rim 122. A plurality of spokes 124 are attached directly to the rim 122. Alternatively, the spokes 124 may be attached and/or secured to the rim 122 with other structural components. The spokes 124 extend from the rim 122 and attach to a central hub 126. The spokes 124 are maintained with a tension between the rim 122 and the central hub 126 to provide the respective wheel 54, 56 with an operational rigidity for use on the bicycle 50. The central hub 126 is configured for rotational attachment to the bicycle frame 52.

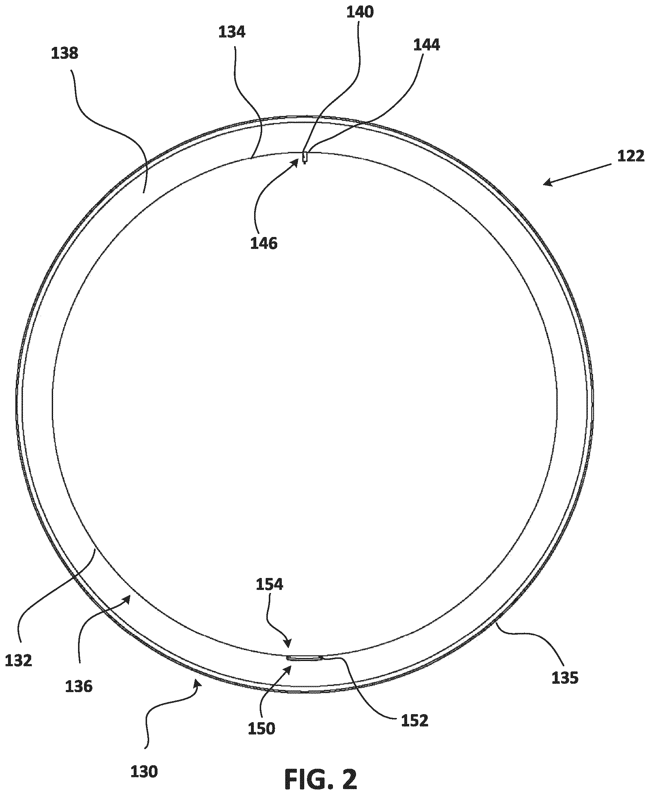

FIG. 2 illustrates a rim 122 for a bicycle wheel, such as the front wheel 54 of FIG. 1, removed from the rest of the bicycle 50, without a tire attached, and without spokes (e.g., spokes 124 of FIG. 1) or a hub (e.g., a central hub 126 of FIG. 1). The rim 122 includes a tire engaging portion 130 to engage with the tire 120, as is shown in FIG. 1. The tire engaging portion 130 is configured radially outward of a spoke receiving surface 132 that is disposed along an inner circumference 134 of the rim 122. In other words, the tire engaging portion 130 is a radially outer tire engaging portion. In an embodiment, the tire engaging portion 130 is disposed along an outer circumference 135 of the rim 122. The tire engaging portion 130 is configured for attachment to tires using clincher tire attachment configurations for tires including beaded interlock attachments. Other configurations of the tire engaging portion 130 may also be provided to allow for the use of other types of tires on the rim 122. For example, tubeless tires including beaded interlock attachment types may be used.

The rim 122 provides structure for attachment of the spokes to the rim 122 at a receiving portion of the rim 122, proximate to the spoke receiving surface 132. As such, the spoke receiving surface 132 is part of a spoke engaging portion 136 (e.g., a radially inner portion) of the rim 122. In an embodiment, the spoke engaging portion 136 of the rim 122 is disposed along the inner circumference 134 of the rim 122. In another embodiment, the spoke receiving surface 132 and the spoke engaging portion 136 may be separate parts and/or portions of the rim 122. For example, the spokes may pass through the spoke receiving surface 132, and the structure for attachment to the rim 122 may be provided proximate to the tire engaging portion 130.

The rim 122 includes a first sidewall 138 and a second sidewall 206 that extend between the tire engaging portion 130 and the spoke engaging portion 136. For example, the first sidewall 138 and the second sidewall 206 extend radially outward from the spoke engaging portion 136 to the tire engaging portion 130. The first sidewall 138 is spaced apart from the second sidewall 206. The rim 122 may be hollow between, for example, the first sidewall 138, the second sidewall 206, the tire engaging portion 130, and the spoke engaging portion 136

At least part of the rim 122 (e.g., the first sidewall 138 and the second sidewall 206) is formed by one or more composite materials. In one embodiment, the entire rim 122 is formed by one or more composite materials. In one example, fiber reinforced plastic forms a one-piece unitary rim of a collection of layers including the tire engaging portion 130, the first sidewall 138, the second sidewall 206, and the spoke engaging portion 136. Other configurations may also be provided. For example, a combination of plastic and carbon-fiber reinforced plastic forms a one-piece unitary rim of a collection of plastic layers and carbon-fiber layers including the tire engaging portion 130, the first sidewall 138, the second sidewall 206, and the spoke engaging portion 136. Other configurations may also be provided.

The rim 122, for example, may be at least partially formed by a laminate that includes one or more compressed layers of one or more materials. Any number of materials may be included within the laminate including, for example, a thermoplastic and/or a thermoplastic with reinforcing fiber material (e.g., bendable fabric preform sheets). The reinforcing fiber material may be any number of reinforcing materials including, for example, Nylon. More, fewer, and/or different materials may be included within the laminate. For example, the reinforcing fiber material may be a natural fiber such as, for example, flax.

The front wheel 54 and the rear wheel 56 may include rims 122 configured for any size wheel. In an embodiment, the rims 122 are configured for use in wheels conforming to a 700C (e.g., a 622 millimeter diameter clincher and/or International Standards Organization 622mm) bicycle wheel standard.

The front wheel 54 and the rear wheel 56 may rotate about the central hub 126 in either direction. For example, as shown in FIG. 1, the front wheel 54 and the rear wheel 56 may be configured to rotate in a particular rotational direction about the central hub 126. In another example, the front wheel 54 and the rear wheel 56 may be configured to rotate in a direction opposite the particular rotational direction.

In one embodiment, the first sidewall 138, the second sidewall 206, the spoke engaging portion 136, and the tire engaging portion 130 of the front wheel 54 and/or the rear wheel 56 of the bicycle 50 (e.g., the front wheel 54 and the rear wheel 56 in the example of FIG. 1) are at least partially formed by one or more layers of the one or more composite materials (e.g., layers of composite materials). Each of the one or more layers may include one or more fabric plies (e.g., pieces) of the respective composite material. Different layers of different composite materials may include different numbers of plies or pieces of the composite materials, respectively. At least some of the layers of composite material may be of different shapes and/or sizes. Alternatively, all of the layers of the composite material may be a same shape and/or size.

In one embodiment, at least some of the layers of composite material are shaped as strips. For example, strips of the one or more composite materials may form the first sidewall 138 and the second sidewall 206 of the front wheel 54. The strips of the one or more composite materials may be disposed about the central hub 126 of the front wheel 54, respectively, and the central hub 126 of the rear wheel 56, respectively, to form the first sidewall 138 and the second sidewall 206 of the front wheel 54 and the rear wheel 56, respectively.

In a manufacturing process, the layers of the front wheel 54 and the rear wheel 56, respectively, are integrated with the spoke engaging portion 136 and the tire engaging portion 130 (e.g., layers of composite material forming the spoke engaging portion 136 and the tire engaging portion 130) of the respective wheel 54, 56 by, for example, a curing process, such that a one-piece unitary rim 122 is formed. The rims 122 of the front wheel 54 and rear wheel 56, respectively, may be formed with other manufacturing processes.

The rim 122 of FIG. 2 illustrates a valve 140 (e.g., an air valve) extending through the spoke engaging portion 136 (e.g., the radially inner portion) and away from the tire engaging portion 130 of the rim 122. The valve 140 may be any number of different types of valves for inflation and/or deflation of a tire (e.g., the tire 120) including, for example, a Schrader valve, a Presta valve, or a Woods valve.

The radially inner portion 136 of the rim 122 includes an opening 144 that extends through the radially inner portion 136 of the rim 122 at a first position 146 along the inner circumference 134 (e.g., a first circumferential position 146). The valve 140 extends through the opening 144, away from the radially inner portion 136 and the tire engaging portion 130 of the rim 122. The opening 144 may be any number of sizes and/or shapes. For example, the opening 144 may be circular in shape and may be sized, such that an outer surface of the valve 140 abuts a surface of the radially inner portion 136 that forms the opening 144. In one embodiment, the opening 144 has a diameter of approximately 7 mm. In other embodiments, the diameter of the opening 144 is larger or smaller.

The rim 122 of Fig. 2 also illustrates a sensor device 150 installed within the rim 122. The sensor device 150 may be configured to measure and/or determine data that may be useful to a rider of the bicycle 50, for example, and transmit the data to a computing device (e.g., of the bicycle 50 or a mobile computing device off of the bicycle 50), for example, for display to the rider. For example, the sensor device 150 may transmit the data to the bicycle control device 96 for display to the rider and/or further processing. The sensor device 150 may include any number of electronic components and may measure and/or determine any number of different types of data associated with the rim 122 and/or the bicycle 50, for example. For example, the sensor device 150 may measure and/or determine, for example, tire pressure data, wheel speed data, wheel odometer data, data related to rim composite health, wheel lean and yaw data, product data, road feedback data, LED status indicators, one or more other types of data, or any combination thereof.

The radially inner portion 136 of the rim 122 includes a receptacle 152 (e.g., a cavity) within the radially inner portion 136 of the rim 122 at a second position 154 along the inner circumference 134 (e.g., a second circumferential position 154). The sensor device 150 may be positioned within the receptacle 152 and attached to the rim 122, such that part of the sensor device 150 forms a portion of the radially inner portion 136 (e.g., the inner circumference 134) of the rim 122. For example, the receptacle 152 may occlude the sensor device 150, such that aerodynamic performance and aesthetics are improved compared to prior art sensor devices installed at a valve.

The receptacle 152 may be any number of shapes and/or sizes. For example, the receptacle 152 may be large enough to accommodate a sensor device 150 that includes one or more sensors, one or more batteries, a processor, a memory, other electronic devices, or any combination thereof, but small enough to fit within an area between two adjacent spokes of a wheel (e.g., approximately 150 mm) on which the rim 122 is used. In one embodiment, a length (e.g., an arc length) of the receptacle 152 is less than or equal to 70 mm. In other embodiments, however, larger receptacles 152 may be provided.

The second circumferential position 154 along the inner circumference 134, at which the receptacle 152 is positioned, is different than the first circumferential position 146 along the inner circumference 134, at which the opening 144 extends through the radially inner portion 136 of the rim 122. In other words, the sensor device 150 is positioned at a distance away from (e.g., is remote relative to) the valve 140.

In one embodiment, the second circumferential position 154 along the inner circumference 134 is opposite the first circumferential position 146 along the inner circumference 134. In other words, in such an embodiment, the sensor device 150 is opposite the valve 140 (e.g., on opposite sides of the inner circumference 134 of the rim 122). By positioning the sensor device 150 opposite the valve 140, a wheel on which the rim 122 is installed (e.g., the wheel 54 or 56) may be rebalanced for optimum performance: any weight added by the sensor device 150 at the second circumferential position 154 (e.g., relative to a rim without an installed sensor device 150) may be compensated for (e.g., counterbalanced) at the valve 140. This ability to balance weight at opposite sides of the inner circumference 134 of the rim 122 allows the sensor device 150 to include larger batteries and execute more functions for a give battery life. This also allows the valve 140 to be selected for optimal air fill characteristics. Separating the valve 140 from sensors helps reduce exposure of the sensor to sealant, which may clog the sensors.

The receptacle 152 may be configured in any number of ways, such that attachment of the sensor device 150 to the rim 122 at the receptacle 152 is secure, and the sensor device 150 is flush with the radially inner portion 136 of the rim 122. For example, the rim 122 may be structurally reinforced around the receptacle 152 (e.g., with a thicker composite laminate around the receptacle 152). The rim 122 may be structurally reinforced around the receptacle 152 with a same material the rim 122 is made of (e.g., a composite material), or one or more other materials. As another example, the receptacle 152 may have a complementary interface (e.g., corresponding flanges) with the sensor device 150 (e.g., a housing of the sensor device 150) to allow secure attachment of the sensor device 150 to the rim 122 at the receptacle 152.

A sensor (e.g., a pressure sensor) of the sensor device 150 has a sensor port (e.g., a pressure sensor port) that is exposed to a portion of the rim that is remote from (e.g., at a distance relative to) the sensor device 150. For example, the pressure sensor port of the pressure sensor is fluidly connected to a tire bed at the tire engaging portion 130 of the rim 122, such that the pressure sensor may measure a tire pressure when the tire 120 is installed on the rim 122. In other words, the pressure sensor port is blind, which reduces a likelihood of sealant obstruction of the sensor port. The pressure sensor port of the pressure sensor may be fluidly connected to the tire bed at the tire engaging portion 130 of the rim 122, for example, in any number of ways. The configuration of this fluid connection may depend on how the sensor device 150 is attached to the rim 122. The embodiments discussed below illustrate different attachments to the rim 122 and/or different fluid connections.

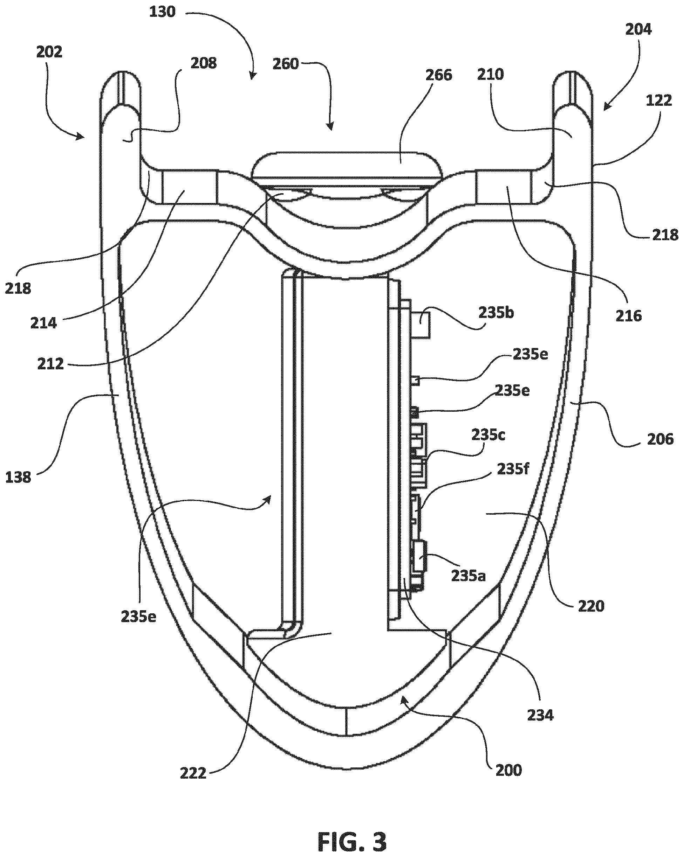

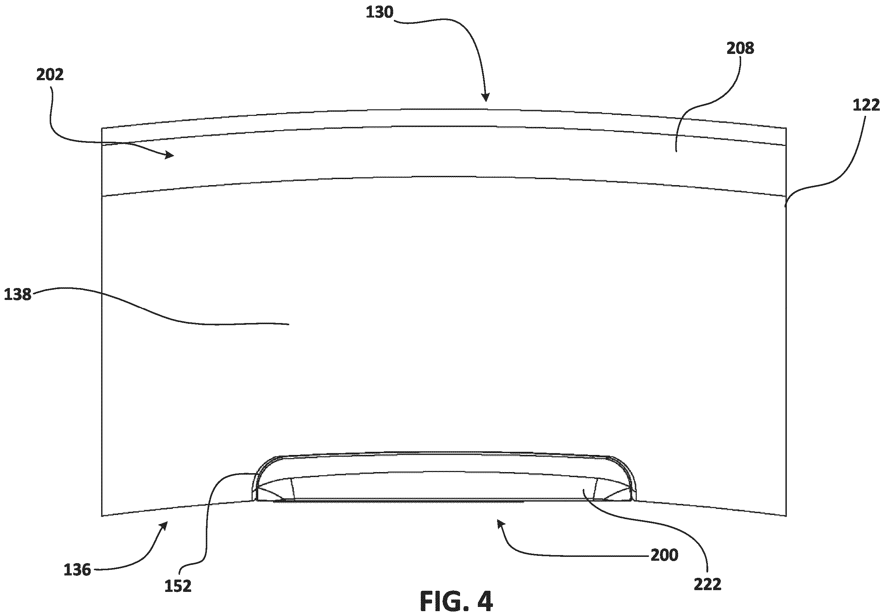

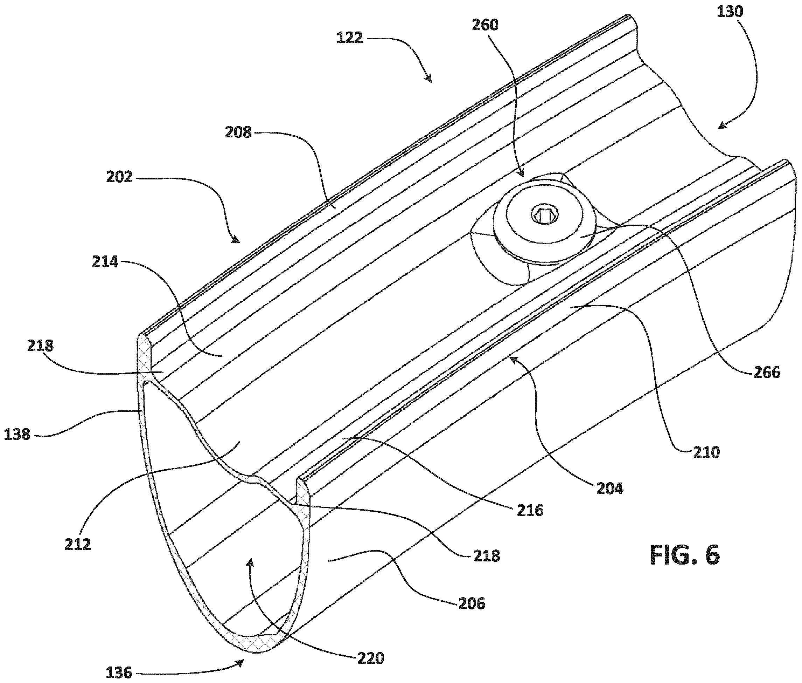

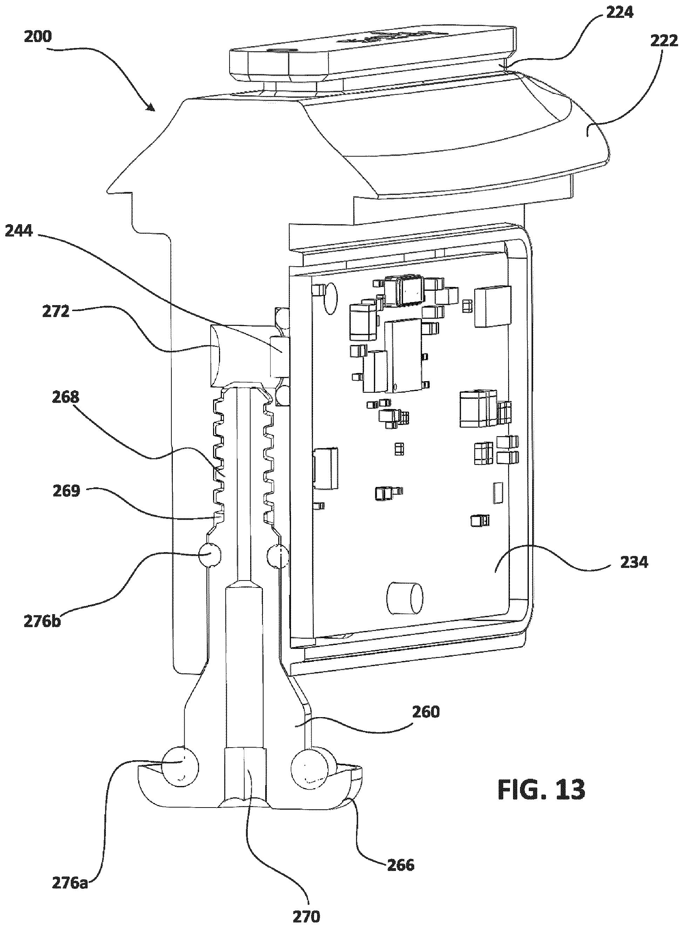

FIGS. 3-14 illustrate a sensor device 200 that may be attached (e.g., mounted) to the rim 122 and fluidly connected to, for example, a volume defined by the tire engaging portion 130 of the rim 122, according to a first embodiment.

Referring to FIG. 3, the radially outer tire engaging portion 130 includes a first tire retaining portion 202 and a second tire retaining portion 204 spaced apart from the first tire retaining portion 202. The first tire retaining portion 202 extends from the first sidewall 138, and the second tire retaining portion 204 extends from a second sidewall 206. The first sidewall 138 and the second sidewall 206 extend radially inward from the radially outer tire engaging portion 130.

The first tire retaining portion 202 includes a first tire retaining wall 208. In one embodiment, the first tire retaining portion 202 also includes a first protrusion (e.g., a first tire retaining feature) (not shown). The first protrusion may extend away from the first tire retaining wall 208. The first protrusion may be any number of shapes including, for example, a shape having a cross-section that is rectangular with a semi-circle cap. The first protrusion may extend circumferentially around the rim 122.

The second tire retaining portion 204 includes a second tire retaining wall 210. The second tire retaining wall 210 is opposite and spaced apart from the first tire retaining wall 208. In one embodiment, the second tire retaining portion 204 also includes a second protrusion (e.g., a second tire retaining feature) (not shown). The second protrusion may extend away from the second tire retaining wall 210, towards the first tire retaining portion 202. The second protrusion may be any number of shapes including, for example, a shape having a cross-section that is rectangular with a semi-circle cap. The second protrusion may extend circumferentially around the rim 122. The first protrusion and the second protrusion may be other shapes.

The rim 122 may seat a tire 120 (see FIG. 1) that is, for example, a tubeless clincher tire. The tire 120 includes beads that interact with the radially outer tire engaging portion 130 (e.g., the first tire retaining portion 202 and the second tire retaining portion 204) of the rim 122 to attach the tire 120 to and maintain the tire 120 on the rim 122. The beads may include any number of materials within the beads, such as, for example, carbon, a steel wire or aramid (e.g., Kevlar^{™}) fiber, to prevent the tire 120 from moving off of the rim 122. Due to the reinforcement with the carbon, steel wire or the Kevlar^{™} fiber, for example, the beads resist stretching from internal air pressure. Alternatively, the beads may be made of a same material as the tire 120 (e.g., rubber).

The radially outer tire engaging portion 130 also includes a well 212 positioned between the first tire retaining portion 202 and the second tire retaining portion 204 of the rim 122. The well 212 provides a volume into which the beads of the tire 120 may be placed when the tire 120 is being attached to the rim 122. As the tire 120 is inflated, the beads of the tire 120 move away from each other until the beads interact with the first tire retaining portion 202 and the second tire retaining portion 204, respectively. When inflated, the beads of the tire 120 abut the first tire retaining wall 208 and the second tire retaining wall 210, respectively. In one embodiment, the first tire retaining feature and the second tire retaining feature, for example, keep the beads of the tire 120 positioned within the radially outer tire engaging portion 130 (e.g., keep the beads of the tire 120 engaged with the first tire retaining wall 208 and the second tire retaining wall 210) and thus keep the tire 120 from blowing off the rim 122. The contact between the beads and the first tire retaining wall 208 and the second tire retaining wall 210, respectively, forms a seal between the inflated tire 120 and the rim 122.

The radially outer tire engaging portion 130 may also include ridges (e.g., bead bumps; a first bead bump and a second bead bump) on opposite sides of the well 212, respectively. A first shelf 214 (e.g., a first bead shelf) extends away from the first tire retaining wall 208 (e.g., between the first tire retaining wall 208 and the first bead bump), and a second shelf 216 (e.g., a second bead shelf) extends away from the second tire retaining wall 210 (e.g., between the second tire retaining wall 210 and the second bead bump). In one embodiment, curved transition regions 218 extend between the first shelf 214 and the first tire retaining wall 208, and the second shelf 216 and the second tire retaining wall 210, respectively. The bead bumps may be positioned on opposite sides of the well 212, respectively, and may be raised relative to the first shelf 214 and the second shelf 216, respectively. The bead bumps may help retain the tire 120 on the rim 122 if the tire 120 loses pressure.

As shown in FIG. 3, the rim 122 is hollow, and a shape of a volume 220 within the rim 122 may be defined by the first sidewall 138, the second sidewall 206, the radially outer tire engaging portion 130 (e.g., the well 212, the first shelf 214, and the second shelf 216), and the radially inner portion 136. The volume 220 may be any number of sizes and/or shapes. When the sensor device 200 is installed in (e.g., attached to) the rim 122, at least a portion of the sensor device 200 is positioned within the volume 220.

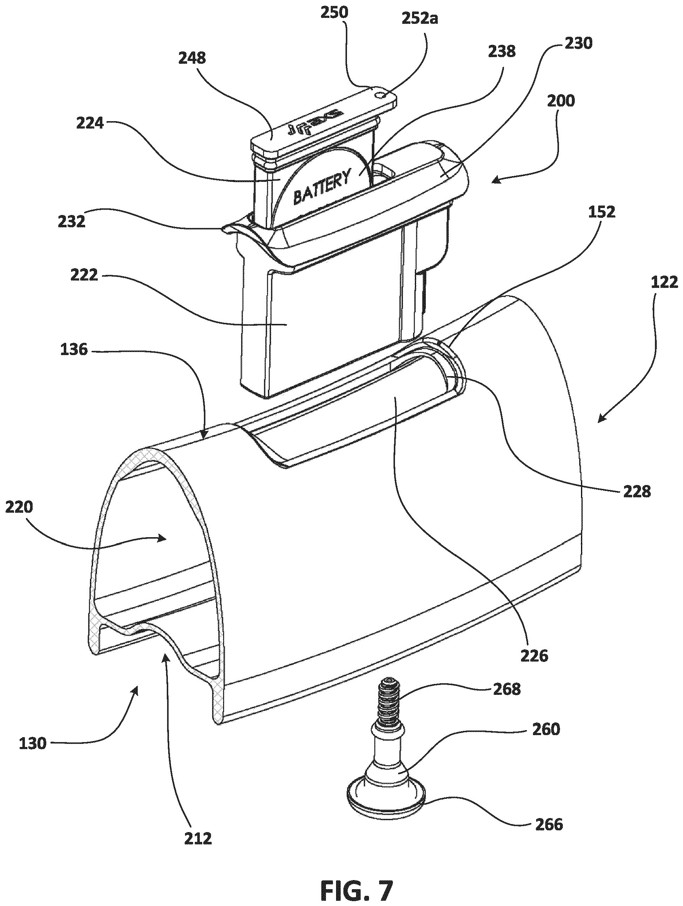

Referring to FIG. 7, the sensor device 200 includes a housing 222 and a battery housing 224. The receptacle 152 at the radially inner portion 136 of the rim 122 is formed by an opening 226 through the radially inner portion 136 of the rim 122, and a flange 228 that extends around the opening 226. The housing 222 of the sensor device 200 includes a cover 230 having a flange 232 that corresponds to (e.g., sized and shaped to interface with) the flange 228 of the receptacle 152, such that when the housing 222 of the sensor device 200 is installed on the rim 122, the cover 230 of the housing 222 of the sensor device 200 is flush with the radially inner portion 136 of the rim 122.

The housing 222 of the sensor device 200 supports any number of components (e.g., electronic components) of the sensor device 200. For example, the housing 222 of the sensor device 200 supports the battery housing 224. Referring to FIG. 3, the housing 222 also supports a printed circuit board (PCB) 234, on which any number of electronic components may be disposed and electrically connected. As will be discussed in more detail below, referring to FIG. 3, the PCB 234 may support and electrically connect one or more processors (e.g., a microcontroller) 235a, a light emitting diode (LED) 235b, one or more antennas (e.g., a radio) 235c, one or more sensors 235d (e.g., a pressure sensor, an accelerometer, a magnetometer, and/or a resistance measurement interface), one or more power sources 235e, a radio-frequency identification (RFID) reader 235f (e.g., a near field communication (NFC) reader or module), one or more other electronic components, or any combination thereof. The PCB 234 may support and electrically connect more, fewer, and/or different components of the sensor device 200.

The housing 222 of the sensor device 200 may support the PCB 234, for example, in any number of ways. For example, the PCB 234 may be attached to the housing 222 in any number of ways including, for example, with one or more fasteners (e.g., screws or nut/bolt combinations), welds, adhesive, tabs, flanges, other devices, or any combination thereof.

The housing 222 of the sensor device 200 may be made of any number of materials. For example, the housing 222 of the sensor device 200 may be made of a same material (e.g., a composite material) as the rim 122. In another example, the housing 222 of the sensor device 200 is made of two or more material. For example, the cover 230 of the housing 222 is made of a same material (e.g., a composite material) as the rim 122, and a remainder of the housing 222 is made of another material (e.g., a plastic). In yet another example, the housing 222 of the sensor device 200 is made of a different material (e.g., a plastic) than the rim (e.g., a composite material).

The housing 222 of the sensor device 200 may be any number of sizes and/or shapes. The size and/or shape of the housing 222 may be defined by a size and a shape of the volume 220 within the rim 122, spoke spacing for a wheel on which the rim 122 is installed, and/or a number and size of components supported within the housing 222. For example, a size of a power source (e.g., a coin cell battery) supported within the housing 222 may define a minimum size of the housing 222 of the sensor device 200.

The battery housing 224 may be configured in any number of ways, and the housing 222 of the sensor device 200 may support the battery housing 224 in any number of ways. For example, referring to FIGS. 7-13, the battery housing 224 may be a tray that is insertable into a corresponding opening 236 within the housing 222. For example, the opening 236 may extend through the cover 230 of the housing 222 and into the housing 222.

Referring to FIGS. 7, 11, and 12, the tray 224, for example, supports a battery 238 (e.g., a coin cell battery). The tray 224 may be any number of shapes and/or sizes. The tray 224 may be smaller than the housing 222 of the sensor device 200 and may be, for example, rectangular in shape. The tray 224 may be sized and/or shaped, such that the battery 238 fits within the tray 224. For example, a size of the battery 238 (e.g., a coin cell battery) supported within the tray 224 may define a minimum size of the tray 224. Other configurations may be provided.

The tray 224 may be made of any number of materials. For example, the tray 224 may be made of a same material (e.g., a composite material) as the rim 122 and/or the housing 222 of the sensor device 200. In another example, the tray 224 is made of two or more material. For example, a first portion of the tray 224 is made of a same material (e.g., a composite material) as the rim 122, and a remainder of the tray 224 is made of another material (e.g., a plastic). In yet another example, the tray 224 is made of a different material (e.g., a plastic) than the rim (e.g., a composite material) and/or the housing 222 of the sensor device 200.

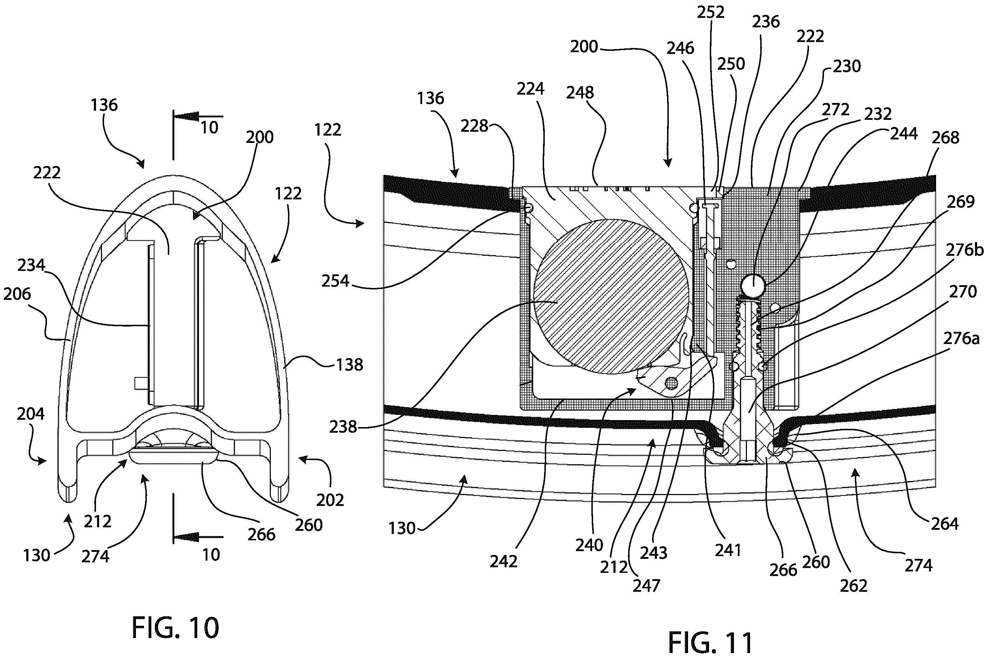

Referring to FIGS. 10-12, the tray 224, for example, may include a locking mechanism 240 that attaches (e.g., locks) the tray 224 to the housing 222 of the sensor device 200 when the tray 224 is inserted into the opening 236 through the cover 230 of the housing 222, for example. In one embodiment, the locking mechanism 240 is a spring-loaded latch mechanism (e.g., a detent latching mechanism). In other embodiments, other locking mechanisms may be used.

In an example, the locking mechanism 240 is used for locking and unlocking the tray 224 within the housing 222. The locking mechanism 240 includes pieces that are moveable and/or rotatable relative to the housing 222 of the sensor device 200 as the tray 224 translates in and out of the opening. The locking mechanism 240 consists of a detent or protrusion 241 on the housing 222, a notch 243 on the battery tray 224, a latch 245, and an ejection mechanism 246. The detent or protrusion 241 extends away from the surface of the housing 222. The notch 243 may be an interference depression tang on the tray 224. The latch 245 may be a rotating ejection lever. The ejection mechanism 246 may be an activating pin. When the battery tray 224 is fully inserted into the housing 222, the protrusion 241 from the housing 222 nests into the notch or depression 243 on the battery tray 224 keeping the battery tray 224 in place. During insertion of the battery tray 224 into the housing 222, the latch or ejection lever 245 is rotated by the battery tray 224. This rotation of the ejection lever 245 also pushes the ejection mechanism or pin 246 towards the opening 252. FIG. 11 shows the locking mechanism 240 in the locked configuration.

To unlock the locking mechanism 240 and remove the battery tray 224, a pin 246 may be acted upon using a tool inserted through the opening 252 in the battery tray 224. When the pin 246 is depressed by a tool through the opening 252, the pin 246 rotates the ejection lever 245. This rotation of the ejection lever 245 creates a force on the battery tray 224. The force on the battery tray 224 pushes the battery tray 224 out of the housing 222.

The sensor device 200 includes electrical terminals that come into contact with the battery 238 within the tray 224 as the tray 224 moves into the locked position (e.g., as shown in FIG. 11). The electrical terminals may also be electrically connected to electronic components of the sensor device 200, such that the battery 238 powers the electronic components of the sensor device 200 when the tray 224 is in the locked position (e.g., as shown in FIG. 11). For example, the electrical terminals may be electrically connected to the PCB 234, such that the battery 238 powers any electrical components electrically connected to the PCB 234. In one embodiment, when the tray 224 is in the locked position, the battery 238 powers a pressure sensor 244 of the sensor device 200.

The housing 222 of the sensor device 200 houses an ejection mechanism that may be actuated by a user to unlock the tray 224 and move the tray 224 relative to the housing 222. In one embodiment, the ejection mechanism is a captive pin 246 in contact with the ejection lever 245 of the locking mechanism 240 when the tray 224 is in the locked position. The ejection mechanism may not be actuatable without a tool. For example, when the tray 224 is in the locked position, all of the ejection pin 246 may be disposed within the housing 222 of the sensor device 200.

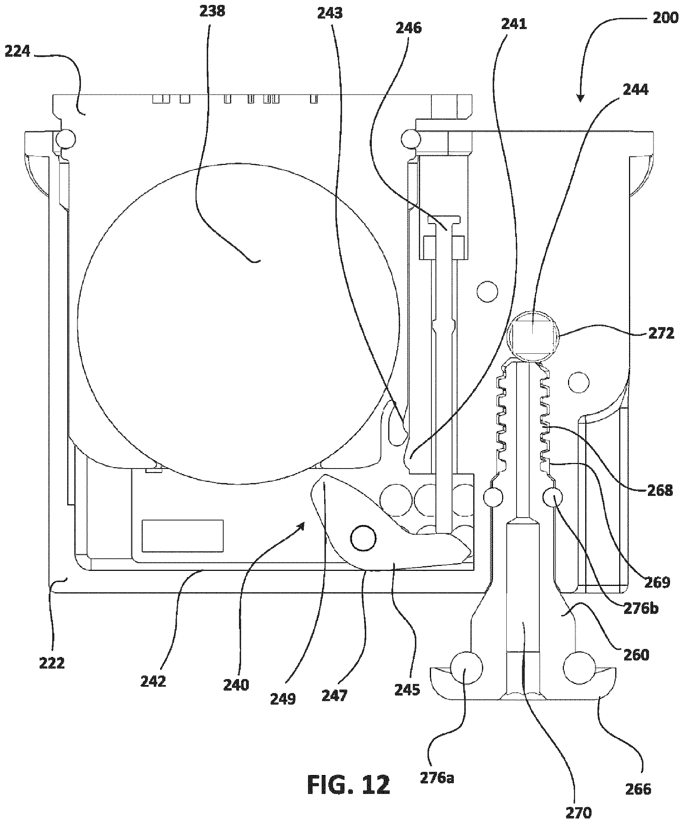

FIG. 12 shows the tray 224 in an unlocked position relative to the housing 222 of the sensor device 200, with the tray 224 being able to move (e.g., translate) relative to the housing 222. As shown in FIG. 12, the ejection pin 246 is in a receded position (e.g., has been actuated by a tool) and is in contact with the ejection lever 245. Movement of the ejection pin 246 into the receded position combined (e.g., towards the inner surface 242 of the housing 222 of the sensor device 200) combined with the contact between the ejection pin 246 and the ejection lever 245 causes the ejection lever 245 to rotate (e.g., in a clockwise direction) relative to the housing 222 of the sensor device 200. The ejection lever 245 is shaped (e.g., V-shaped) such that the rotation of the ejection lever 245 (e.g., in the clockwise direction) relative to the housing 222 of the sensor device 200 puts a portion 249 of the ejection lever 245 into contact with the tray 224 and/or the battery 238 and pushes the detent 241 of the housing 222 out of the notch 243 within the tray 224. The tray 224 is then in the unlocked position relative to the housing 222 of the sensor device 200, and the tray 224 is free to move (e.g., translate) relative to the housing 222.

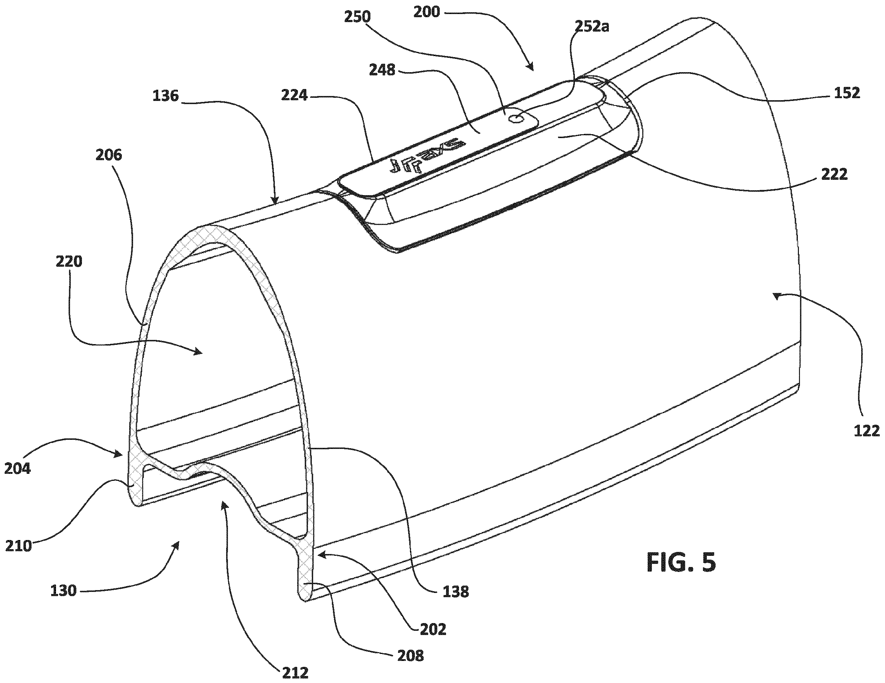

Referring to FIGS. 5, 7, and 11, the tray 224 may include a cover 248 that forms part of the radially inner portion 136 of the rim 122 when the tray 224 is installed in the housing 222 of the sensor device 200 (e.g., in the locked position, as shown in FIG. 11). At least one dimension (e.g., a length) of the cover 248 may be larger than same dimension(s) of the tray 224, such that a tab 250 is formed. The tab 250 may include an opening 252a through the tab 250 (e.g., a through-hole). The opening 252a through the tab 250 may align with the ejection pin 246 when the tray 224 is in the locked position. A user may insert a tool through the opening 252a to interact with (e.g., press) the ejection pin 246 and unlock the tray 224, such that the tray 224 may be moved (e.g., translated) relative to and/or out of the housing 222 of the sensor device 200.

In the orientation shown in FIG. 11, when the ejection pin 246 is pressed with the tool, the locking mechanism 240 rotates in a clockwise direction and, due to contact between the locking mechanism 240 and the inner surface 242 of the housing 222, pushes the tray 224 out of the locked position. This motion pushes the detent 241 of the housing 222 of the sensor device 200 out of the notch 243 of the tray 224, for example.

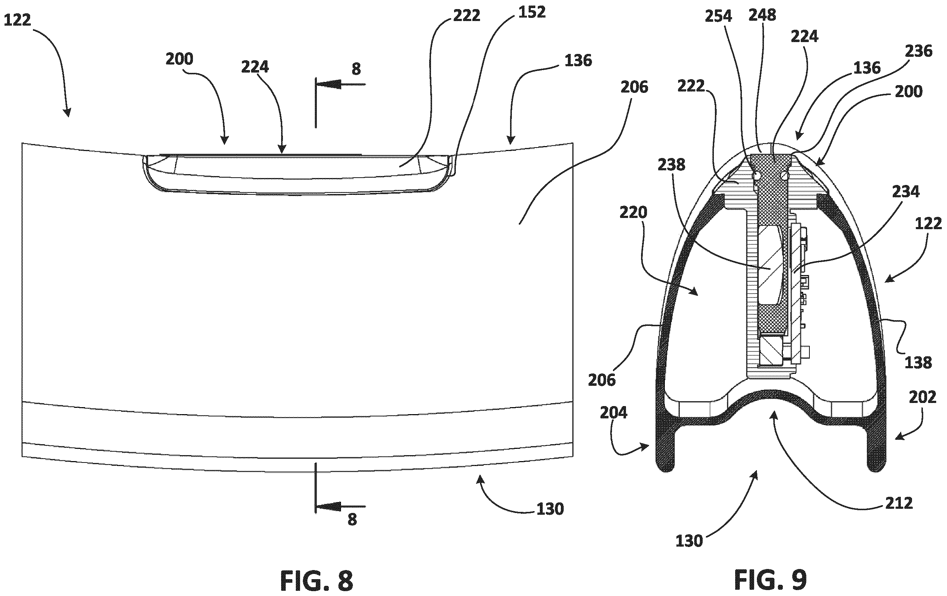

The tray 224 may also act as a water-tight sealing mechanism for the sensor device 200. Referring to FIGS. 9 and 11, the tray 224 may include one or more seals 254 (e.g., a seal 254) to prevent moisture ingress when the tray 224 is installed within the housing 222 of the sensor device 200 and in the locked position. The seal 254 may be any number of different types of seals including, for example, a gasket or an O-ring configured to create a water-tight seal when the tray 224 is installed within the housing 222 of the sensor device 200 and in the locked position.

The seal 254 may be in any number of positions on the tray 224. For example, as shown in the example of FIGS. 9 and 11, the seal 254 may be at or adjacent to the cover 248 of the tray 224. In other embodiments, the seal 254 and/or other seals are disposed in other locations to provide the water-tight seal. For example, in one embodiment, the tray 224 does not include a seal, but the housing 222 of the sensor device 200 includes a seal (e.g., a gasket) at or adjacent to and around the opening 236 in the cover 230 of the housing 222. In an embodiment, the ejection mechanism or pin 246 also includes a seal, such as an O-ring or gasket.

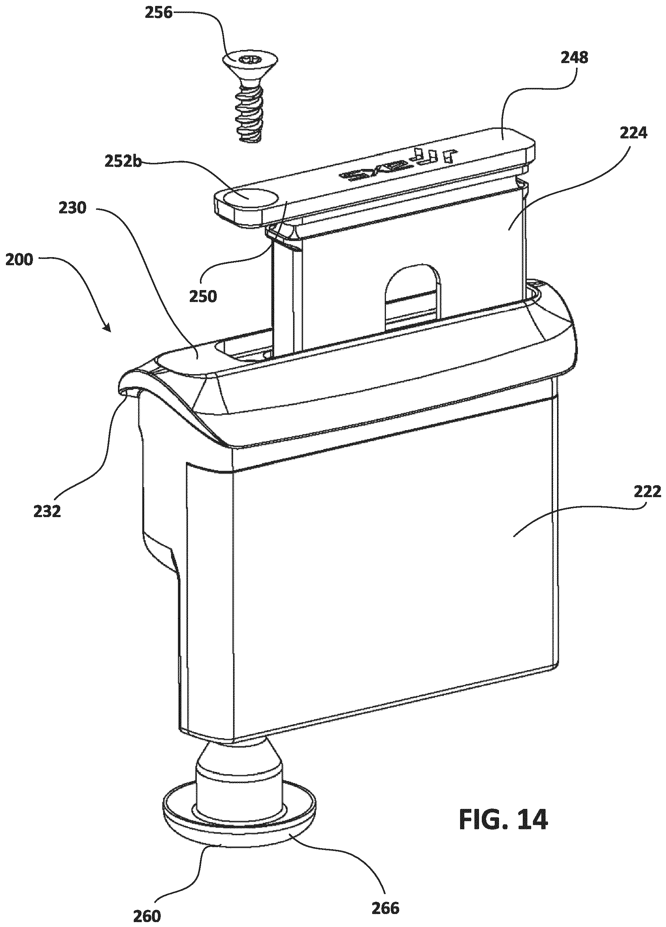

In other embodiments, the tray 224 is attached (e.g., locked) to the housing 222 of the sensor device 200 in other ways. For example, referring to FIG. 14, instead of using the locking mechanism 240 to attach the tray 224 to the housing 222 of the sensor device 200, an opening 252b through the tab 250 of the tray 224 may be larger (e.g., have a larger diameter), and the housing 222 may have a threaded opening that aligns with the opening 252b through the tab 250 when the tray 224 is installed within the housing 222. The tray 224 may be attached (e.g., locked) to the housing 222 of the sensor device 200 with a fastener 256 (e.g., a screw or a bolt) via the opening 252b through the tab 250 of the tray 224 and the threaded opening in the housing 222.

The tray 224, for example, facilitates installation and removal of the battery 238 from the sensor device 200 at the radially inner portion 136 of the rim 122. Electronic devices attached to an external surface of a wheel (e.g., the wheel 54 or 56) of a bicycle (e.g., the bicycle 50), for example, are easily accessible to remove and replace batteries. Electronic devices installed within a body of the bicycle, however, are more difficult to access for battery installation and removal. Integrating the tray 224 with an outer surface of the housing 222 of the sensor device 200 (e.g., the cover 230 of the housing 222) that is accessible at the radially inner portion 136 of the rim 122 avoids having to uninstall the sensor device 200 from the rim 122 when installing or removing the battery. This integration also avoids having to depressurize a tire (e.g., the tire 120) installed on the rim 122 and/or removal of the tire to gain access to the battery, which is a cumbersome and time-consuming process.

Referring to FIGS. 3, 6, 7, and 10-14, the sensor device 200 (e.g., the housing 222 of the sensor device 200) may be attached (e.g., mounted or anchored) to the rim 122 with a fastener 260. The sensor device 200 may, for example, be attached to the radially outer tire engaging portion 130 with the fastener 260. In the embodiment shown in FIGS. 3, 6, 7, and 10-14, the sensor device 200 may be attached to the radially outer tire engaging portion 130 at the well 212 with the fastener 260.

Referring to FIG. 11, the radially outer tire engaging portion 130 includes an opening 262 that extends through the radially outer tire engaging portion 130. The opening 262 is, for example, within the well 212 of the radially outer tire engaging portion 130. In one embodiment, the rim 122 has a reinforced portion 264 around the opening 262. The reinforced portion 264 around the opening 262 through the rim 122 is, for example, a thicker composite laminate compared to other parts of rim 122.

The fastener 260 has a head 266 and threads 268. The fastener 260 extends through the opening 262 through the radially outer tire engaging portion 130, such that the head 266 of the fastener 260 is in contact with (e.g., abuts) the reinforced portion 264 around the opening 262 through the radially outer tire engaging portion 130, and the threads 268 engage with the housing 222 of the sensor device 200. The housing 222 of the sensor device 200 may include a threaded opening 269, and the sensor device 200 may be attached to the rim 122 via a threaded connection between the threads 268 of the fastener 260 and the threaded opening 269.

As the fastener 260 is turned into the housing 222 of the sensor device 200 via the threaded connection, the housing 222 of the sensor device 200 is pulled towards the radially outer tire engaging portion 130, and the flange 232 of the cover 230 of the housing 222 of the sensor device 200 is pulled into contact with the flange 228 of the receptacle 152 within the rim 122. The fastener 260 may be tightened within the threaded opening 269 within the housing 222 of the sensor device 200 to tighten the cover 230 of the housing 222 against the rim 122. In one embodiment, when the flange 232 of the cover 230 is in contact with the flange 228 of the receptacle 152, the housing 222 of the sensor device 200 is at a distance relative to (e.g., remote from) the radially outer tire engaging portion 130 of the rim 122. In other words, when the sensor device 200 is attached to the radially outer tire engaging portion 130 of the rim 122 via the fastener 260, the housing 222 of the sensor device 200 is not in contact with the radially outer tire engaging portion 130 of the rim 122.

In the embodiment shown in FIGS. 3-14, the fastener 260 is a ported bolt. Referring to FIGS. 11-13, the ported bolt 260, for example, includes a passage 270 along a length of the ported bolt 260. When the ported bolt 260, for example, is threaded into the threaded opening 269 within the housing 222 of the sensor device 200, the passage 270 through the ported bolt 260 fluidly connects a port 272 of the pressure sensor 244 of the sensor device 200 to a volume 274 (e.g., a tire cavity) between the first tire retaining portion 202 and the second tire retaining portion 204 of the radially outer tire engaging portion 130 of the rim 122. The pressure sensor 244 is thus configured to measure a pressure of a fluid (e.g., air) within the volume 274 (e.g., a tire pressure) via the passage 270 fluidly connecting the volume 274 to the pressure sensor 244.

The ported bolt 260 includes one or more seals 276 (e.g., O-rings or gaskets) configured to provide an airtight seal along a path between the volume 274 (e.g., the tire cavity) and the sensor device 200. For example, the ported bolt 260 includes a first seal 276a disposed around the ported bolt 260 adjacent to the head 266 of the ported bolt 260, and a second seal 276b disposed around the ported bolt 260 adjacent to the threads 268 of the ported bolt 260. The ported bolt 260 may include more, fewer, and/or different seals, and/or the first seal 276a and/or the second seal 276b may be provided in different positions along the ported bolt 260, respectively. In an alternate embodiment, the second seal 276b may be located on the housing, near the ported bolt 260 and/or in contact with the ported bolt 260.

The ported bolt 260 may be made of any number of different materials. For example, the ported bolt 260 may be made of a metal such as, for example, alloy steel, though the ported bolt 260 may be made of other material. The ported bolt 260 may be any number of shapes and sizes. For example, the length of the ported bolt 260 may be sized such that the housing 222 of the sensor device is not in contact with the radially outer tire engaging portion 130 of the rim 122 when the sensor device 200 is attached to the radially outer tire engaging portion 130 of the rim 122 via the ported bolt 260. As another example, a diameter of a shaft of the ported bolt 260 may be minimized while still allowing fluid communication between the port 272 of the pressure sensor 244 of the sensor device 200 and the volume 274, such that the corresponding opening 262 through the radially outer tire engaging portion 130 is also minimized.

Referring to FIG. 11, the ported bolt 260 forms a blind pressure tap that exposes the port 272 of the pressure sensor 244 to the atmosphere within the volume 274 between the first tire retaining portion 202 and the second tire retaining portion 204 of the radially outer tire engaging portion 130 of the rim 122 (e.g., a pressurized tire cavity). The blind nature of the exposure to the pressurized tire cavity 274, for example, helps prevent sealant contained within a tire attached to the rim 122 or sealant added through the valve, for example, from being passed to the sensor device 200 (e.g., the pressure sensor 244 of the sensor device). This prevents clogging of the pressure sensor 244, for example, minimizing inaccurate measurements by the pressure sensor 244.

In an embodiment, the air passage to the pressure sensor may include a material. For example, passage 270 may be filled (fully or partially) with material. In an alternate example, passage 270 and the port 272 may be filled (fully or partially) with material. In the example, the material may be a low durometer material capable of translating pressure effectively. The material may be rubber, silicon, and/or any easily compressed material. Pre-filling the passage allows air in the tire bed to push on the soft material which translates the material to the sensor 244. The pre-filled material will not leak or fall out of the passage, and will help to reduce the risk of the passage clogging with sealant.

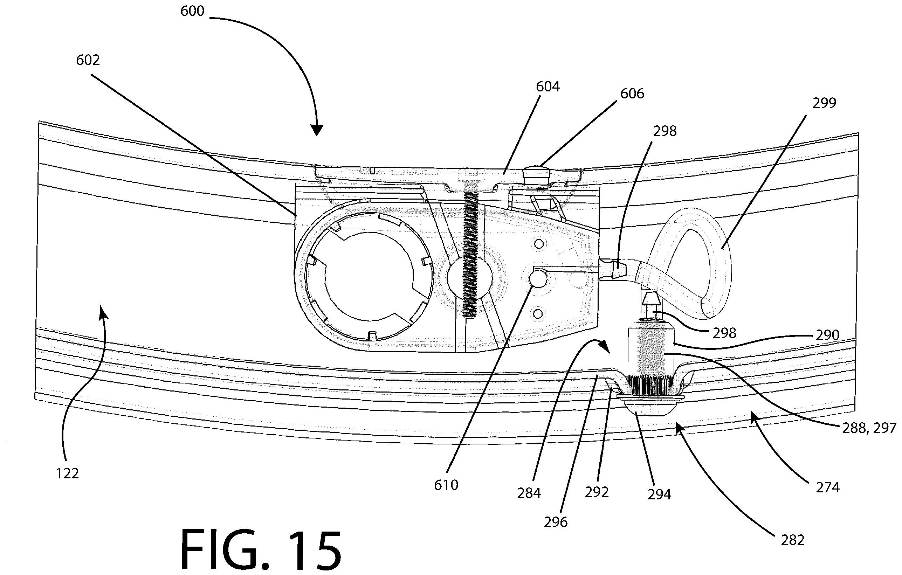

A sensor device may be attached to the rim 122 and/or a sensor device (e.g., a pressure sensor of the sensor device) may be fluidly connected to the tire cavity 274, for example, in any number of other ways. For example, referring to FIG. 15, a fluid connection between a sensor device 600 and the tire cavity 274, and the attachment of the sensor device 600 to the rim 122 may be separated. In other words, a ported bolt 282 may not be used to both attach the sensor device 600 to the rim 122 and fluidly connect the sensor device 600 to the tire cavity 274.

The embodiment described in FIG. 15 is similar to and shares many of the same elements as the second embodiment described below. Most elements are not described in relation to FIG. 15 if they are identical or similar to those found in the second embodiment below. Features and elements described in the first and second embodiments may be interchanged or combined with the features of FIG. 15.

As seen in the embodiment of FIG. 15, the sensor device 600 includes a cover 604 and a housing 602. The cover 604 includes a display. In the example, the display may be an LED 606.

For example, a ported bolt 282 may extend through an opening 284 through the radially outer tire engaging portion 130 of the rim 122 to expose a pressure sensor within the pressure sensor cavity or port 610 of the sensor device 600, for example, to a pressure within the tire cavity 274 (e.g., a tire pressure), but not attach the sensor device 600 to the rim 122. Such a ported bolt 282 may be attached to the rim 122 at the radially outer tire engaging portion 130 using, for example, threads 288 of the ported bolt 282 and a rivet nut 290 installed within the opening 284 through the radially outer tire engaging portion 130 of the rim 122. The ported bolt 282 may be tightened against the rivet nut 290, and a seal 292 (e.g., a sealing gasket) may be disposed between a head 294 of the ported bolt 282 and a surface 296 of the radially outer tire engaging portion 130 (e.g., within the well 212 of the radially outer tire engaging portion 130). In the example, the pressure sensor cavity 610 is a volume that houses the pressure sensor. In the example, the pressure sensor cavity 610 is fluidly connected to the flexible tube 299. In an example the pressure sensor cavity 610 is fluidly connected to the tire cavity 274 via the flexible tube 299 and ported bolt 282. In an example, the pressure sensor cavity 610 is similar to the port 272 described below.

The ported bolt 282 may include a fluid passage 297 within and along a length of the ported bolt 282. Each of the ported bolt 282 and the sensor device 600 may include a fixing member 298 to which a flexible tube 299 (e.g., a flexible hose), for example, is connected. The fixing members 298 may be any number of different types of fixing devices for providing a leak-proof seal with the flexible tube. For example, the fixing members 298 may include barbs, compression fittings, luer locks, quick-disconnect fittings, other fixing devices, or any combination thereof.

The sensor device 600 (e.g., the pressure sensor of the sensor device) may be fluidly connected to the tire cavity 274, for example, via the ported bolt 282, the fixing members 298, and the flexible tube 299. By using the flexible tube 299, the sensor device 600 may be arbitrarily placed on or within the rim 122, and may be relocated while still maintaining a pressure within the tire cavity 274. This allows a battery of the sensor device 600, for example, to be replaced without having to depressurize the tire and disconnect the sensor device 600.

In a further alternate embodiment, a sensor device may use a tube within the tire to act upon the fluid and/or sense the pressure within the inside of the tire.

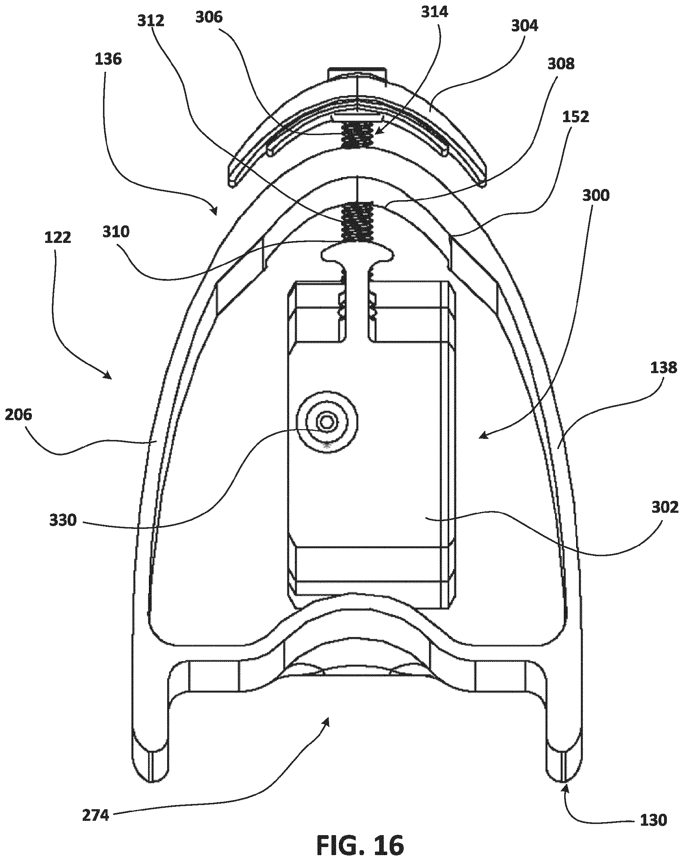

A second embodiment of a sensor device 300 utilizes the fixing members described above and, for example, the flexible tube, and is attached to the radially inner portion 136 of the rim 122 instead of the radially outer tire engaging portion 130 of the rim 122 (e.g., as with the sensor device 200 of the first embodiment). FIGS. 16-23 illustrate the sensor device 300, which may be attached (e.g., mounted) to the rim 122 and fluidly connected to, for example, a volume defined by the tire engaging portion 130 of the rim 122 (e.g., the tire cavity), according to a second embodiment.

The sensor device 300 utilizes and/or acts similarly to a flip toggle bolt, such that a wider object (e.g., the sensor device 300) may be installed through a narrower opening. This attachment mechanism allows a smaller receptacle 152 through the radially inner portion 136 of the rim 122 to be used. As openings (e.g., holes) through a structure may reduce the integrity of the structure, by using a smaller receptacle 152 (e.g., compared to the first embodiment shown in FIGS. 3-14) through the radially inner portion 136 of the rim 122 to attach a sensor device (e.g., the sensor device 300) to the rim 122, reinforcement around the receptacle 152 may be minimized. For example, the composite laminate around the receptacle 152 of the second embodiment shown in FIGS. 16-23 may be thinner than the composite laminate around the receptacle 152 of the first embodiment shown in FIGS. 3-14.

The sensor device 300 includes a housing 302 and a cover 304 (e.g., an outer plate or an external plate) physically connected to the housing 302 of the sensor device 300 with a fixing member 306. The housing 302 supports one or more electronic components (e.g., one or more processors, a pressure sensor, a power source such as a coin cell battery, a memory) in communication with each other (e.g., via a PCB supported by the housing). The housing 302 may be made of any number of materials including, for example, a plastic or a composite material. The housing 302 may be any number of shapes and/or sizes. For example, at least one dimension (e.g., a length) of the housing 302 may be larger than at least one dimension (e.g., a length) of the cover 304.

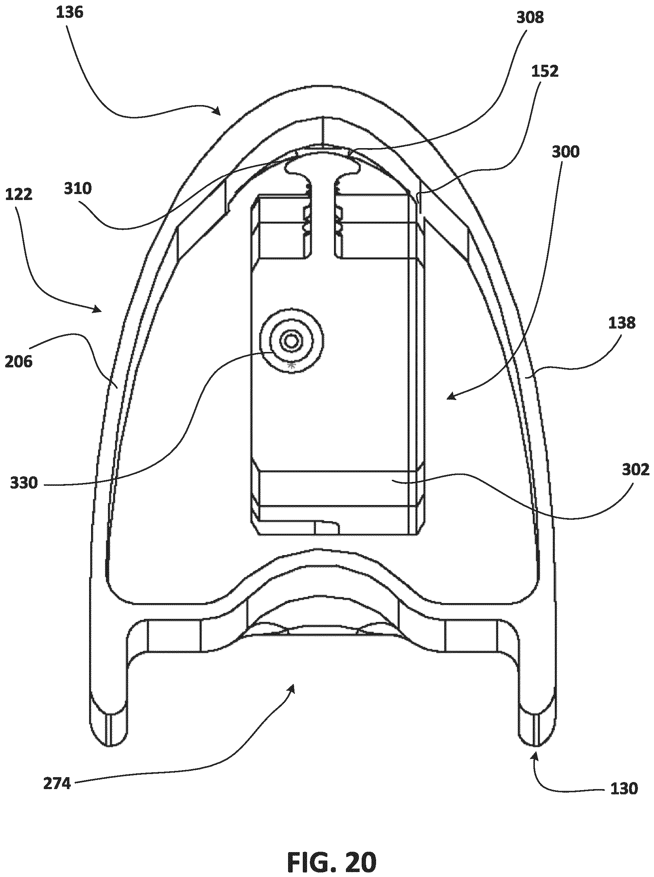

In one embodiment, the housing 302 of the sensor device 300 is shaped to interface with an inner surface 308 of the radially inner portion 136 of the rim 122. In other words, a portion of the housing 302 is sized and/or shaped to match a size and/or shape of the inner surface 308 of the radially inner portion 136 of the rim 122. For example, referring to FIGS. 16 and 20, the housing 302 of the sensor device 300 has at least one outer surface 310 (e.g., an outer surface 310) that is shaped (e.g., parabolic) to match the shape (e.g., parabolic) of the inner surface 308 of the radially inner portion 136 of the rim 122. The outer surface 310 of the housing 302 of the sensor device 300 may act as a pressure bearing surface when the sensor device 300 is attached to the rim 122 (e.g., the cover 304 and the housing 302 of the sensor device 300 are drawn together, such that the sensor device 300 is clamped to the rim 122).

The cover 304 forms part of the radially inner portion 136 of the rim 122 when the sensor device 300 is attached to the rim 122. The cover 304 may be any number of shapes and sizes. For example, the cover 304 may be sized and shaped to match a size and shape of the receptacle 152 through the radially inner portion 136 of the rim 122. Other shapes and/or sizes may be provided.

The cover 304 of the sensor device 300 may be made of any number of materials. For example, the cover 304 of the sensor device 300 may be made of a same material (e.g., a composite material) as the rim 122. In another example, the cover 304 of the sensor device 300 is made of a different material (e.g., a plastic) than the rim 122 (e.g., a composite material).

In one embodiment, the fixing member 306 is a bolt (e.g., part of a flip toggle bolt or similar in function to a flip toggle bolt, made up of housing 300, support 316, and bolt 306). The bolt 306 may, for example, be captive within the cover 304, and may include a shaft 312 having threads 314. The cover 304 may be pivotable relative to the shaft 312. Other fixing members 306 may be provided.

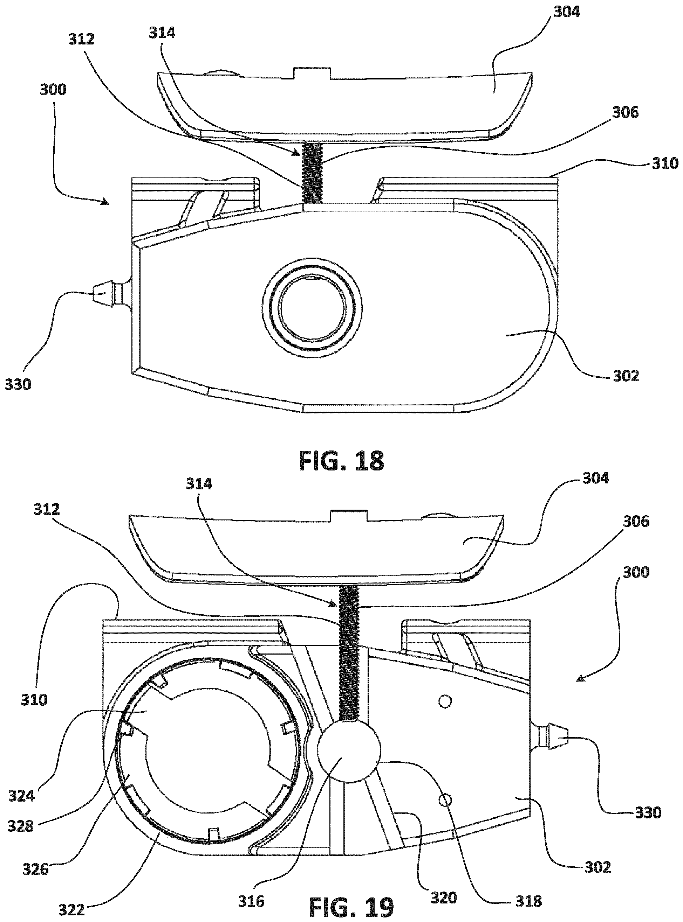

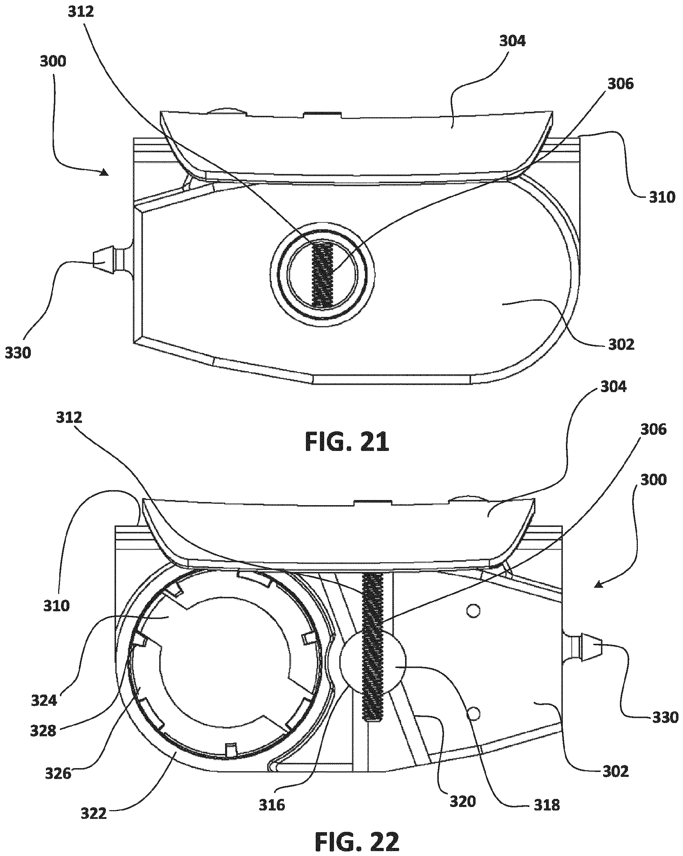

Referring to FIGS. 19 and 22, the sensor device 300 may include a support 316 that is rotatably attached to the housing 302 of the sensor device 300. In one embodiment, the support 316 is a body (e.g., a cylindrically shaped body) that is captive within a channel 318 within the housing 302 of the sensor device 300. The channel 318 is defined by walls 320 within the housing 302. The support 316 may include a threaded through-hole to which the cover 304 is attachable via the bolt 306. When the bolt 306 is attached to the support 316 via the threaded hole through the support 316, for example, the walls 320 of the channel 318 define an extent of an angular rotation (e.g., 30 degrees), through which the support 316, the bolt 306, and the cover 304 may move relative to the housing 302 of the sensor device 300. With this configuration, the cover 304 and the housing 302 of the sensor device 300 may be independently pivotable relative to the bolt 306, while maintaining a mechanical connection with the bolt 306, for example. In other words, the cover 304 and the housing 302 (e.g., the outer surface 310 of the housing 302) may be pivotable relative to each other while maintaining a mechanical connection to each other.

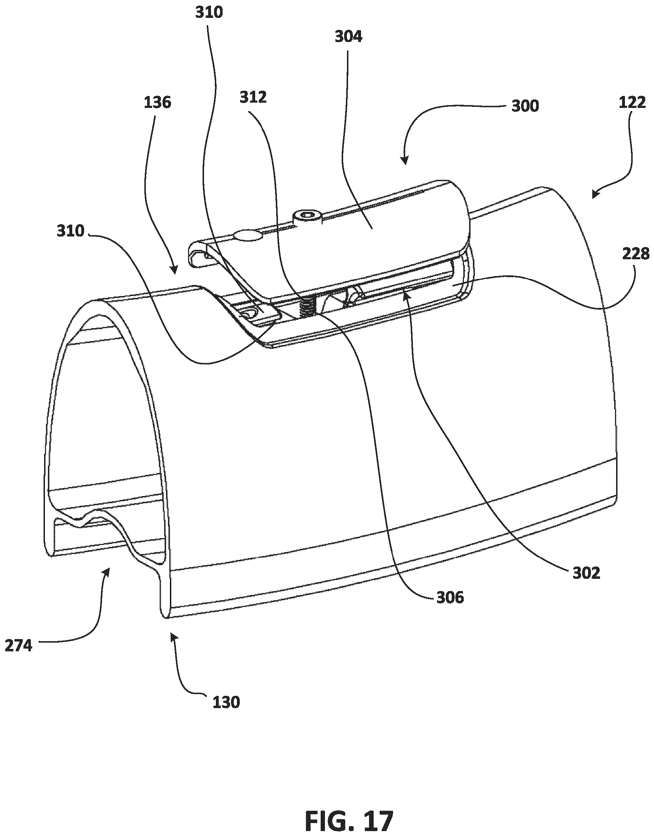

The independent pivotability of the cover 304 and the housing 302 of the sensor device 300 relative to the bolt 306 allows a housing 302 of a sensor device 300 larger than the receptacle 152 to be positioned within and attached to the rim 122. For example, with the cover 304 in an extended position relative to the housing 302 of the sensor device 300 (see FIGS. 16-19), the cover 304 may be pivoted in a first rotational direction (e.g., clockwise) relative to the housing 302 of the sensor device 300 (e.g., until the cover 304 contacts the housing 302 of the sensor device 300). A portion of the housing 302 of the sensor device 300 may then be positioned into the receptacle 152 and under the radially inner portion 136 of the rim 122. The housing 302 of the sensor device 300 may then be rotated in the first rotational direction (e.g., clockwise) relative to the cover 304 (e.g., with the cover 304 being rotated in a second rotational direction, such as counterclockwise, relative to the housing 302 of the sensor device 300). The cover 304 and the housing 302 of the sensor device 300 may then be centered within the receptacle 152. Once centered, the cover 304 may contact the flange 228 of the receptacle 152 (see FIG. 17). With the cover 304 in contact with the flange 228 of the receptacle 152 and/or the outer surface 310 of the housing 302 in contact with the inner surface 308 of the radially inner portion 136 of the rim 122, the cover 304 and/or the housing 302 may not be able to rotate relative to the rim 122 due to friction. The bolt 306 may then be rotated relative to the cover 304 and/or the housing 302 of the sensor device 300, which causes the cover 304 and the outer surface 310 of the housing 302 of the sensor device 300 to come together and clamp the rim 122. The bolt 306 may be tightened, and the sensor device 300 may be attached (e.g., mounted or anchored) to the rim 122 (see FIGS. 20-22).

With such a configuration, the sensor device 300 may be removed from the rim 122 when a power source for the sensor device (e.g., a battery) is to be installed, removed, or replaced. In other words, the battery may not be accessible at the radially inner portion 136 of the rim 122 without removing the housing 302 of the sensor device 300 from within the rim.

Referring to FIGS. 19 and 22, the sensor device 300 may also include a battery housing 322. The battery housing 322 may be integral with the housing 302, and a battery disposed within the battery housing 322 may be retained within the battery housing 322 with a battery cover 324. The battery cover 324 may be attached to the battery housing 322 in any number of ways to retain the battery within the battery housing 322. For example, the battery cover 324 may include one or more attachment features 326 such as, for example, tabs, flanges, openings, fasteners, other attachment features, or any combination thereof. The battery housing 322 may include one or more attachment features 328 that correspond to the one or more attachment features 326 of the battery cover 324, such as, for example, tabs, flanges, openings, fasteners, other attachment features, or any combination thereof.

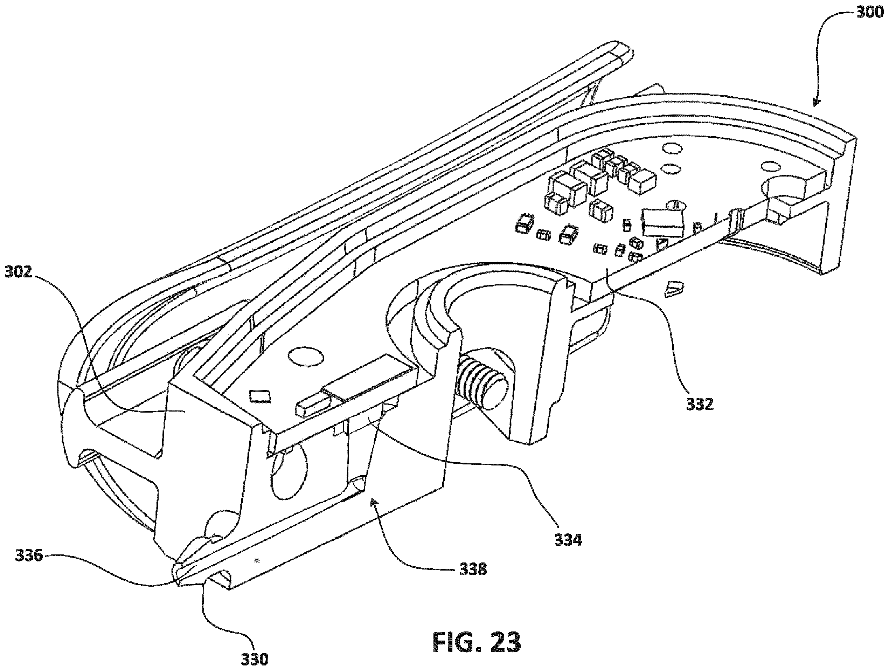

Referring to FIG. 23, as in the previous embodiments, the housing 302 of the sensor device 300 may support a PCB 332, and the PCB 332 and/or the housing 302 may support any number of electronic components including, for example, a pressure sensor 334. The pressure sensor 334 may be electrically connected to any number of other electronic components of the sensor device 300 (e.g., a processor) via the PCB and/or other electrical connections.

Referring to FIGS. 18-23, the housing 302 may also support a fixing member 330 that extends away from a surface of the housing 302 and fluidly connects an exterior of the housing 302 to an interior of the housing 302. For example, the pressure sensor of the sensor device 300 may be fluidly connected to the volume 274 within the radially outer tire engaging portion 130 of the rim 122 (e.g., a pressurized tire cavity) via the fixing member 330 and a flexible tube physically connected to the fixing member 330 and the radially outer tire engaging portion 130 of the rim 122 (e.g., via a ported bolt, as discussed above).

The fixing member 330 may be any number of different types of fixing devices. For example, in the embodiment shown in FIGS. 16-23, the fixing member 330 is a hollow barb, to which the flexible tube is attached. Other types of fixing members may be provided.

Referring to FIG. 23, a fluid passage 336 (e.g., at least partially forming a fluid path) extends through the fixing member 330 and a portion 338 of the housing 302. The fluid passage 336 fluidly connects an exterior of the sensor device 300 (e.g., the tire cavity 274 via a flexible tube physically connected to the fixing member 330) to, for example, the pressure sensor 334 supported by and electrically connected to the PCB 332.

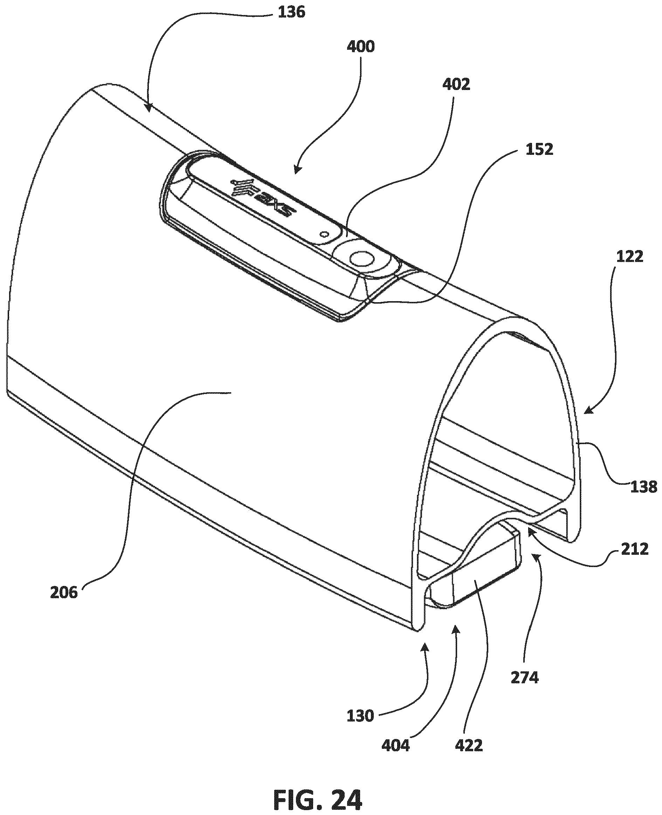

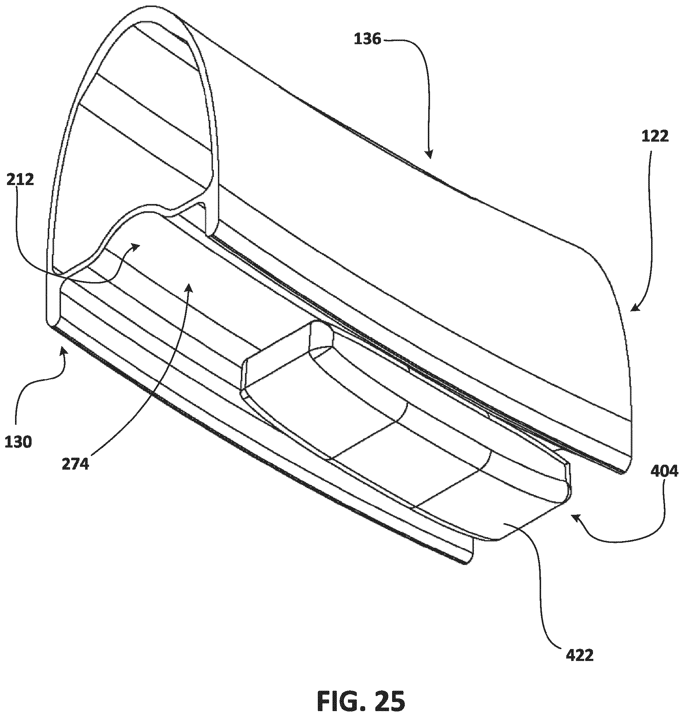

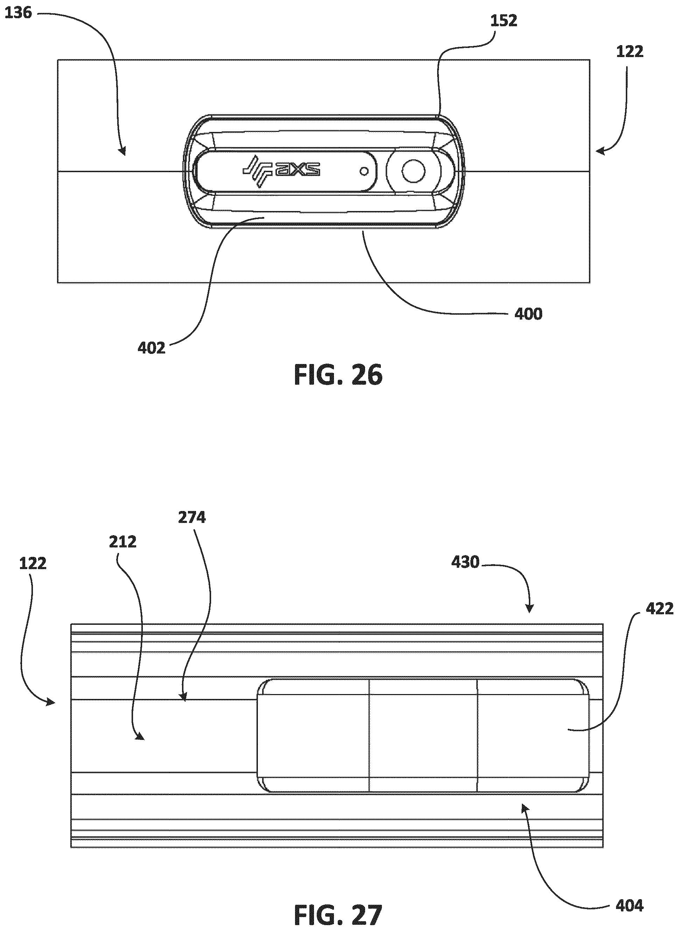

FIGS. 24-31 illustrate a sensor device 400 that may be attached (e.g., mounted) to the rim 122 and fluidly connected to, for example, a volume defined by the tire engaging portion 130 of the rim 122 (e.g., the tire cavity), according to a third embodiment. Similar to the first embodiment of the sensor device 200 shown in FIGS. 3-14, the sensor device 400 may be attached to the radially outer tire engaging portion 130 of the rim 122. In other embodiments, the sensor device 400 may be attached to the radially inner portion 136 of the rim 122 and/or attached to the radially outer tire engaging portion 130 of the rim 122 in another way.

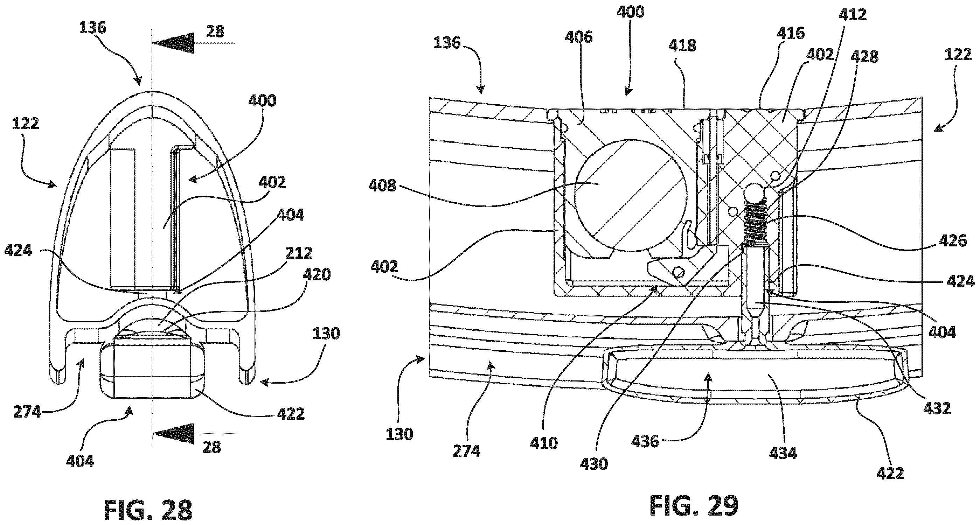

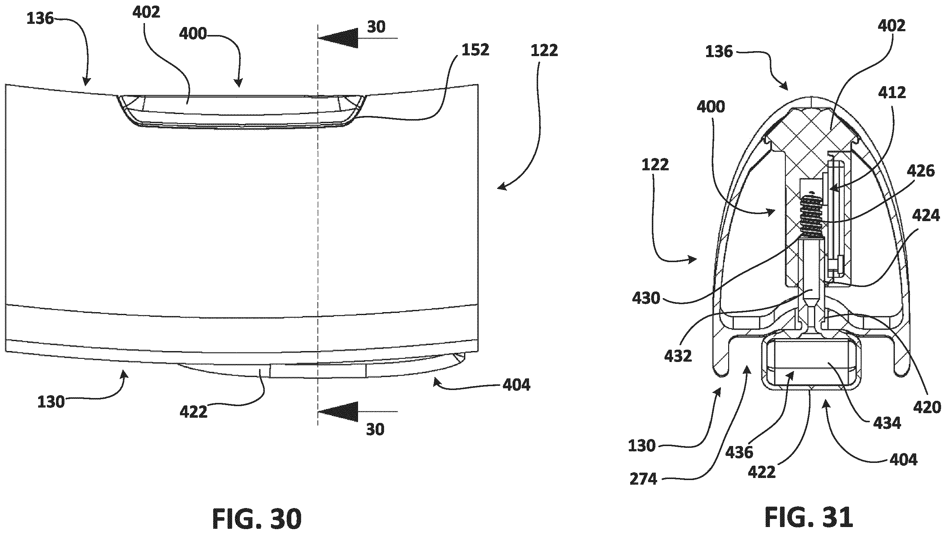

Referring to FIGS. 29 and 31, similar to the first embodiment of the sensor device 200 shown in FIGS. 3-14, the sensor device 400 includes a housing 402 that is attached between the radially inner portion and outer tire engaging portions. For example, the sensor device 400 is clamped between the radially inner portion and outer tire engaging portion with a connector 404. The sensor device 400 includes a battery housing 406 removably attached to the housing 402, such that the battery housing 406, and thus a battery 408 disposed within the battery housing 406, is accessible at the radially inner portion 136 without removing the housing 402 from the rim 122. For example, the battery housing 406 is configured as a tray, and the tray 406 is slidable relative to the housing 402 of the sensor device 400 and lockable relative to the housing 402 via a locking mechanism 410.

Referring to FIG. 29, the sensor device 400 includes a pressure sensor 412 that is powered by the battery 408 disposed within the battery housing 406. The sensor device 400 is attached to the rim 122 with a connector 404, such that an outer surface of the sensor device 400 (e.g., including an outer surface 416 of the housing 402 and an outer surface 418 of the battery housing 406 of the sensor device 400) is flush with the radially inner portion 136 of the rim 122. In other words, the sensor device 400 is attached to the rim 122, such that the outer surface of the sensor device 400 forms part of the radially inner portion 136 of the rim 122.

In the third embodiment shown in FIGS. 24-31, the sensor device 400 is attached to the radially outer tire engaging portion 130 of the rim 122. Referring to FIGS. 28, 30, and 31, the rim 122 includes an opening 420 (e.g., a reinforced opening) through the radially outer tire engaging portion 130 of the rim 122, at the well 212 of the radially outer tire engaging portion 130. Part of the connector 404 extends through the opening 420 and connects the housing 402 of the sensor device 400 to the radially outer tire engaging portion 130 of the rim 122.

In the embodiment shown in FIGS. 24-31, the connector 404 includes a container 422 (e.g., a pouch) disposed within the volume 274 within the radially outer tire engaging portion 130 of the rim 122 (e.g., at least partially within the well 212 of the radially outer tire engaging portion 130), and a shaft 424 physically and fluidly connected to the container 422. The shaft 424 is, for example, a tube (e.g., a flexible tube), though other configurations may be provided. The shaft 424 includes threads 426 on an outer surface of the shaft 424. The threads 426 are connectable to corresponding threads 428 within a threaded opening 430 in the housing 402 of the sensor device 400 to attach the connector 404 to the housing 402 of the sensor device 400, and thus the sensor device 400 to the rim 122.

Rotating the connector 404 relative to the housing 402 of the sensor device 400 in a tightening direction (e.g., a first rotational direction) while the threads 426 of the shaft 424 are engaged with the corresponding threads 428 within the threaded opening 430 in the housing 402 causes the housing 402 of the sensor device 400 to translate towards the radially outer tire engaging portion 130 of the rim 122 until the sensor device 400 (e.g., the housing 402 of the sensor device 400) is seated within the receptacle 152 through the radially inner portion 136 of the rim 122.

Referring to FIGS. 29 and 31, the tube 424, for example, includes a passage 432 extending along a length of the tube 424. The passage 432 is fluidly connected to an interior volume 434 of the container 422. The interior volume 434 of the container 422 is at least partially filled with a fluid 436. In one embodiment, the fluid 436 is an incompressible fluid (e.g., a hydraulic oil). In other embodiments, the fluid 436 is compressible.

The container 422 may be flexible (e.g., made of rubber, polyvinyl chloride (PVC), or low density polyethylene (LDPE)). The container 422 at least partially filled with the fluid 436 is exposed to a pressure (e.g., a tire pressure) within the volume 274 within the radially outer tire engaging portion 130 of the rim 122 (e.g., the tire cavity) and transmits the pressure to the pressure sensor 412 via the passage 432 (e.g., a fluid path) extending along the length of the tube 424 (e.g., when the threads 426 of the connector 404 are connected to the corresponding threads 428 within the threaded opening 430 in the housing 402 of the sensor device 400).

The container 422 being made of a flexible material allows pressure from a surrounding atmosphere (e.g., tire pressure) to be transferred to the fluid 436 contained within the container 422 (e.g., the pressure from the surrounding atmosphere corresponds to a pressure of the fluid 436 contained within the container 422). A volume of the fluid 436 within the container 422 is to be large enough to transmit the tire pressure, for example, without running out of fluid to transmit pressure. An appropriate volume depends on a compressibility of the system (e.g., fluid compressibility, residual air bubbles, and flex of the container 422). An incompressible system will transfer pressure forces to the pressure sensor 412 without changing a volume of the container 422, while a compressible system transfers the fluid 436 towards the pressure sensor 412 to equalize a pressure in the system. The fluid 436 may be selected to have temperature stability (e.g., freeze point, boiling point) and chemical compatibility with any containment elements (e.g., the container 422 and the tube 424).

The tube 424 transmitting the pressure between the container 422 of the connector 404 and the pressure sensor 412 may be any number of lengths, which allows for optimal placement of the sensor device 400 and/or the container 422 to best suit design requirements of a wheel and/or the rim 122. This configuration (e.g., including the container 422 and the tube 424 filled with the fluid 436) makes the sensor device 400 compatible with both tubed or tubeless wheel setups, and creates a closed pressure sensing circuit that cannot be fouled by tire sealant.

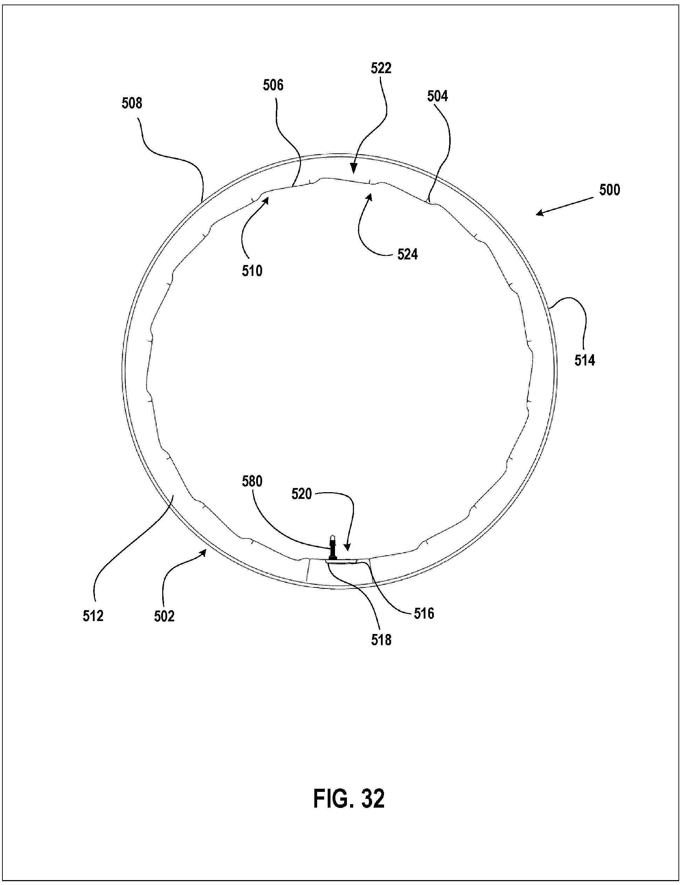

FIG. 32 illustrates a rim 500 for a bicycle wheel, such as the front wheel 54 of FIG. 1, removed from the rest of the bicycle 50, without a tire attached, and without spokes (e.g., spokes 124 of FIG. 1) or a hub (e.g., a central hub 126 of FIG. 1). The rim 500 includes a tire engaging portion 502 to engage with the tire 120, as is shown in FIG. 1. The tire engaging portion 502 is configured radially outward of a spoke receiving surface 504 that is disposed along an inner circumference 506 of the rim 500. In other words, the tire engaging portion 502 is a radially outer tire engaging portion. In an embodiment, the tire engaging portion 502 is disposed along an outer circumference 508 of the rim 500. The tire engaging portion 502 is configured for attachment to tires using clincher tire attachment configurations for tires including beaded interlock attachments. Other configurations of the tire engaging portion 502 may also be provided to allow for the use of other types of tires on the rim 500. For example, tubeless tires including beaded interlock attachment types may be used.

The rim 500 provides structure for attachment of the spokes to the rim 500 at a receiving portion of the rim 500, proximate to the spoke receiving surface 504. As such, the spoke receiving surface 504 is part of a spoke engaging portion 510 (e.g., a radially inner portion) of the rim 500. In an embodiment, the spoke engaging portion 510 of the rim 500 is disposed along the inner circumference 506 of the rim 500. In another embodiment, the spoke receiving surface 504 and the spoke engaging portion 510 may be separate parts and/or portions of the rim 500. For example, the spokes may pass through the spoke receiving surface 504, and the structure for attachment to the rim 500 may be provided proximate to the tire engaging portion 502.

The spoke receiving surface 504 may be shaped in any number of ways. For example, the spoke receiving surface 504 may be circular. In the embodiment shown in FIG. 32, the spoke receiving surface 504 is shaped as a sawtooth wave circle. In other embodiments, the spoke receiving surface 504 may be shaped as a parabolic wavy circle or another shape.

The rim 500 includes a first sidewall 512 and a second sidewall 514 that extend between the tire engaging portion 502 and the spoke engaging portion 510. For example, the first sidewall 512 and the second sidewall 514 extend radially outward from the spoke engaging portion 510 to the tire engaging portion 502. The first sidewall 512 is spaced apart from the second sidewall 514. The rim 500 may be hollow between, for example, the first sidewall 512, the second sidewall 514, the tire engaging portion 502, and the spoke engaging portion 510.

At least part of the rim 500 (e.g., the first sidewall 512 and the second sidewall 514) is formed by one or more composite materials. In one embodiment, the entire rim 500 is formed by one or more composite materials. In one example, fiber reinforced plastic forms a one-piece unitary rim of a collection of layers including the tire engaging portion 502, the first sidewall 512, the second sidewall 514, and the spoke engaging portion 510. Other configurations may also be provided. For example, a combination of plastic and carbon-fiber reinforced plastic forms a one-piece unitary rim of a collection of plastic layers and carbon-fiber layers including the tire engaging portion 502, the first sidewall 512, the second sidewall 514, and the spoke engaging portion 510. Other configurations may also be provided.

The rim 500, for example, may be at least partially formed by a laminate that includes one or more compressed layers of one or more materials. Any number of materials may be included within the laminate including, for example, a thermoplastic and/or a thermoplastic with reinforcing fiber material (e.g., bendable fabric preform sheets). The reinforcing fiber material may be any number of reinforcing materials including, for example, Nylon. More, fewer, and/or different materials may be included within the laminate. For example, the reinforcing fiber material may be a natural fiber such as, for example, flax.

The front wheel 54 and the rear wheel 56 may include rims 500 configured for any size wheel. In an embodiment, the rims 500 are configured for use in wheels conforming to a 700C (e.g., a 622 millimeter diameter clincher and/or International Standards Organization 622mm) bicycle wheel standard.

In one embodiment, the first sidewall 512, the second sidewall 514, the spoke engaging portion 510, and the tire engaging portion 502 of the front wheel 54 and/or the rear wheel 56 of the bicycle 50 (e.g., the front wheel 54 and the rear wheel 56 in the example of FIG. 1) are at least partially formed by one or more layers of the one or more composite materials (e.g., layers of composite materials). Each of the one or more layers may include one or more fabric plies (e.g., pieces) of the respective composite material. Different layers of different composite materials may include different numbers of plies or pieces of the composite materials, respectively. At least some of the layers of composite material may be of different shapes and/or sizes. Alternatively, all of the layers of the composite material may be a same shape and/or size.

The rim 500 of Fig. 32 also includes a sensor device 516 installed within the rim 500. The sensor device 516 may be configured to measure and/or determine data that may be useful to a rider of the bicycle 50, for example, and transmit the data to a computing device (e.g., of the bicycle 50 or a mobile computing device off the bicycle 50), for example, for display to the rider. For example, the sensor device 516 may transmit the data to the bicycle control device 96 for display to the rider and/or further processing. The sensor device 516 may include any number of electronic components and may measure and/or determine any number of different types of data associated with the rim 500 and/or the bicycle 50, for example. For example, the sensor device 516 may measure and/or determine, for example, tire pressure data, wheel speed data, wheel odometer data, data related to rim composite health, wheel lean and yaw data, product data, road feedback data, LED status indicators, one or more other types of data, or any combination thereof.

The radially inner portion 510 of the rim 500 includes a receptacle 518 (e.g., a cavity) within the radially inner portion 510 of the rim 500 at a first position 520 along the inner circumference 506 (e.g., a first circumferential position 520). The sensor device 516 may be positioned within the receptacle 518 and attached to the rim 500, such that part of the sensor device 516 forms a portion of the radially inner portion 510 (e.g., the inner circumference 506) of the rim 500. For example, the receptacle 518 may occlude the sensor device 516, such that aerodynamic performance and aesthetics are improved compared to prior art sensor devices installed at a valve stem.

The receptacle 518 may be any number of shapes and/or sizes. For example, the receptacle 518 may be large enough to accommodate a sensor device 516 that includes one or more sensors, one or more batteries, a processor, a memory, other electronic devices, or any combination thereof, but small enough to fit within an area between two adjacent spokes of a wheel (e.g., approximately 150 mm) on which the rim 500 is used. In one embodiment, a length (e.g., an arc length) of the receptacle 518 is less than or equal to 70 mm. In other embodiments, however, larger receptacles 518 may be provided.

The rim 500 may include a counterbalance 522 (e.g., a counterweight) disposed at a second position 524 along the inner circumference 506 (e.g., a second circumferential position 524). The counterbalance 522 may be sized, shaped, and/or made of a particular material to counter the weight of the sensor device 516 disposed in the receptacle 518. In one embodiment, the counterbalance 522 is integrated within the composite material that forms the spoke engaging portion 510 of the rim 500. For example, the spoke engaging portion 510 may include more layers of the composite material at the second circumferential position 524 compared to the first circumferential position 520. In other words, the spoke engaging portion 510 may include more material, be thicker, and weigh more at the second circumferential position 524 compared to the first circumferential position 520. In another embodiment, the counterbalance 522 may include another material (e.g., another composite material or a metal) attached to or integrated within the composite material at the second circumferential position 524. Other types of counterbalances may be provided.

The first circumferential position 520 along the inner circumference 506, at which the receptacle 518 is positioned, is different than the second circumferential position 524 along the inner circumference 506, at which the counterbalance 522 is provided. In other words, the sensor device 516 is positioned at a distance away from (e.g., is remote relative to) the counterbalance 522.

In one embodiment, the second circumferential position 524 along the inner circumference 506 is opposite the first circumferential position 520 along the inner circumference 506. In other words, in such an embodiment, the sensor device 516 is opposite the counterbalance 522 (e.g., on opposite sides of the inner circumference 506 of the rim 500). By positioning the counterbalance 522 opposite the sensor device 516, a wheel on which the rim 500 is installed (e.g., the wheel 54 or 56) may be rebalanced for optimum performance: any weight added by the sensor device 516 at the first circumferential position 520 (e.g., relative to a rim without an installed sensor device 516) may be compensated for (e.g., counterbalanced) by the counterbalance 522. This ability to balance weight at opposite sides of the inner circumference 506 of the rim 500 allows the sensor device 516 to include larger batteries and execute more functions for a given battery life.

The receptacle 518 may be configured in any number of ways, such that attachment of the sensor device 516 to the rim 500 at the receptacle 518 is secure, and the sensor device 516 is flush with the radially inner portion 510 of the rim 500. For example, the rim 500 may be structurally reinforced around the receptacle 518 (e.g., with a thicker composite laminate around the receptacle 518). The rim 500 may be structurally reinforced around the receptacle 518 with a same material that the rim 500 is made of (e.g., a composite material), or one or more other materials. As another example, the receptacle 518 may have a complementary interface (e.g., corresponding flanges) with the sensor device 516 (e.g., a housing of the sensor device 516) to allow secure attachment of the sensor device 516 to the rim 500 at the receptacle 518.

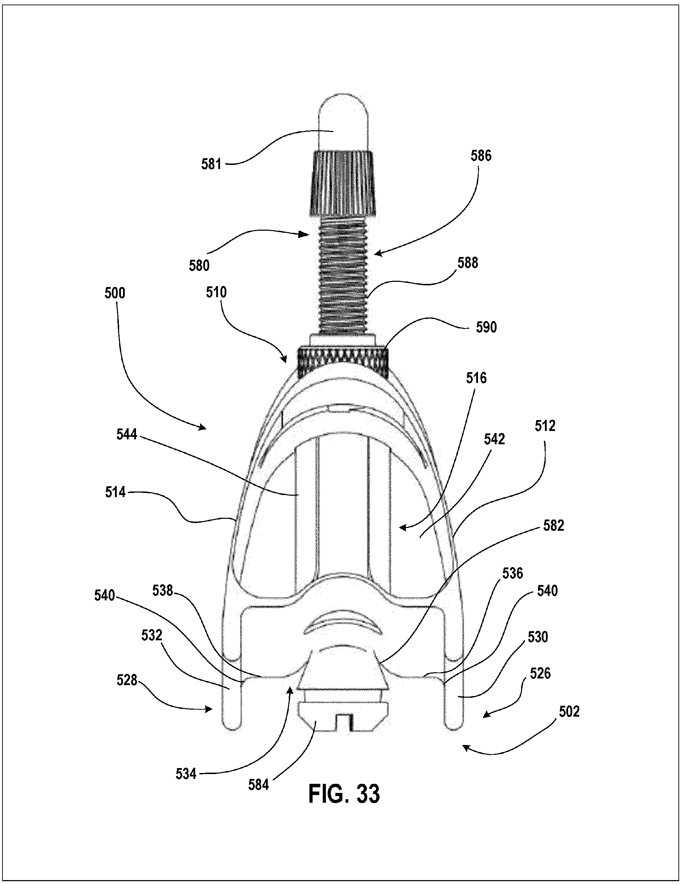

A sensor (e.g., a pressure sensor) of the sensor device 516 has a sensor port (e.g., a pressure sensor port) that is exposed to a portion of the rim that is remote from (e.g., at a distance relative to) the sensor device 516. For example, the pressure sensor port of the pressure sensor is fluidly connected to a tire bed at the tire engaging portion 502 of the rim 500, such that the pressure sensor may measure a tire pressure when the tire 120, for example, is installed on the rim 500. In other words, the pressure sensor port is blind, which reduces a likelihood of sealant obstruction of the sensor port. The pressure sensor port of the pressure sensor may be fluidly connected to the tire bed at the tire engaging portion 502 of the rim 500, for example, in any number of ways. The configuration of this fluid connection may depend on how the sensor device 516 is attached to the rim 500. The embodiment shown in FIGS. 33-47 and discussed below illustrates another embodiment of attachment of a sensor device 516 to a rim 500 and fluid connections between the sensor device 516 and the tire bed at the tire engaging portion 502 of the rim 500.

FIGS. 33-47 illustrate the sensor device 516, which may be attached (e.g., mounted) to the rim 500 and fluidly connected to, for example, a volume defined by the tire engaging portion 502 of the rim 500, according to a fourth embodiment.

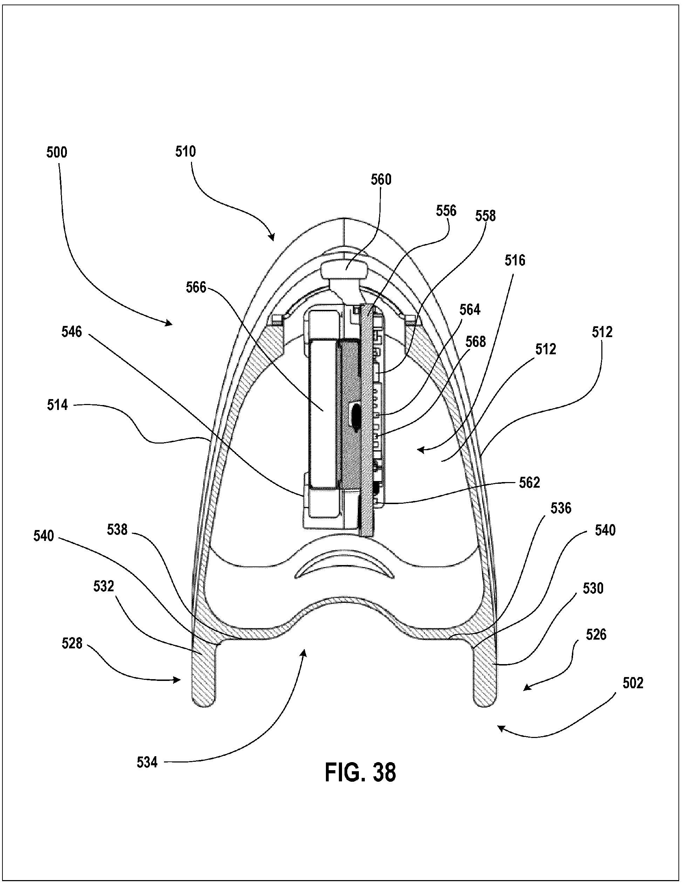

Referring to FIGS. 33 and 38, the radially outer tire engaging portion 502 includes a first tire retaining portion 526 and a second tire retaining portion 528 spaced apart from the first tire retaining portion 526. The first tire retaining portion 526 extends from the first sidewall 512, and the second tire retaining portion 528 extends from the second sidewall 514. The first sidewall 512 and the second sidewall 514 extend radially inward from the radially outer tire engaging portion 502.

The first tire retaining portion 526 includes a first tire retaining wall 530. In one embodiment, the first tire retaining portion 526 also includes a first protrusion (e.g., a first tire retaining feature) (not shown). The first protrusion may extend away from the first tire retaining wall 530. The first protrusion may be any number of shapes including, for example, a shape having a cross-section that is rectangular with a semi-circle cap. The first protrusion may extend circumferentially around the rim 500.

The second tire retaining portion 528 includes a second tire retaining wall 532. The second tire retaining wall 532 is opposite and spaced apart from the first tire retaining wall 530. In one embodiment, the second tire retaining portion 528 also includes a second protrusion (e.g., a second tire retaining feature) (not shown). The second protrusion may extend away from the second tire retaining wall 530, towards the first tire retaining portion 526. The second protrusion may be any number of shapes including, for example, a shape having a cross-section that is rectangular with a semi-circle cap. The second protrusion may extend circumferentially around the rim 500. The first protrusion and the second protrusion may be other shapes.

The rim 500 may seat a tire 120 (see FIG. 1) that is, for example, a tubeless clincher tire. The tire 120 includes beads that interact with the radially outer tire engaging portion 502 (e.g., the first tire retaining portion 526 and the second tire retaining portion 528) of the rim 500 to attach the tire 120 to and maintain the tire 120 on the rim 500. The beads may include any number of materials within the beads, such as, for example, carbon, a steel wire or aramid (e.g., Kevlar^{™}) fiber, to prevent the tire 120 from moving off of the rim 500. Due to the reinforcement with the carbon, steel wire or the Kevlar^{™} fiber, for example, the beads resist stretching from internal air pressure. Alternatively, the beads may be made of a same material as the tire 120 (e.g., rubber).

The radially outer tire engaging portion 502 also includes a well 534 positioned between the first tire retaining portion 526 and the second tire retaining portion 528 of the rim 500. The well 534 provides a volume into which the beads of the tire 120 may be placed when the tire 120 is being attached to the rim 500. As the tire 120 is inflated, the beads of the tire 120 move away from each other until the beads interact with the first tire retaining portion 526 and the second tire retaining portion 528, respectively. When inflated, the beads of the tire 120 abut the first tire retaining wall 530 and the second tire retaining wall 532, respectively. In one embodiment, the first tire retaining feature and the second tire retaining feature, for example, keep the beads of the tire 120 positioned within the radially outer tire engaging portion 502 (e.g., keep the beads of the tire 120 engaged with the first tire retaining wall 530 and the second tire retaining wall 532) and thus keep the tire 120 from blowing off the rim 500. The contact between the beads and the first tire retaining wall 530 and the second tire retaining wall 532, respectively, forms a seal between the inflated tire 120 and the rim 500.

The radially outer tire engaging portion 502 may also include ridges (e.g., bead bumps; a first bead bump and a second bead bump) on opposite sides of the well 534, respectively. A first shelf 536 (e.g., a first bead shelf) extends away from the first tire retaining wall 530 (e.g., between the first tire retaining wall 530 and the first bead bump), and a second shelf 538 (e.g., a second bead shelf) extends away from the second tire retaining wall 532 (e.g., between the second tire retaining wall 532 and the second bead bump). In one embodiment, curved transition regions 540 extend between the first shelf 536 and the first tire retaining wall 530, and the second shelf 538 and the second tire retaining wall 532, respectively. The bead bumps may be positioned on opposite sides of the well 534, respectively, and may be raised relative to the first shelf 536 and the second shelf 538, respectively. The bead bumps may help retain the tire 120 on the rim 500 if the tire 120 loses pressure.

As shown in FIGS. 33 and 38, the rim 500 is hollow, and a shape of a volume 542 within the rim 500 may be defined by the first sidewall 512, the second sidewall 514, the radially outer tire engaging portion 502 (e.g., the well 534, the first shelf 536, and the second shelf 538), and the radially inner portion 510. The volume 542 may be any number of sizes and/or shapes. When the sensor device 516 is installed in (e.g., attached to) the rim 500, at least a portion of the sensor device 516 is positioned within the volume 542.

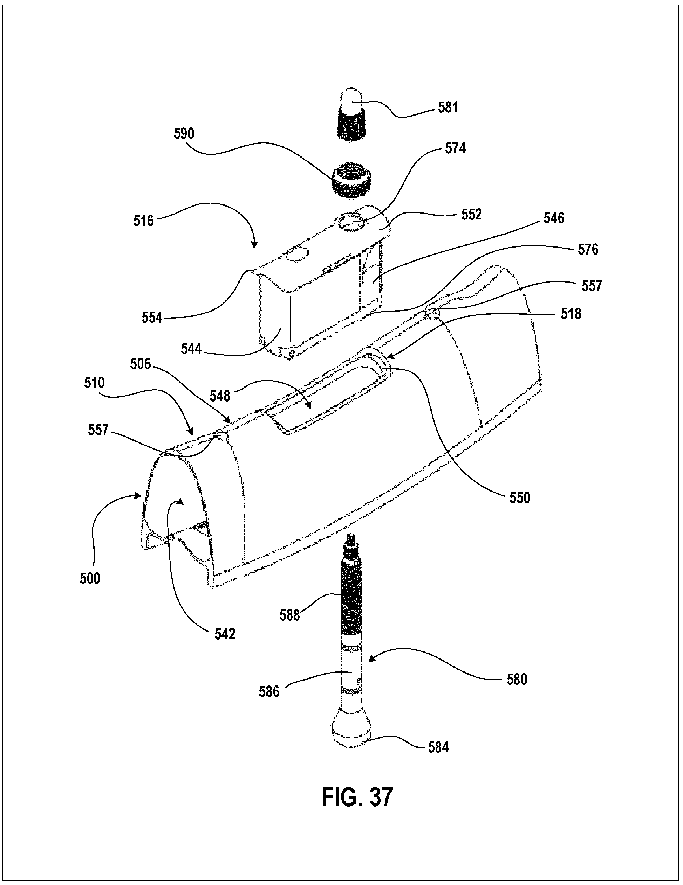

Referring to FIG. 37, the sensor device 516 includes a housing 544 and a battery housing 546. The receptacle 518 at the radially inner portion 510 of the rim 500 is formed by an opening 548 through the radially inner portion 510 of the rim 500, and a flange 550 that extends around the opening 548. The housing 544 of the sensor device 500 includes a cover 552 having a flange 554 that corresponds to (e.g., sized and shaped to interface with) the flange 550 of the receptacle 518, such that when the housing 544 of the sensor device 516 is installed on the rim 500, the cover 552 of the housing 544 of the sensor device 516 is flush with the radially inner portion 510 of the rim 500.

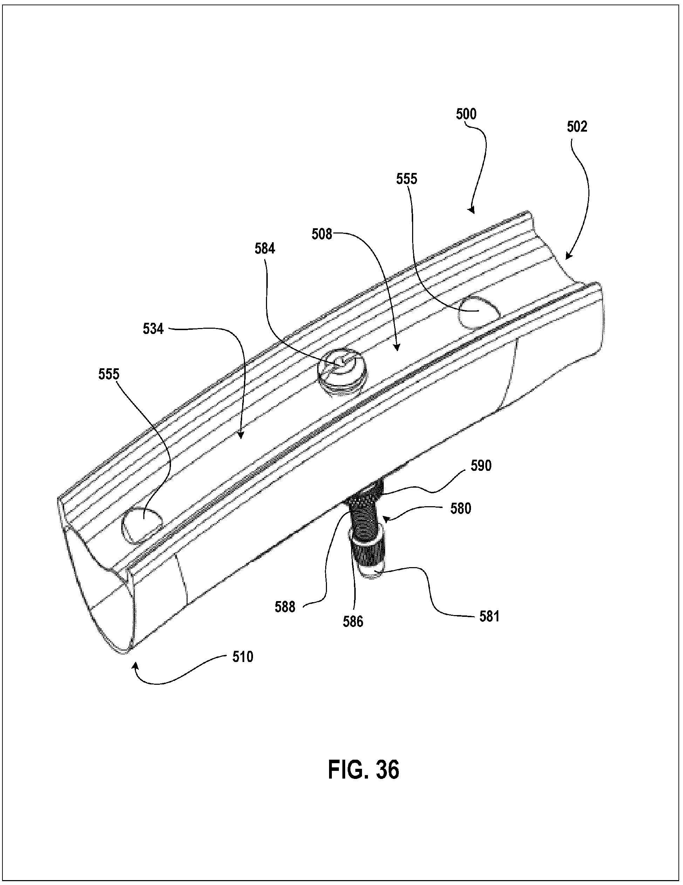

Referring to FIGS. 36 and 37, the receptacle 518 may be positioned at any number positions along the radially inner portion 510 of the rim 500. For example, the receptacle 518 may be positioned between adjacent holes in the rim 500 for spokes. For example, as shown in FIG. 36, the radially outer tire engaging portion 502 of the rim 500 may include spoke access holes 555 that extend through the radially outer tire engaging portion 502 (e.g., the well 534) of the rim 500. A number of spoke access holes 555 (e.g., twenty spoke access holes 555) may be regularly distributed around the outer circumference 508 of the rim 500, and the receptacle 518 may be centered between the adjacent pair of spoke access holes 555 of the number of spoke access holes 555 shown in FIG. 36.

Referring to FIG. 37, the radially inner portion 510 of the rim 500 may include nipple holes 557 that extend through the radially inner portion 510 of the rim 500. A number of nipple holes 557 (e.g., twenty nipple holes; corresponding to the number of spoke access holes 555) may be regularly distributed around the inner circumference 506 of the rim 500, and the receptacle 518 may also be centered between the adjacent pair of nipple holes 557 of the number of nipple holes 557 shown in FIG. 37. Other positioning of the receptacle 518 within the rim 500 may be provided.

The housing 544 of the sensor device 516 supports any number of components (e.g., electronic components) of the sensor device 516. For example, the housing 544 of the sensor device 516 supports the battery housing 546. Referring to FIGS. 38, 40-42, 45, and 46, the battery housing 546 supports a printed circuit board (PCB) 556, on which any number of electronic components may be disposed and electrically connected. As will be discussed in more detail below, referring to FIG. 38, the PCB 556 may support and electrically connect one or more processors (e.g., a microcontroller) 558, a light emitting diode (LED) 560 (see FIGS. 38 and 40-42), one or more antennas 562 (e.g., a radio), one or more sensors 564 (e.g., a pressure sensor, an accelerometer, a magnetometer, and/or a resistance measurement interface), one or more power sources 566 (e.g., a battery), a radio-frequency identification (RFID) reader 568 (e.g., a near field communication (NFC) reader or module), one or more other electronic components, or any combination thereof. The PCB 556 may support and electrically connect more, fewer, and/or different components of the sensor device 516.

The battery housing 546 of the sensor device 516 may support the PCB 556, for example, in any number of ways. For example, the PCB 556 may be attached to the battery housing 546 in any number of ways including, for example, with one or more fasteners (e.g., screws or nut/bolt combinations), welds, adhesive, tabs, flanges, other features, or any combination thereof. In one embodiment, the housing 544 of the sensor device 516 directly supports the PCB 556 (e.g., the PCB 556 is directly attached to the housing 544 of the sensor device 516).

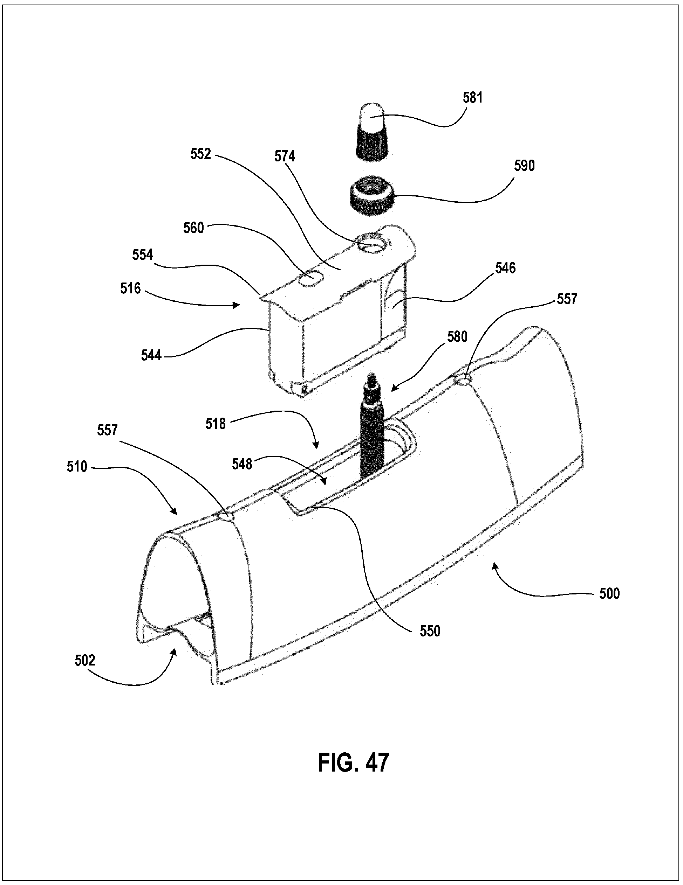

Referring to FIGS. 37 and 47, the housing 544 of the sensor device 516 may be made of any number of materials. For example, the housing 544 of the sensor device 516 may be made of a same material (e.g., a composite material) as the rim 500. In another example, the housing 544 of the sensor device 516 is made of two or more material. For example, the cover 552 of the housing 544 is made of a same material (e.g., a composite material) as the rim 500, and a remainder of the housing 544 is made of another material (e.g., a plastic). In yet another example, the housing 544 of the sensor device 516 is made of a different material (e.g., a plastic) than the rim 500 (e.g., a composite material).

The housing 544 of the sensor device 516 may be any number of sizes and/or shapes. The size and/or shape of the housing 544 may be defined by a size and a shape of the volume 542 within the rim 500, spoke spacing for a wheel on which the rim 500 is installed, and/or a number and size of components supported within the housing 544 of the sensor device 516. For example, a size of a power source (e.g., a coin cell battery) supported within the housing 544 may define a minimum size of the housing 544 (e.g., in one or more dimensions) of the sensor device 516.

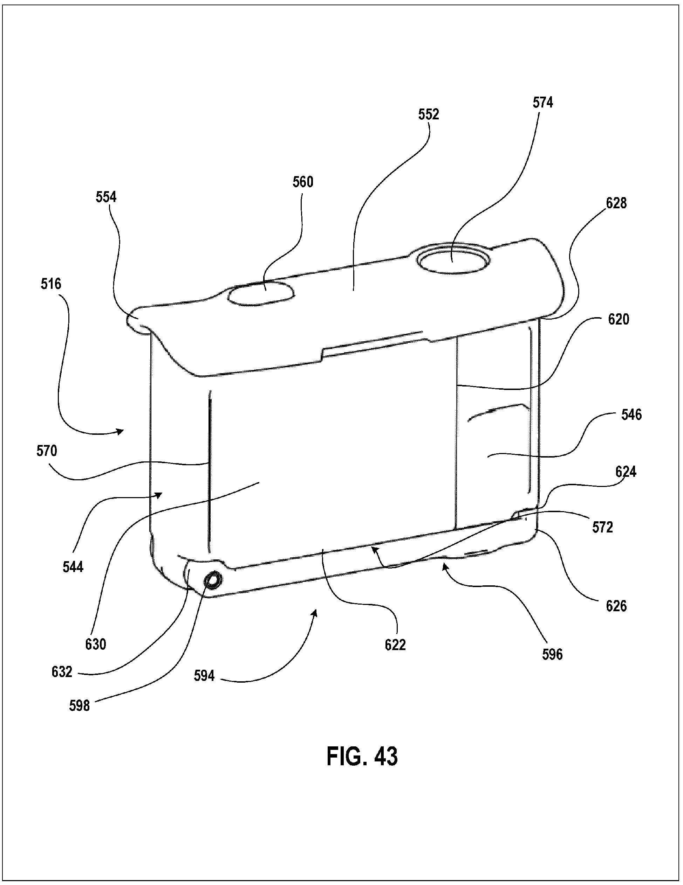

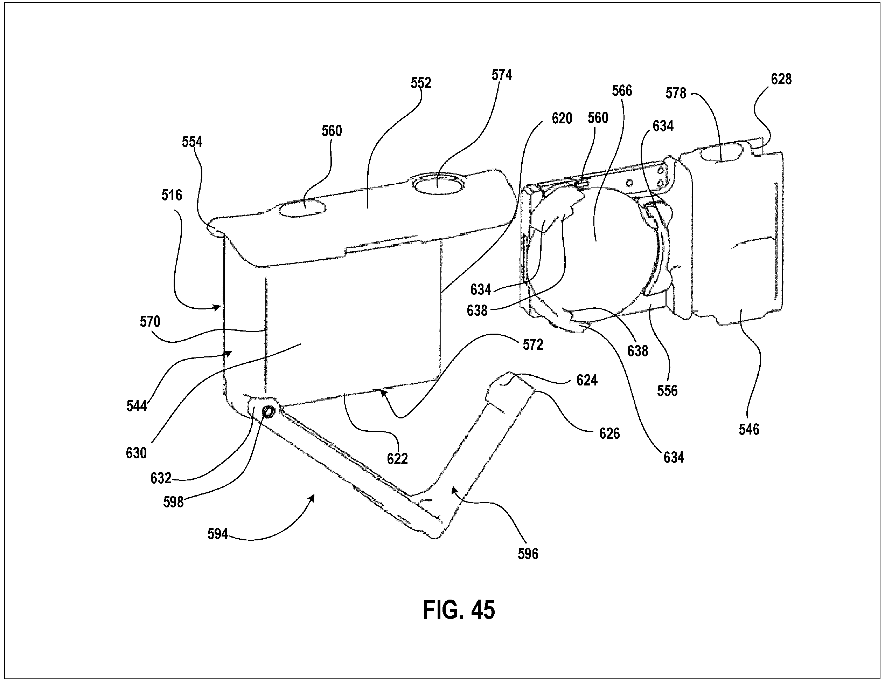

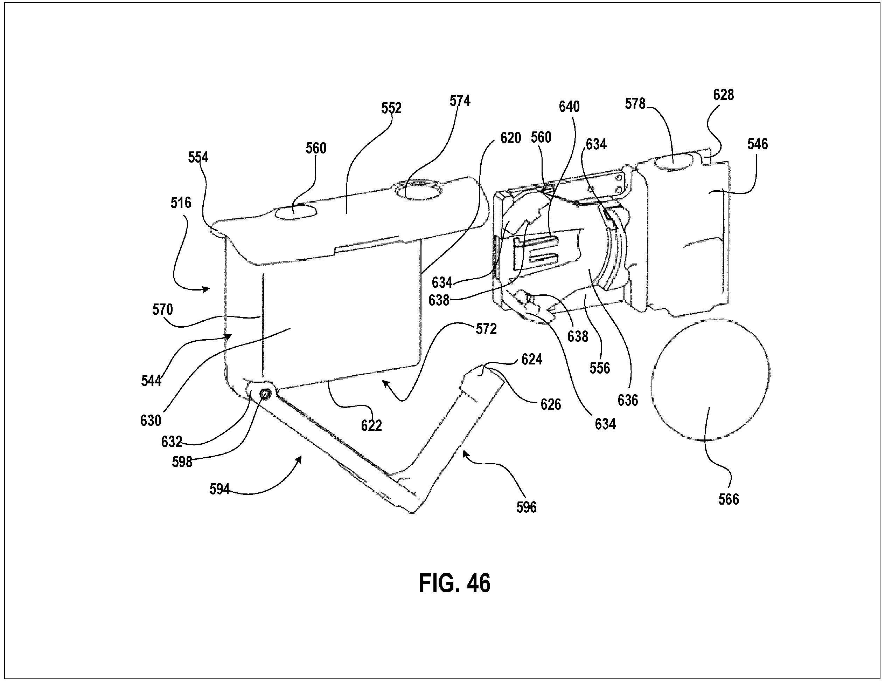

Referring to FIGS. 43-46, the battery housing 546 may be configured in any number of ways, and the housing 544 of the sensor device 516 may support the battery housing 546 in any number of ways. For example, referring to FIGS. 45 and 46, the housing 544 may include a hollow body 570 in which the battery housing 546 is positionable. The cover 552 is attached to the hollow body 570 of the housing 544 of the sensor device 516. In one embodiment, the cover 552 and the hollow body 570 form a single part. In one embodiment, the battery housing 546 may be a tray that is insertable into a corresponding opening 572 within the housing 544. For example, the opening 572 may extend through one or more sides of the hollow body 570 and into the hollow body 570 of the housing 544 of the sensor device 516.

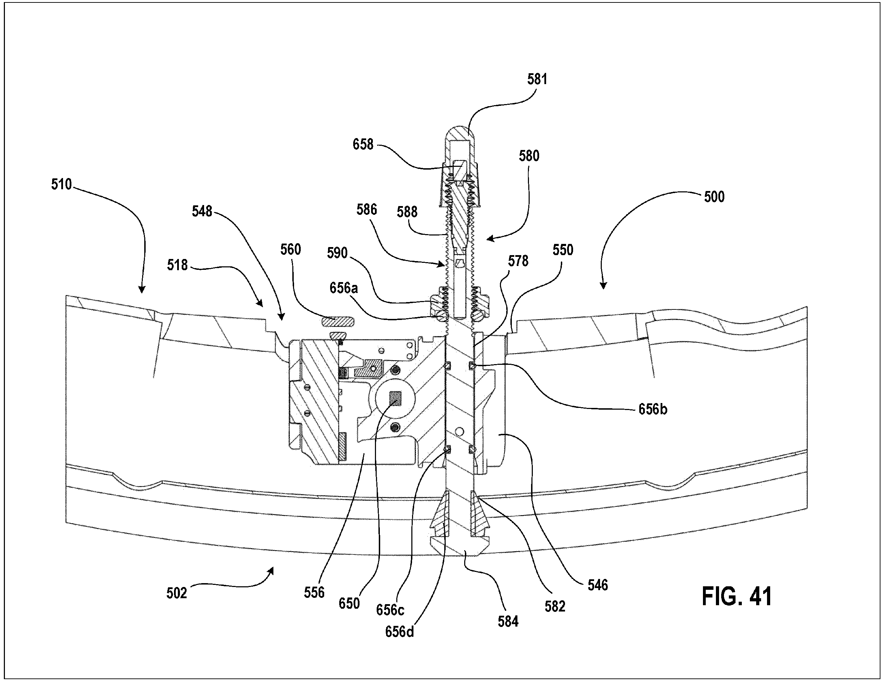

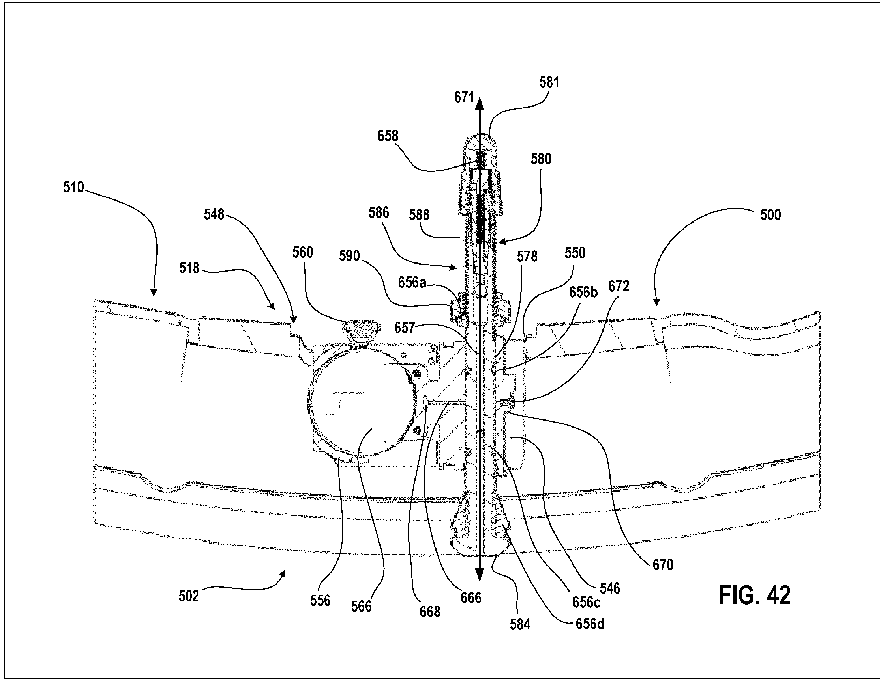

Referring to FIG. 37, the housing 544 of the sensor device 516 may include a first opening 574 through the housing 544 (e.g., through the cover 552 of the housing 544) and a second opening 576 through the housing 544 (e.g., through a latch rotatably attached to the hollow body 570 of the housing 544). Referring to FIGS. 41 and 42, the battery housing 546 may include an opening 578 that extends through the battery housing 546 (e.g., an air passage). When the battery housing 546 is positioned within the hollow body 570 of the housing, an air valve 580 may be positioned such that the air valve 580 extends through the first opening 574 through the housing 544, the air passage 578 through the battery housing 546, and the second opening 576 through the housing 544, such that a position of the battery housing 546 is fixed relative to the housing 544.

A length of the air passage 578 may extend in any number of directions relative to the housing 544 (e.g., the cover 552 of the housing 544) of the sensor device 516 when the battery housing 546 is installed within the housing 544 of the sensor device 516. For example, the length of the air passage 578 may extend a direction that is perpendicular to a surface (e.g., an outer surface) of the cover 552 of the housing 544 of the sensor device 516. In other embodiments, the length of the air passage 578 may extend in other direction relative to, for example, the outer surface of the cover 552 of the housing 544 of the sensor device 516.

Referring to FIG. 37, the air valve 580 may include a cap 581 that is connectable to the air valve 580 at an end of the air valve 580. The cap 581 may cover the end of the air valve 580, such that the cap 581 may prevent air from escaping a tire attached to the rim 500, prevent unintended engagement with the air valve 580, and/or prevent debris from getting into the air valve 580.

Referring to FIGS. 33-36 and 39, attachment of the air valve 580 to the rim 500 may also attach the sensor device 516 to the rim 500. The radially outer tire engaging portion 502 of the rim 500 includes an opening 582 that extends through the radially outer tire engaging portion 502. The opening 582 is, for example, within the well 534 of the radially outer tire engaging portion 502. In one embodiment, the rim 500 has a reinforced portion around the opening 582. The reinforced portion around the opening 582 through the rim 500 is, for example, a thicker composite laminate compared to other parts of rim 500. A length of the opening 582 is smaller than the length of the receptacle 518.

The air valve 580 includes, for example, a head 584 (e.g., a ported head) and a stem 586 (e.g., a hollow stem) with threads 588. The air valve 580 extends through the opening 582 through the radially outer tire engaging portion 502, such that the head 584 of the air valve 580 is in contact with (e.g., abuts) the reinforced portion around the opening 582 through the radially outer tire engaging portion 502, for example, and the stem 586 extends through the housing 544 of the sensor device 516 (e.g., through the first opening 574 through the housing 544, the air passage 578 through the battery housing 546, and the second opening 576 through the housing 544). The air valve 580 may be sized (e.g., have a length), such that when the air valve 580 is positioned with the head 584 of the air valve 580 abutting the radially outer tire engaging portion 502 of the rim 500, a portion of the stem 586 of the air valve 580 extends out of the sensor device 516 and away from the radially inner portion 510 of the rim 500. In other words, part of the stem 586 of the air valve 580 is outside of the rim 500, adjacent to the radially inner portion 510 of the rim 500 (e.g., the air valve 580 extends beyond the spoke engaging portion 510 of the rim 500).

Referring to FIGS. 33-36 and 39, the air valve 580 includes a fastener 590 (e.g., a knurled nut) configured to engage with the threads 588 of the stem 586 of the air valve 580. As the fastener 590 is turned and moves into contact with the cover 552 the housing 544 of the sensor device 516 via the threaded connection, the head 584 of the air valve 580 is pulled into contact with the radially outer tire engaging portion 502 (e.g., the reinforced portion around the opening 582 through the radially outer tire engaging portion 502), and the flange 554 of the cover 552 of the housing 544 of the sensor device 516 is pushed by the fastener 590 into contact with the flange 550 of the receptacle 518 within the rim 500.

The fastener 590 may be tightened against the cover 552 of the housing 544 of the sensor device 516 to tighten the cover 552 of the housing 544 against the rim 500. In one embodiment, when the flange 554 of the cover 552 is in contact with the flange 550 of the receptacle 518, the housing 544 of the sensor device 516 is at a distance relative to (e.g., remote from) the radially outer tire engaging portion 502 of the rim 500. In other words, when the sensor device 516 is attached to the radially outer tire engaging portion 502 of the rim 500 via the air valve 580, the housing 544 of the sensor device 516 is not in contact with the radially outer tire engaging portion 502 of the rim 500

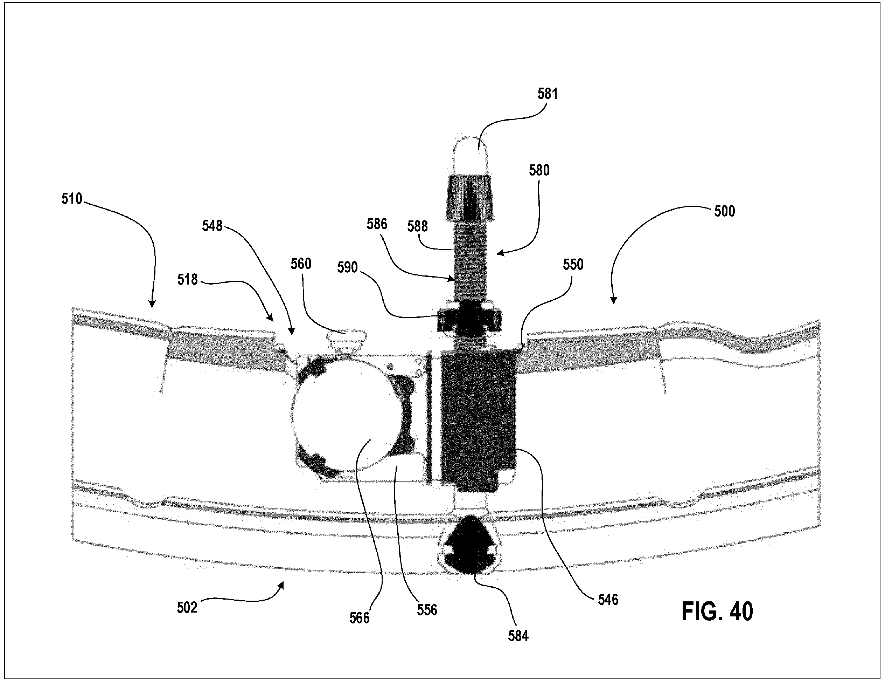

Referring to FIGS. 40-46, the battery housing 546 configured as a tray, for example, supports a battery 566 (e.g., a coin cell battery). The tray 546 may be any number of shapes and/or sizes. The tray 546 may be smaller than the housing 544 of the sensor device 516 and may be, for example, rectangular in shape. The tray 546 may be sized and/or shaped, such that the battery 566 fits within the tray 546. For example, a size of the battery 566 (e.g., a coin cell battery) supported within the tray 546 may define at least one minimum dimension of the tray 546. Other configurations may be provided.

The tray 546 may be made of any number of materials. For example, the tray 546 may be made of a same material (e.g., a composite material) as the rim 500 and/or the housing 544 of the sensor device 516. In another example, the tray 546 is made of two or more material. For example, a first portion of the tray 546 is made of a same material (e.g., a composite material) as the rim 500, and a remainder of the tray 546 is made of another material (e.g., a plastic). In yet another example, the tray 546 is made of a different material (e.g., a plastic) than the rim 500 (e.g., a composite material) and/or the housing 544 of the sensor device 516.

Referring to FIGS. 43-46, the housing 544 of the sensor device 516, for example, may include a locking mechanism 594 configured to retain (e.g., at least partially enclose) the tray 546 within the housing 544 of the sensor device 516 (e.g., the hollow body 570 of the housing 544) when the tray 546 is disposed within the housing 544 of the sensor device 516 (e.g., via insertion through the opening 572 through the one or more sides of the hollow body 570). For example, the locking mechanism 594 includes a latch mechanism 596 (e.g., a latch). The latch 596 is rotatably attached to the hollow body 570 of the housing 544 of the sensor device 516 via a pivot 598 (e.g., a rod or pin) that extends through the latch 596 and a wall of the hollow body 570 of the housing 544 of the sensor device 516. In other embodiments, other locking mechanisms may be used.

The latch 596 may be any number of shapes and/or sizes. For example, the latch 596 may be L-shaped. In other embodiments, the latch 596 may be other shapes including, for example, rectangular. The latch 596 may be any number of sizes. For example, the latch 596 may be sized to cover at least the opening 572 through the one or more sides of the hollow body 570.

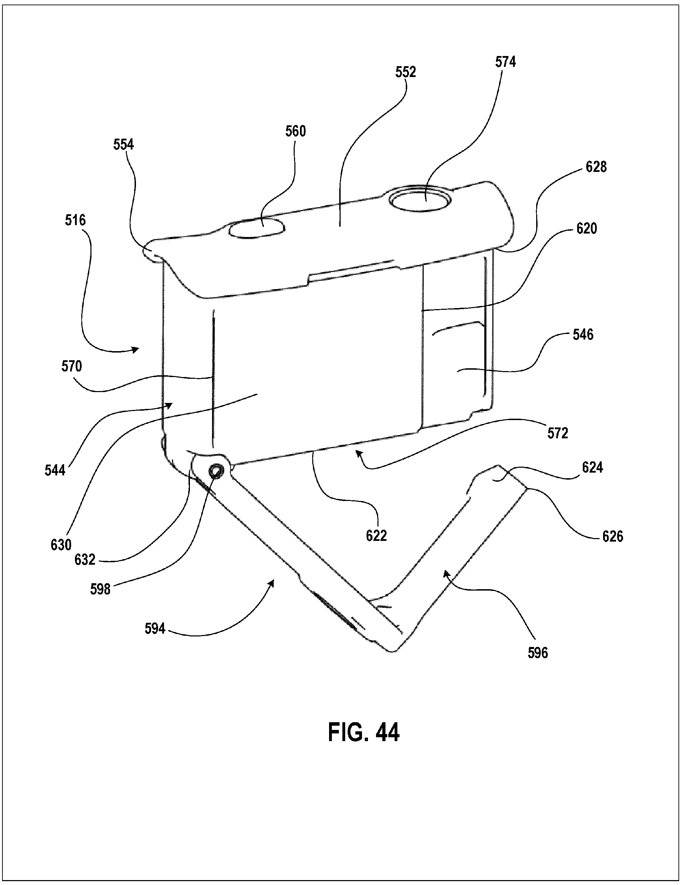

The latch 596 may be rotatable relative to the hollow body 570 of the housing 544, via the pivot 598, between a first rotational position (e.g., an open position; see FIGS. 44-46) and a second rotational position (e.g., a closed position; see FIG. 43). The opening 572 may extend through a first side 620 and a second side 622 of the hollow body 570. In the closed position, the L-shaped latch 596, for example, may cover at least the opening 575 through the second side 622 of the hollow body 570 and at least partially enclose the tray 546 within the hollow body 570 of the housing 544 of the sensor device 516. In an embodiment in which the shape of the latch 596 is rectangular, in the closed position, the hollow body 570 of the housing 544 may include the opening 572 through the first side 620 of the hollow body 570, and the latch 596 may cover the opening 572 through the first side 620 of the hollow body 570. In such an embodiment, the hollow body 570 of the housing 544 combined with the latch 596 in the closed position may enclose the tray 546 entirely.

The locking mechanism 594 is used for opening and closing the opening 572 through at least the second side 622 of the hollow body 570 of the housing 544, and releasing and retaining the tray 546 through the first side 620 of the hollow body 570. Accordingly, in the open position of the latch 596, the tray 546 may be moved (e.g., translated) in and out of the hollow body 570 of the housing 544 (e.g., when the air valve 580 is removed), and in the closed position of the latch 596, the tray 546 may be at least partially enclosed within the hollow body 570 of the housing 544. In one embodiment, the latch 596 includes a protrusion and/or a detent 624 (e.g., a protrusion extending away from a surface of the latch 596) at an end 626 of the latch 596. The locking mechanism 594 also includes a detent or protrusion 628 (e.g., a detent) in the housing 544 of the sensor device 516 into which the protrusion 624 of the latch 596, for example, is positioned when the latch 596 is in the closed position. The protrusion 624 of the latch 596 may be press fit in the detent 628 in the housing 544 of the sensor 516 device when the latch 596 is in the closed position.

The latch 596, the housing 544 of the sensor device 516, and/or the tray 546 may include any number of additional and/or alternative connectors, as part of the locking mechanism 594, to fix a position of the latch 596 relative to the hollow body 570 of the housing and enclose the battery 566 within the housing 544 of the sensor device 516 when the latch 596 is in the closed position. For example, the locking mechanism may include one or more other protrusions, detents, a notches, tabs, flanges, fasteners (e.g., screws or nut/bolt combinations), and/or other connectors at the latch 596, the housing 544 of the sensor device 516, and/or the tray 546.

Referring to FIG. 43, a user may use force to release a connection between the protrusion 624 of the latch 596 and the detent 628 in the housing 544 of the sensor device 516 when the latch 596 is in the closed position, freeing the latch 596 to rotate relative to the hollow body 570 of the housing 544 and move towards the open position of the latch 596. Referring to FIG. 44, once the connection between the protrusion 624 of the latch 596 and the detent 628 in the housing 544 of the sensor device 516 is released, the latch 596 is free to rotate, via the pivot 598, relative to the hollow body 570 of the housing 544 of the sensor device 516. With the latch 596 in the position relative to the hollow body 570 of the housing 544 shown in FIG. 44 (e.g., the open position), and with the sensor device 516 removed from the rim 500 and the air valve 580 (e.g., which also locks a position of the tray 546 relative to the hollow body 570 of the housing 544), the tray 546 is removable from the hollow body 570 of the housing 544.

As shown in the embodiment of FIGS. 43-46, the hollow body 570 of the housing 544 of the sensor device 516 may be shaped (e.g., include a recess) at the pivot 598, such that part at least part of the latch 596 (e.g., an end 632 of the latch 596) is recessed relative to an outer surface 630 of the hollow body 570 of the housing 544. The end 632 of the latch 596 may be shaped (e.g., irregularly shaped), such that the hollow body 570 of the housing 544 acts as a stop with respect to rotation of the end 632 of the latch 596, and thus the latch 596 overall, when the latch 596 is in the open position. In other words, the combination of the shape of the end 632 of the latch 596 with the shape of the recess of the hollow body 570 of the housing 544, within which the end 632 of the latch 596 rotates, prevents overrotation of the latch 596 relative to the hollow body 570 of the housing 544.

In one embodiment, the locking mechanism 594 may include additional locking features configured to lock the tray 546 relative to the hollow body 570 of the housing 544 of the sensor device 516. For example, the locking mechanism 594 may also include one or more protrusions, detents, tabs, flanges, fasteners, other connectors, or any combination thereof at the tray 546 and/or the housing 544 (e.g., the hollow body 570 of the housing 544) of the sensor device 516. In such an embodiment, such a connection between the tray 546 and the hollow body 570 of the housing 544 may be released prior to the tray 546 being movable (e.g., translatable) relative to the hollow body 570.

Referring to FIG. 45, once the locking mechanism 594 is released (e.g., unlocked), the tray 546 is free to move (e.g., translate) relative to the hollow body 570 of the housing 544 of the sensor device 516, and is removable from the housing 544 of the sensor device 516. Referring to FIG. 46, the battery 566 is removable from the tray 546 once the tray 546 has been removed from the housing 544 of the sensor device 516. For example, the battery 566 may be replaced with a new battery when the battery 566 is dead.

Referring to FIG. 46, the tray 546 includes battery supports 634 that extend away from a battery support surface 636 on which the battery 566 is positioned. For example, the tray 546 includes three battery supports 634 spaced around a circumference of the battery 566 when the battery 566 is housed by the tray 546. The battery supports 634 may include tabs 638 at ends of the battery supports 634, respectively. At least a portion of the battery supports 634 (e.g., two of the battery supports) may be flexible, such that the portion of the battery supports 634 flex away from the battery 566 as the battery 566 is being pressed onto the battery support surface 636, and return back towards the battery 566 when the battery 566 is positioned on the battery support surface 636. The tabs 638 then fix a position of the battery 566 relative to the battery support surface 636, and thus the tray 546. The battery 566 may be press fit on the tray 546, such that a user may apply a force to the battery 566 to remove the battery 566 from the tray 546.

The tray 546 includes electrical terminals 640 supported by the PCB 556 that extend through the battery support surface 636. The electrical terminals 640 come into contact with the battery 566 within the tray 546 as the battery 566 is pressed onto the battery support surface 636 of the tray 546. The electrical terminals 640 may also be electrically connected to electronic components of the sensor device 516 via the PCB 556, such that the battery 566 powers the electronic components of the sensor device 516 when the tray 546 is positioned on the battery support surface 636 of the tray 546. For example, the battery 566 may power any number of electrical components supported by and electrically connected to the PCB 556 via the electrical terminals 640. As discussed further below, the battery 566 may power a pressure sensor 650 and the LED 560 of the sensor device 516. In other embodiments, the battery 566 may power additional and/or different electrical components of the sensor device 516,

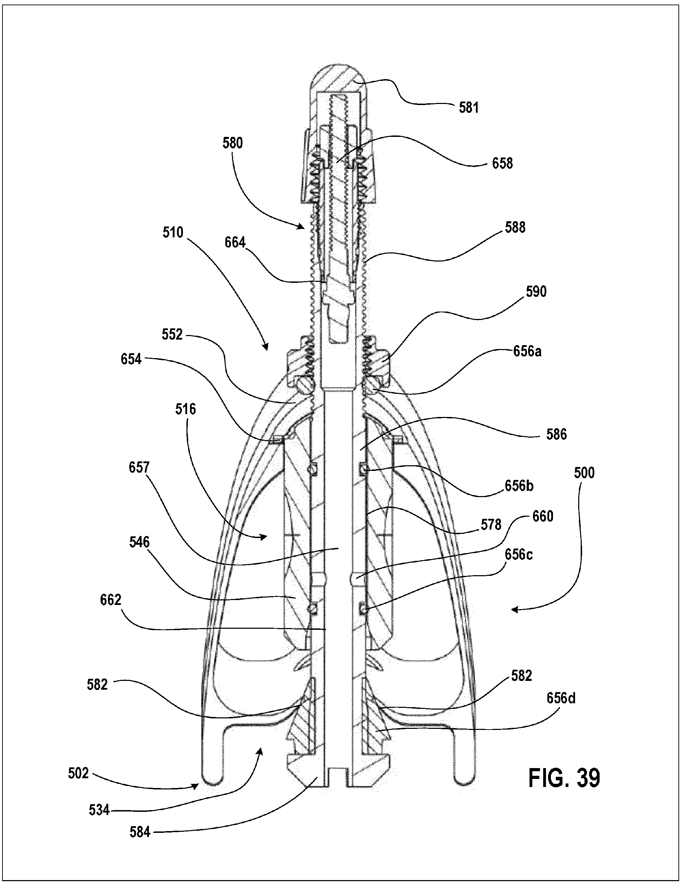

Referring to FIGS. 39, 41, and 42, the cover 552 of the housing 544 of the sensor device 516 and the air valve 580 through the tray 546 of the sensor device 516 may act as water-tight sealing mechanisms for the sensor device 516. Referring to FIG. 39, the sensor device 516 may include one or more seals 654 (e.g., a seal 654) configured to seal an interface between the sensor device 516 and a remainder of the rim 500 at the receptacle 518 within the rim 500. For example, the sensor device 516 includes the seal 654 at the cover 552 of the housing 544 to prevent moisture ingress when the sensor device 516 is installed within the receptacle 518 of the rim 500. The seal 654 may be sized and shaped based on a size and shape of the flange 554 of the cover 552. For example, the seal 654 may be sized and shaped to match a size and a shape of the flange 554 of the cover 552 of the housing 544. The seal 654 may be any number of different types of seals including, for example, a gasket or an O-ring configured to create a water-tight seal when the sensor device 516 is installed within the receptacle 518 of the rim 500.

Referring to FIGS. 41 and 42, the air valve 580 may also include one or more seals 656 disposed around the air valve 580 at one or more locations along the air valve 580, respectively. For example, the air valve 580 may include a first seal 656a disposed between the knurled nut 590 and the cover 552 of the housing 544. The air valve 580 may also include a second seal 656b and a third seal 656c located at positions along the air valve 580, such that the second seal 656b and the third seal 656c are within the air passage 578 through the battery housing 546 (e.g., the tray) and contact the battery housing 546 when the sensor device 516 and the air valve 580 are installed at the receptacle 518 within the rim 500. The air valve 580 may also include a fourth seal 656d underneath the head 584 of the air valve 580, such that the fourth seal 656d is disposed between the radially outer tire engaging portion 502 (e.g., the reinforced portion around the opening 582 through the radially outer tire engaging portion 502) and the head 584 of the air valve 580 when the sensor device 516 and the air valve 580 are installed at the receptacle 518 within the rim 500.

In other embodiments, additional and/or different seals may be disposed in other locations to provide the water-tight seal. For example, in one embodiment, the tray 546 and/or the latch 596 includes one or more seals (e.g., a gasket). As another example, the air valve 580 may include more, fewer, and/or different seals, and/or the first seal 656a, the second seal 656b, the third seal 656c, and/or the fourth seal 656d may be provided in different positions along the air valve 580, respectively.

Referring to FIG. 39, the sensor device 516 (e.g., the housing 544 of the sensor device 516) may be attached (e.g., mounted or anchored) to the rim 500 with the air valve 580 acting as a fastener. The sensor device 516 may, for example, be attached to the radially outer tire engaging portion 502 with the air valve 580. In the embodiment shown in FIG. 39, for example, the sensor device 516 may be attached to the radially outer tire engaging portion 502 at the well 534 of the rim 500 with the air valve 580 acting at the fastener.

The air valve 580 may be any number of different types of air valves including, for example, a Presta valve, a Schrader valve, or a Woods valve. In the embodiment shown in FIG. 39, the air valve 580 is a Presta valve.

The air valve 580 extends through the air passage 578 (e.g., a first air passage) through the battery housing 546 (e.g., the tray) and is ported. The air valve 580 includes a passage 657 (e.g., a central passage) along a length of the air valve 580. The air valve 580 includes a depressible pin 658 disposed within the central passage 657 of the air valve 580. When a user depresses the depressible pin 658 (e.g., moves the depressible pin in a direction towards the head 584 of the air valve 580 into an open position of the air valve 580), the volume defined by the radially outer tire engaging portion 502 of the rim 500 (e.g., a tire cavity) is fluidly connected to the environment outside of the rim 500. If the tire cavity is under pressure, when the air valve 580 is in the open position, fluid (e.g., air) may move from the radially outer tire engaging portion 502, through the central passage 657 of the air valve 580, and out of the rim 500.

The central passage 657 through the air valve 580 also fluidly connects the tire cavity with the pressure sensor 650 of the sensor device 516. Referring to FIG. 39, the air valve 580 includes an opening 660 that extends through a wall 662 of the air valve 580 that defines the central passage 657 of the air valve 580. For example, the opening 660 extends through opposite sides of the wall 662 in a direction perpendicular to a direction in which the central passage 657 extends. In other embodiments, the opening 660 may extend in other directions relative to the direction in which the central passage 657 extends.

When a force is not applied to the depressible pin 658 from outside of the rim 500 (e.g., when the depressible pin 658 is not depressed) and the tire cavity is under pressure, the pressurized fluid (e.g., air) within the tire cavity and the air valve 580 forces the depressible pin 658 against a shelf 664 (e.g., a flange, a ridge, an extension) within the central passage 657 through the air valve 580, and the air valve 580 is in a closed position. The opening 660 through the wall 662 of the air valve 580 may be positioned along the length of the air valve 580, such that the opening 660 is disposed between the second seal 656b and the third seal 656c when the sensor device 516 and the air valve 580 are installed at the receptacle 518 within the rim 500. Thus, when the air valve 580 is in the closed position, the tire cavity may be fluidly connected to the first air passage 578 through the battery housing 546 via the opening 660 that extends through the wall 662 of the air valve 580.

Referring to FIG. 41, the battery housing 546 supports the pressure sensor 650 at a distance relative to the first air passage 578 through the battery housing 546. Referring to FIG. 42, the battery housing 546 also includes a second air passage 666 that extends between a port 668 (e.g., a pressure chamber) of the pressure sensor 650 and the first air passage 578. The second air passage 666 may be any number of shapes and/or sizes. For example, the second air passage 666 may be tubular and has a smaller diameter than the first air passage 578. The second air passage 666 (e.g., a length of the second air passage 666) may extend in any number of directions. For example, the length of the second air passage 666 may extend in a direction perpendicular to a direction in which the length of the first air passage 578 extends.

In the embodiment shown in FIG 42, the second air passage 666 extends beyond the first air passage 578 and through an outer surface 670 of the battery housing 546. The battery housing 546 may include a cover 672 (e.g., a removable cap or plug) that covers the second air passage 666 at the outer surface 670 of the battery housing 546. The cover 672 may be removed, and the second air passage 666 may be cleaned of any debris.

When the air valve 580 is in the closed position, the central passage 657 through the air valve 580, the opening 660 through the wall 662 of the air valve 580, the first air passage 578, and the second air passage 666 fluidly connect the pressure sensor 650 (e.g., the port 668 of the pressure sensor 650) of the sensor device 516 to the tire cavity. The pressure sensor 650 is thus configured to measure a pressure of a fluid (e.g., air) within the tire cavity via the second air passage 666, the first air passage 578, the opening 660 through the wall 662 of the air valve 580, the central passage 657 through the air valve 580, and the ported head 584 of the air valve 580.

The air valve 580 partially (e.g., with the first air passage 578 and the second air passage 666) forms a blind pressure tap that exposes the port 668 of the pressure sensor 650 to the atmosphere within a volume between the first tire retaining portion 526 and the second tire retaining portion 528 of the radially outer tire engaging portion 502 of the rim 500 (e.g., the pressurized tire cavity). The blind nature of the exposure to the pressurized tire cavity, for example, helps prevent sealant contained within a tire attached to the rim 500 or sealant added through the air valve 580, for example, from being passed to the pressure sensor 650 of the sensor device 516. This prevents clogging of the pressure sensor 650, for example, minimizing inaccurate measurements by the pressure sensor 650. Further, as air, for example, flows through the central passage 657 through the air valve 580 (see arrow 671) to inflate or deflate a tire attached to the rim 500, the air flow removes any sealant that may have leaked into the port 668 where the pressure sensor 650 is located. The angle and diameter of the second air passage 666 relative to a direction of airflow through the air valve 580 maximizes removal of leftover sealant. For example, the length of the second air passage 666 extending in the direction perpendicular to the direction of airflow through the air valve 580 maximizes removal of leftover sealant.

Referring to FIGS. 40-42, the battery housing 546 (e.g., the PCB 556) supports the LED 560, and the battery 566 powers the LED 560 via, for example, the PCB 556. The pressure sensor 650 may measure a pressure in the pressurized tire cavity continuously or at a predetermined interval. The microcontroller 558, which is in communication with the pressure sensor 650, may identify the measured pressure (e.g., receive the measured pressure from the pressure sensor 650) and compare the measured pressure to one or more predetermined pressures. The sensor device 516 may include a memory (e.g., supported by the PCB 556) in communication with or part of the microcontroller 558, and the memory may store the one or more predetermined pressures.

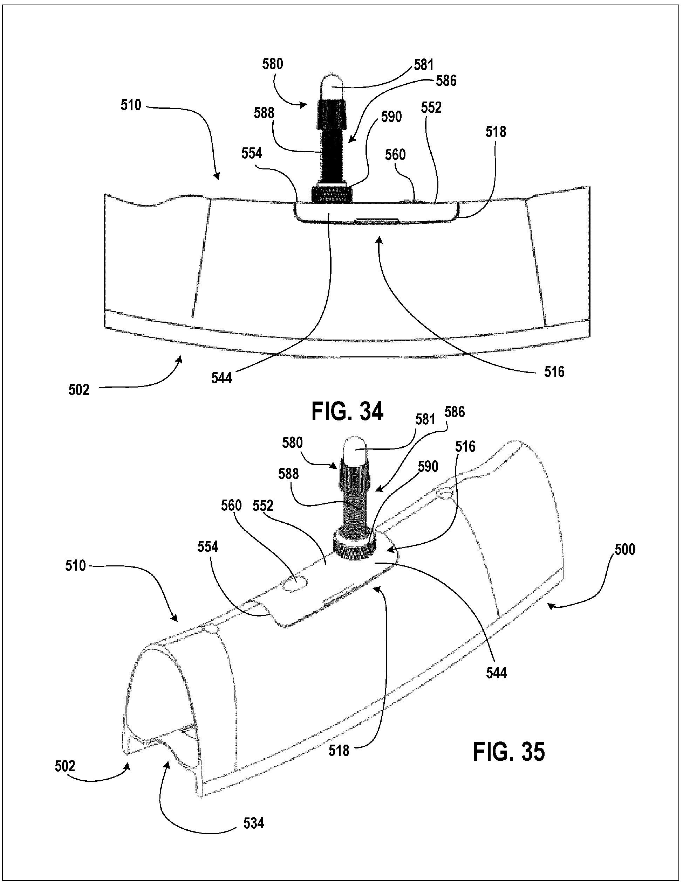

In one embodiment, the one or more predetermined pressures may, for example, include a predetermined minimum threshold pressure and a predetermined maximum threshold pressure. For example, the microcontroller 558 may compare the measured pressure to the predetermined minimum threshold pressure and the predetermined maximum threshold pressure. If, based on the comparisons, the measured pressure is greater than (e.g., or equal to) the predetermined minimum threshold pressure and less than (e.g., or equal to) the predetermined maximum threshold pressure, the microcontroller 558 may instruct the LED 560 to display green light. If, based on the comparisons, the measured pressure is less than the predetermined minimum threshold pressure or greater than the predetermined maximum threshold pressure, the microcontroller 558 may instruct the LED 560 to display red light. In other words, the microcontroller 558 may instruct the LED 560 to display green light when, based on the comparisons, the measured pressure is within a predetermined pressure range, and the microcontroller 558 may instruct the LED 560 to display red light when, based on the comparisons, the measured pressure is outside of the predetermined pressure range. The microcontroller 558 may compare the measured pressure to the one or more predetermined pressures at the same interval or a different interval (e.g., less frequently) as the pressure is measured. In other embodiments, the microcontroller 558 may compare the measured pressure to additional, fewer, and/or different pressures, and/or the microcontroller 558 may instruct the LED 560 to generate additional, fewer, and/or different colors of light. Referring to FIGS. 34 and 35, the LED 560 is visible at the spoke engaging portion 510 of the rim 500, such that the measured pressure in the pressurized tire cavity may be easily monitored by a user.

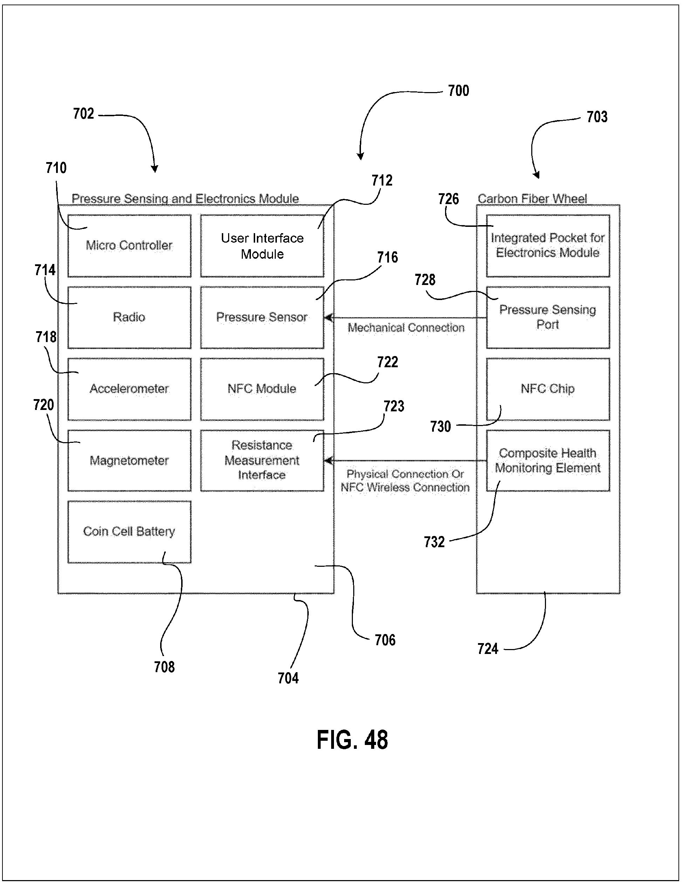

FIG. 48 shows one embodiment of a wheel assembly 700 for a bicycle (e.g., the bicycle 50) that includes a sensor device 702 and a wheel 703 (e.g., wheel 54 or 56). The sensor device 702 may be the first embodiment of the sensor device 200 of FIGS. 3-14, the second embodiment of the sensor device 300 of FIGS. 16-23, the third embodiment of the sensor device 400 of FIGS. 24-31, the fourth embodiment of the sensor device 516 of FIGS. 33-47, or another sensor device. The sensor device 702 includes a housing 704 that supports a PCB 706, one or more electronic components, and one or more power sources 708 (e.g., a coin cell battery). As discussed above, the coin cell battery 708, for example, may be supported by a battery housing (e.g., a tray), and the battery housing may be supported by the housing 704 (e.g., removably attached to the housing 704). The one or more power sources 708 may power any number of the one or more electronic components of the sensor device 702. Other configurations of the battery housing may be provided.

The one or more electronic components may include electronic components supported and electrically connected by the PCB 706, and electronic components supported by the housing 704 and, for example, electrically connected to the electronic components of the PCB 706 via one or more conductors (e.g., wires and soldering). The one or more electronic components may include any number of different types of electronic components including, for example, one or more processors 710 (e.g., a microcontroller), a user interface module 712 (e.g., a light emitting diode (LED)), a radio 714 (e.g., an antenna), one or more sensors including, for example, a pressure sensor 716, an accelerometer 718, and a magnetometer 720, a radio-frequency identification (RFID) reader 722, and a resistance measurement interface 723. The one or more electronic components may include more, fewer, and/or different electronic components. For example, the one or more electronic components may include additional sensors including, for example, a wheel speed sensor. As another example, the one or more electronic components may include a memory.

The one or more processors 710 (e.g., a processor) may include a general processor, digital signal processor, an application specific integrated circuit (ASIC), field programmable gate array (FPGA), analog circuit, digital circuit, combinations thereof, or other now known or later developed processor. The processor 710 may be a single device or combinations of devices, such as through shared or parallel processing.

The memory, for example, may be a volatile memory or a non-volatile memory. The memory may include one or more of a ROM, a RAM, a flash memory, an EEPROM, or other type of memory. The memory may be removable from the sensor device 702, such as an SD memory card. In a particular non-limiting, exemplary embodiment, a computer-readable medium may include a solid-state memory such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device. Accordingly, the disclosure is considered to include any one or more of a computer-readable medium and other equivalents and successor media, in which data or instructions may be stored.

The memory is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding, or carrying a set of instructions for execution by a processor or that cause a computer system to perform any one or more of the methods or operations disclosed herein.

The one or more power sources 708 include a portable power source that may be stored internal to the sensor device 702 or stored external to the sensor device 702 and communicated to the sensor device 702 through a power conductive cable. The one or more power sources 708 may involve the generation of electric power, for example, using a mechanical power generator, a fuel cell device, photo-voltaic cells, piezoelectric, or other power-generating devices. The one or more power sources 708 may include a battery (e.g., the coin cell battery) such as a device consisting of two or more electrochemical cells that convert stored chemical energy into electrical energy. The one or more power sources 708 may include a combination of multiple batteries or other power providing devices. Specially fitted or configured battery types, or standard battery types may be used.

The user interface module 712 may be a user interface that communicates information to a rider. For example, the user interface module 712 may be a multicolor LED 712 configured to communicate a status of at least one sensor (e.g., the pressure sensor 650) of the one or more sensors of the sensor device 702. The LED 712 may, for example, be controlled by the processor and may be visible to the rider at a radially inner portion of a rim (e.g., rim 500 or the rim 122) to which the sensor device 702 is attached. The LED 712 may be part of a larger user interface that includes one or more additional displays including, for example, an LCD panel, an LED screen, a TFT screen, or another type of display. Such a user interface may also include audio capabilities or speakers. In other embodiments, the user interface may also include one or more buttons, a rocker switch, a touch pad, a voice recognition circuit, or another device or component for communicating data between a user and the sensor device 702. The user interface may also include a touch screen that may be capacitive or resistive. The user interface may include additional, fewer, and/or different components.

The radio 714 (e.g., the antenna) is a communication device configured to transmit and receive (e.g., with a communication interface) data such as measurement data (e.g., tire pressure data, wheel speed data, wheel odometer data, wheel lean and yaw data, product data, road feedback data), rim composite health signals, status signals (e.g., charge status for the one or more power sources 708), LED status indicators, operation signals, and/or other signals.

The radio 714 provides for data and/or signal communication from the sensor device 702 to another component of the bicycle, or an external device such as a mobile phone or other computing device. The radio 714 communicates the data using any operable connection. An operable connection may be one in which signals, physical communications, and/or logical communications may be sent and/or received. An operable connection may include a physical interface, an electrical interface, and/or a data interface. The radio 714 may be configured to communicate wirelessly, and as such include one or more antennae. The radio 714 provides for wireless communications in any now known or later developed format.

In one embodiment, the sensor device 702 includes more than one communication device (e.g., a plurality of antennas 714) in communication with more than one communication interface, respectively. The communication interfaces communicate the data using any operable connection. At least one of the communication interfaces may provide for wireless communications through an antenna of the plurality of antennas 714 in any now known or later developed format. The wireless communications may be communicated using any technique, protocol, or standard. For example, Institute of Electrical and Electronics Engineers ("IEEE") 802.11 standards, IEEE 802.15.1 or BLUETOOTH^{®} standards, and/or ANT^{™} or ANT+^{™} standards may be used. In some embodiments, however, wireless communications may be communicated over a proprietary protocol, such as one that operates on top of the physical layer of the IEEE 802.15.4 wireless protocol. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

The pressure sensor 716 may be any number of different types of pressure sensors. For example, the pressure sensor 716 may be a capacitive sensor, a piezoelectric sensor, an optical sensor, a MEMS sensor, a resistive sensor, an aneroid barometer sensor, a manometer sensor, a vacuum pressure sensor, a sealed pressure sensor, or another type of sensor.

The accelerometer 718 may be any number of different types of accelerometers. In one embodiment, the accelerometer 718 is a microelectromechanical system (MEMS) accelerometer (e.g., having three sense axes orthogonal to each other), though other types of accelerometers may be used. The accelerometer 718 may be supported within the housing 704 of the sensor device 702 (e.g., on the PCB 706 of the sensor device 702), such that the accelerometer 718 is offset relative to a radius from a center of an axis of rotation of the wheel 703 on which the sensor device 702 is installed (e.g., according to axis angle offset positioning).

The accelerometer 718 (e.g., a MEMS accelerometer) may have a predefined range of accelerations that the accelerometer 718 may detect. Outside of the predefined range, the accelerometer 718 may become saturated and may not provide accurate data. Centripetal force generated by a wheel (e.g., the wheel 703) spinning may be used to back-calculate ground speed if a radial distance of an accelerometer relative to the center of the axis of rotation of the wheel (e.g., the wheel 703), and a diameter of a tire attached to the wheel are known. Centripetal forces generated at, for example, a rim of the wheel may saturate an accelerometer positioned such that one of the three axes of sensing is oriented radially towards the center of the axis of rotation at typical riding speeds. For example, a MEMS accelerometer with a +/-16 g range may become saturated at riding speeds above 7 m/s.

The accelerometer 718 with axis angle offset positioning attenuates a value of the accelerometer 718 in the radial direction. This attenuation may be defined by the equation of Y = X cos(a), where X is a radial acceleration, Y is an attenuated measurement in the offset axis, and a is an axis offset angle from radial. The axis angle offset allows the MEMS accelerometer 718 to measure wheel speeds a number of times faster than a radially oriented accelerometer, as is typical in the prior art.

A tradeoff of the axis angle offset positioning of the accelerometer 718 is a reduction in sensor sensitivity at low speeds. Because centripetal force increases by a square of velocity, there may be a speed above which a reduction in sensitivity may be outrun by an increase in centripetal force sensitivity per unit of speed increase.

Absolute acceleration readings (e.g., from the accelerometer 718) may not provide most accurate wheel speed measurements, as the accuracy depends on careful measurement of the radial distance of the accelerometer 718 to the axis of rotation, which may vary between different wheel models and different wheels of a same wheel model. With axis angle offset positioning of the accelerometer 718, the axis offset angle from radial a is also to be accurately known.

In one embodiment, the processor 710 may determine wheel speed of the wheel (e.g., the wheel 703) using data from the accelerometer 718 and earth's acceleration due to gravity. The processor 710 may determine, based on the data from the accelerometer 718, when orientation of the accelerometer 718 changes from up to down (e.g., a cycle time). The processor 710 may determine the wheel speed of the wheel based on the determined cycle time and the diameter of a tire attached to the wheel. This would avoid the need for an accurate measurement of the radial distance of the sensor to the axis of rotation, and the axis offset angle from radial a.

In one embodiment, for such a determination of wheel speed based on the determined cycle time, a data collection frequency of the accelerometer 718 may be at least four times a wheel rotation frequency (e.g., at least four times a maximum wheel rotation frequency), and a sensitivity of the accelerometer 718 may detect changes in acceleration better than 1/200 parts.

The magnetometer 720 may be any number of different types of magnetometers 720. In one embodiment, the magnetometer 720 is a MEMS magnetometer (e.g., having three sense axes orthogonal to each other), though other types of magnetometers may be used. The magnetometer 720 may be supported within the housing 704 of the sensor device 702 (e.g., on the PCB 706 of the sensor device 702), such that two of the three sense axes (e.g., the X and Y axes) are in a same plane as the wheel (e.g., the wheel 703), and one of the sense axes (e.g., the Z axis) is orthogonal to the diameter of the wheel.

The background magnetic field of earth is present everywhere on earth at between 0.25 and 0.65 Gauss. This background magnetic field may be sensed by the magnetometer 720 at a high frequency. In one embodiment, the processor 710 samples the magnetometer 720, and thus the background magnetic field of earth, at a rate of, for example, two times a previously measured wheel speed and/or frequency of rotation. In other embodiments, the processor 710 samples the magnetometer 720, and thus the background magnetic field of earth, at a greater or lesser rate. For example, the processor 710 may sample the magnetometer 720, and thus the background magnetic field of earth, at a lesser rate when the wheel speed is lower (e.g., less than 4 m/s). The lesser sampling rate may increase battery life of the battery 708.

As the wheel (e.g., the wheel 703) rotates, a polarity of a sensed value of the background magnetic field of earth, as sensed by the magnetometer 720, changes between positive and negative (e.g., polarity flips). For example, the sensed value is positive for one half of a rotation and negative for the other half of the rotation. The processor 710 may identify and count the polarity flips over time, and calculate wheel speed of the wheel (e.g., the wheel 703) based on the identified polarity flips over time (e.g., a time period between two polarity flips adjacent in time) and the diameter of the tire attached to the wheel.

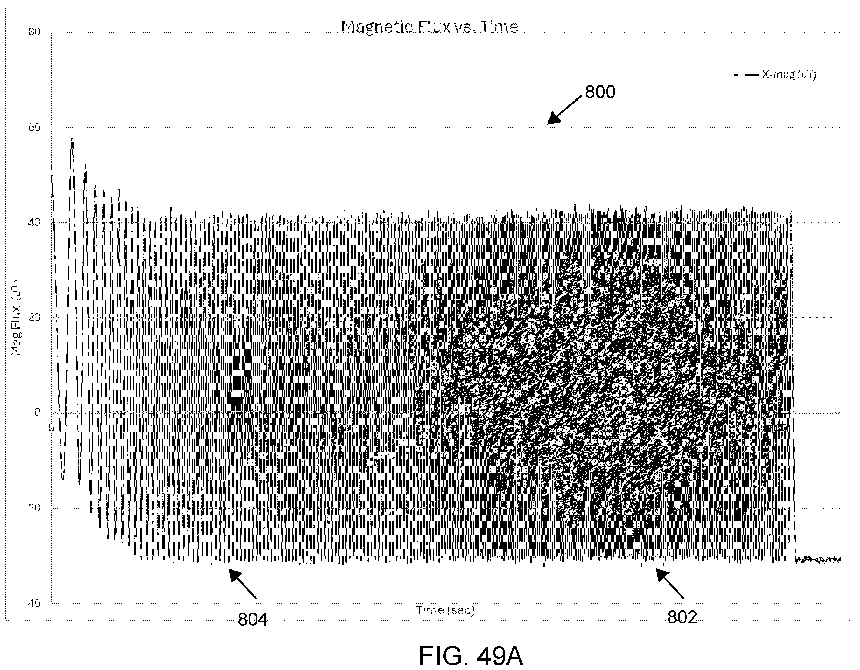

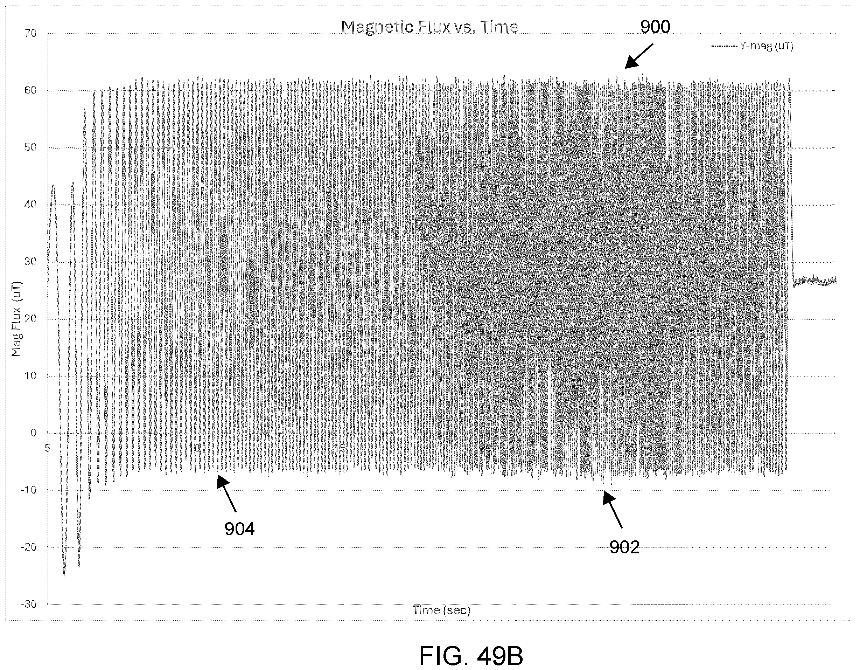

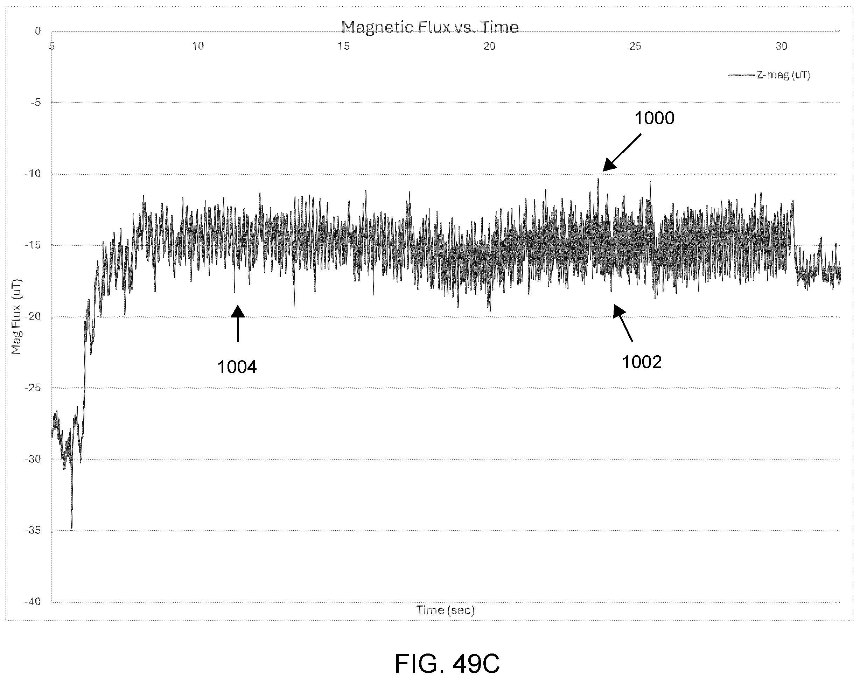

FIGS. 49A-49C are plots of magnetometer output for each of the three sense axes over time. Plot 800 illustrates the x-axis, plot 900 illustrates the y-axis, and plot 1000 illustrates the z-axis. The plots illustrate polarity flips as the wheel (e.g., the wheel 703) rotates. The polarity flips get closer together as the wheel speed of the wheel (e.g., the wheel 703) increases. Portion 802, 902, and 1002 of the plots show an area of increased wheel speed. The polarity flips get further apart as the wheel speed of the wheel decreases. Portion 804, 904, and 1004 of the plots show where the wheel speed was slower. In an alternate embodiment, wheel speed may be determined by calculating and using the instantaneous rate of rotation and magnetometer measurements. This alternate embodiment may allow for quicker calculation of a speed value and allow the sensor to go to sleep faster, conserving battery life.

The memory of the sensor device, for example, may store a number of most recently calculated wheel speeds of the wheel. For example, the memory may store 2, 5, 10, 20, 50, or 100 of the most recently calculated wheel speeds of the wheel. An oldest wheel speed may be over-written with each new calculation.

In one embodiment, the sampling rate is based on the most recently calculated wheel speed of the wheel. For example, sampling rate may be two times faster than the most recently calculated wheel speed of the wheel (e.g., in rotations per second). In other embodiments, the sampling rate may be three times, four times, or another multiplier faster than the most recently calculated wheel speed of the wheel.

In one embodiment, the processor 710 may use data generated by the magnetometer 720 to wake up the sensor device 702. For example, instead of data from the accelerometer 718 representing motion of the wheel, and thus the bicycle to which the wheel is attached, the processor 710 may identify a change in magnetic field strength in response to rotation of the wheel, and the processor 710 may wake up other components of the sensor device 702 based on the identified change in magnetic field strength.

The RFID reader 722 may take any number of forms. For example, the RFID reader 722 may be a near field communication (NFC) module. The RFID reader 722 may be in communication with an RFID chip associated with (e.g., embedded within) a rim to which the sensor device 702 is attached (e.g., the rim 724 discussed below). For example, the RFID reader 722 may be configured to receive identification information from the RFID chip associated with the rim to which the sensor device 702 is attached. The processor 710, for example, may be configured to identify the rim based on the identification information received from the RFID chip. Identification of the rim may be provided in other ways.

The resistance measurement interface 723 may take any number of forms. For example, the resistance measurement interface 723 may be an interface of a physical and electrical connection of a sensing element (e.g., an insulated electrically conductive wire) to a conductor on the PCB 706. The sensing element may be embedded within a rim to which the sensor device 702 is attached (e.g., the rim 724 discussed below), and may be configured to relay a change in electrical characteristics (for example, resistance, electrical continuity, and/or voltage) within the rim to the processor 710, for example, via the PCB 706. The processor 710, for example, may be in communication with the resistance measurement interface 723 via, for example, the PCB 706 (e.g., tracks of the PCB 706), and may identify a change in resistance within the rim via the sensing element.

In one embodiment, the resistance measurement interface 723 is the radio 714, and the sensing element includes an antenna, via which the sensing element may wirelessly transmit a signal to the processor 710 via the radio 714 and the PCB 706 of the sensor device 702. Such a transmitted signal may include data for a current applied to the sensing device, a measured voltage drop across the sensing device, or a combination thereof.

The wheel 703 includes a rim 724 (e.g., the rim 122 or the rim 500). The rim 724 may include one or more components to which the sensor device 702 and/or one or more components of the sensor device 702 are physically, electrically, and/or fluidly connected. For example, the rim 724 may include an integrated pocket 726 (e.g., a receptacle) within which the sensor device 702 is disposed and attached to the rim 724 (e.g., as described above with respect to the first embodiment of the sensor device 200, the second embodiment of the sensor device 300, the third embodiment of the sensor device 400, the fourth embodiment of the sensor device 516, or a different attachment). The rim 724 may also include a pressure sensing port 728 that fluidly connects the sensor device 702 (e.g., the pressure sensor 716 of the sensor device 702) to a portion of the rim 724 (e.g., a tire cavity defined by a radially outer tire engaging portion). The rim 724 may also include an RFID transmitter 730 (e.g., an NFC chip) and a health monitoring element 732 (e.g., a composite health monitoring element). The rim 724 and/or the wheel 703 may include more, fewer, and/or different components.

The pressure sensing port 728 may include an opening through the rim 724 and a connector (e.g., a ported bolt such as the ported bolt 260, the ported bolt and a flexible tube, or an air valve such as the air valve 580) extending through the opening through the rim 724. The ported bolt or the air valve, for example, is configured to fluidly connect the sensor device 702 attached to the rim 724, to the tire cavity, for example. The pressure sensor 716 of the sensor device 702, for example, is configured to measure a pressure within the tire cavity, for example, via this fluid connection (e.g., including the pressure sensing port 728).

The RFID transmitter 730 may be an RFID tag integral with, for example, the rim 724. For example, the rim 724 may be made of a composite laminate, and the RFID tag 730 may be disposed within (e.g., integral with) the composite laminate of a rim to which the sensor device 702 is attached (e.g., the rim 724). In one embodiment, the RFID transmitter 730 is an NFC tag. In one embodiment, the wheel assembly 700 includes more than one RFID transmitter 730 embedded within, for example, the rim 724.

The RFID tag 730 may be programmed with unique identifying information that may be associated with the rim 724 (e.g., the rim 122 or the rim 500) in which the RFID tag 730 is embedded. When the sensor device 702 is mounted or attached to the rim 724, for example, a link (e.g., a physical or wireless link) is established between the RFID reader 722 of the sensor device 702 and the RFID tag 730 of the rim 724. The processor 710 of the sensor device 702 may automatically link relevant information (e.g., measured tire pressure, rim composite health) from the sensor device 702 to the rim 724. The processor 710 of the sensor device 702 may make this linked information accessible to a user (e.g., the rider or a mechanic) at a computing device (e.g., a smart phone) via the radio 714. In one embodiment, product registration may be facilitated when the user connects the sensor device to the computing device (e.g., the smart phone or a computer). In one embodiment, the user may choose to receive service and product reminders based on usage information from the sensor device 702 associated with the rim 122 or the rim 500, for example.

Currently, users (e.g., riders) may keep track of usage of bicycle components manually. The automatic connection of the present embodiments associating the rim 724, for example, with the sensor device 702, which may already be associated with the user, allows tracking of relevant information about the rim 724 and provides the ability to make suggestions to the user based on collected data from the sensor device 702 connected to the rim 724. Examples of suggestions to the user may include, for example, when a minimum threshold tire pressure has been reached or when failure of the composite laminate of the rim 724 has been identified. Automatic association and data tracking of the present embodiments may be used for other components on the bicycle such as, for example, a derailleur or a motor of an ebike.

The health monitoring element 732 (e.g., the sensing element) may take any number of forms. For example, the health monitoring element 732 may be an insulated conductive wire or a wire mesh. The health monitoring element 732 may be embedded within the composite laminate of the rim 724, for example, at any number of different locations within the rim 724. For example, the health monitoring element 732 may be disposed within the composite laminate forming part of a radially outer tire engaging portion of the rim 724 (e.g., within the first tire retaining portion 202 or the second tire retaining portion 204 of the radially outer tire engaging portion 130 of the rim 122, or the first tire retaining portion 526 or the second tire retaining portion 528 of the radially outer tire engaging portion 502 of the rim 500) or forming part of a radially inner portion of the rim 724 (e.g., the radially inner portion 136 of the rim 122 or the radially inner portion 510 of the rim 500).

In one embodiment, the rim 724 includes a plurality of health monitoring elements 732 (e.g., a plurality of sensing elements). The plurality of health monitoring elements 732 may be disposed in any number of different positions within the rim 724. For example, the plurality of health monitoring elements 732 may include health monitoring elements 732 at different circumferential positions around the rim 724. Alternatively or additionally, the plurality of health monitoring elements 732 may include health monitoring elements 732 at different positions within a cross-section of the rim 724. For example, the plurality of health monitoring elements 732 may include one or more health monitoring elements 732 within the radially outer tire engaging portion of the rim 724 and one or more health monitoring elements 732 within the radially inner portion of the rim 724.

The health monitoring element 732 may be in communication with the processor 710 of the sensor device 702, for example, via the resistance measurement interface 723 and the PCB 706 of the sensor device 702. The processor 710 may identify (e.g., measure) a current and/or a voltage from a signal received at the resistance measurement interface 723, and determine a resistance and/or a change in resistance or electrical continuity based on the identified current and/or voltage. The processor 710 may compare the determined change in resistance or electrical continuity to a predetermined threshold change, and identify and report structural damage to the health monitoring element 732, and thus the rim 724, when, based on the comparison, the determined change in resistance is greater than the predetermined threshold change.

In one embodiment, in which the health monitoring element 732 is configured as the wire mesh, a resistance of the wire mesh at the time of production may be known (e.g., a predetermined resistance). The processor may compare (e.g., determine a difference between) the known resistance and the determined resistance. Based on the comparison, when the determined difference between the known resistance and the determined resistance is greater than a predetermined threshold difference, the processor 710 may identify and report structural damage to the health monitoring element 732, and thus the rim 724. In other words, the processor 710 may identify and report any significant deviation from the known production resistance as structural damage to the rim 724. In an embodiment in which the rim 724 includes a plurality of health monitoring elements 732, the processor 710 may monitor the resistance or electrical continuity at each health monitoring element 732 of the plurality of health monitoring elements 732 in parallel.

In one embodiment, the health monitoring element 732 is in communication with another processor via an antenna of the health monitoring element 732. The other processor is off of the rim 724, for example, and is configured to identify and report structural damage to the rim 724 based on changes to the determined resistance of the health monitoring element 732.

In accordance with various embodiments of the present disclosure, methods described herein may be implemented with software programs executable by a computer system (e.g., of a bicycle controller or computer or a rear derailleur), and/or other components on the bicycle and/or worn by the user. Further, in an exemplary, non-limiting embodiment, implementations may include distributed processing, component/object distributed processing, and parallel processing. Alternatively, virtual computer system processing may be constructed to implement one or more of the methods or functionalities as described herein.

A computer program (also known as a program, software, software application, script, or code) may be written in any form of programming language, including compiled or interpreted languages, and the computer program may be deployed in any form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and the apparatus may also be implemented as, special purpose logic circuitry (e.g., an FPGA or an ASIC).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or is operatively coupled to receive data from or transfer data to, or both, one or more mass storage devices for storing data (e.g., magnetic, magneto optical disks, or optical disks). However, a computer need not have such devices. Moreover, a computer may be embedded in another device such as, for example, a mobile telephone, a personal digital assistant ("PDA"), a mobile audio player, a Global Positioning System ("GPS") receiver, a control unit, a rear derailleur, or a front gear changer, to name just a few. Computer readable media suitable for storing computer program instructions and data include all forms of non-volatile memory, media, and memory devices, including by way of example: semiconductor memory devices (e.g., EPROM, EEPROM, and flash memory devices); magnetic disks (e.g., internal hard disks or removable disks); magneto optical disks; and CD-ROM and DVD-ROM disks. The processor and the memory may be supplemented by, or incorporated in, special purpose logic circuitry.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A bicycle wheel comprising:
a rim comprising:
a radially inner portion disposed along an inner circumference of the rim,
a first sidewall,
a second sidewall spaced apart from the first sidewall, the first sidewall and the second sidewall extending radially outward from the radially inner portion,
a radially outer tire engaging portion disposed along an outer circumference of the rim, the radially outer tire engaging portion including a first tire retaining portion extending away from the first sidewall, and a second tire retaining portion extending away from the second sidewall, such that the first tire retaining portion and the second tire retaining portion are spaced apart from each other, and
a receptacle within the radially inner portion;
a sensor device comprising:
a housing disposed within the receptacle such that a portion of the housing forms part of the radially inner portion of the rim, and
a pressure sensor supported by the housing;
an air valve extending through and supported by the housing of the sensor device,
wherein the pressure sensor is fluidly connected to a volume between the first tire retaining portion and the second tire retaining portion of the radially outer tire engaging portion such that the pressure sensor is configured to determine a pressure of a fluid within the volume;
a hub attachable to a bicycle frame; and
a plurality of spokes arranged between the hub and the rim.

2. The bicycle wheel of claim 1, wherein the sensor device is attached to the radially outer tire engaging portion through the air valve.

3. The bicycle wheel of claim 1 or 2, wherein the sensor further comprises a power source supported within the housing, the power source accessible at the inner circumference of the rim.

4. The bicycle wheel of one of the preceding claims, wherein the housing comprises a hollow body and a cover attached to the hollow body, the cover forming the portion of the inner circumference of the rim, the cover including an opening for receiving the air valve.

5. The bicycle wheel of claim 4, wherein the housing comprises a latch that is rotatably attached to the hollow body, the latch being rotatable between a first position and a second position, the latch being locked to the hollow body in the second positions,
wherein as an optional feature the sensor device further comprises a power source supported within the housing, the power source removable from the housing when the latch is in the first position.

6. The bicycle wheel of claim 4 or 5, wherein the cover of the housing includes a first opening and the latch of the housing includes a second opening, the air valve extends through the first and second openings,
wherein as an optional feature an end of the air valve extending through the second opening is attached to the tire engaging portion of the rim.

7. The bicycle wheel of one of claims 4 to 6, wherein the sensor device further comprises an indication device supported at or adjacent to the cover of the housing and a processor supported on the housing, the processor being electrically connected to the pressure sensor, the battery and the indication device,
wherein the processor is configured to:
compare the determined pressure within the tire cavity to a predetermined pressure range;
when, based on the comparison of the determined pressure to the predetermined pressure range, the determined pressure is outside of the predetermined pressure range, instruct the indication device to produce light a first color; and
when, based on the comparison of the determined pressure to the predetermined pressure range, the determined pressure is within the predetermined pressure range, instruct the indication device to produce light of a second color, the second color being different than the first color.

8. The bicycle wheel of one of the preceding claims, wherein the receptacle within the radially inner portion of the rim is at a first circumferential position along the inner circumference of the rim, and wherein the bicycle wheel further comprises a counterbalance at a second circumferential position along the inner circumference of the rim, the second circumferential position being different than the first circumferential position,
wherein as an optional feature the radially inner portion of the rim is made of composite laminate, the counterbalance formed by a first portion of the composite laminate, the receptacle being within a second portion of the composite laminate, the first portion of the composite laminate being thicker than the second portion of the composite laminate.

9. The bicycle of one of the preceding claims, wherein a portion of the radially inner portion of the rim around the receptacle is thicker than other portions of the radially inner portion of the rim.

10. The bicycle of one of the preceding claims, wherein the receptacle is formed by an opening through the radially inner portion of the rim and a first flange extends around the opening, the cover of the housing having a second flange sized and shape to interface with the first flange of the receptacle such that the cover of the housing is flush with the radially inner portion of the rim and the sensor device is secured to the rim at the receptacle.

11. A sensor device configured to determine a tire pressure of a wheel of a bicycle, the sensor device comprising:
a housing that is disposable within a receptacle within a radially inner portion of a rim of the wheel of the bicycle such that a portion of the housing forms part of the radially inner portion of the rim, the housing including first and second openings through which an air valve of the wheel is extendible;
a pressure sensor supported by the housing and configured to be disposed within a cavity formed between the radially inner portion of the rim and a radially outer portion of the rim; and
a battery housing configured to support a battery, the battery housing being disposable within the housing such that the battery is configured to power the pressure sensor when the battery is supported within the battery housing and the battery housing is disposed within the housing.

12. The sensor device of claim 11, wherein the housing comprises:
a hollow body;
a cover attached to the hollow body, the cover being configured to form a portion of an inner circumference of the rim; and
a latch rotatably attached to the hollow body, the latch being rotatable between an open position and a closed position, the latch locked relative to the hollow body in the closed position,
wherein as an optional feature the first opening is in the cover and the second opening is in the latch, the air valve received through the first opening and the second opening such that air valve attaches to the housing to the rim.

13. The sensor device of one of claims 11 or 12, wherein the battery is removable from the housing when the latch is in the open position.

14. The sensor device of of one of claims 11 to 13, further comprises a light emitting diode device supported by the cover and configured to be power by the battery, and wherein the light emitting diode device is configured to:
produce light of a first color when a determined pressure is within a predetermined pressure range; and
produce light of a second color when the determined pressure is outside the predetermined pressure range, the first color being different than the second color.

15. A rim for a bicycle wheel, the rim comprising:
a radially inner portion disposed along an inner circumference of the rim, the radially inner portion being made of a composite laminate;
a first sidewall;
a second sidewall spaced apart from the first sidewall, wherein the first sidewall and the second sidewall extend radially outward from the radially inner portion;
a radially outer tire engaging portion disposed along an outer circumference of the rim, the radially outer tire engaging portion extending from the first sidewall and the second sidewall, respectively;
a receptacle within the radially inner portion at a first circumferential position along the inner circumference of the rim, the receptacle being configured to receive a sensor device configured to house part of an air valve of the bicycle wheel; and
a counterbalance at a second circumferential position along the inner circumference of the rim, the second circumferential position being different than the first circumferential position, the counterbalance formed by a first portion of the composite laminate,
wherein the receptacle is within a second portion of the composite laminate, and the first portion of the composite laminate is thicker than the second portion of the composite laminate,
wherein as an optional feature wherein the second circumferential position is opposite the first circumferential position.
